# EUROPEAN PATENT SPECIFICATION

(11) **EP 3 051 388 B1**
(45) Date of publication and mention of the grant of the patent: **21.08.2019**
(21) Application number: 15199256.7
(22) Date of filing: 10.12.2015
(51) Int. Cl.: G06F 3/023, G06F 17/24

(54) **MOBILE TERMINAL AND METHOD OF CONTROLLING THE SAME**
MOBILES ENDGERÄT UND VERFAHREN ZUR STEUERUNG DAVON
TERMINAL MOBILE ET SON PROCÉDÉ DE COMMANDE

(30) Priority: 29.01.2015 KR 20150014537
(43) Date of publication of application: 03.08.2016
(73) Proprietor: LG Electronics Inc., Seoul 07336 (KR)
(72) Inventor: KIM, Hanbit, 06772 Seoul (KR); PARK, Miok, 06772 Seoul (KR); LIM, Chaeju, 06772 Seoul (KR); KIM, Daejoon, 06772 Seoul (KR); JUNG, Seungkwan, 06772 Seoul (KR)
(74) Representative: Ter Meer Steinmeister & Partner

(56) References cited:
- US-A- 5 666 502
- US-A1- 2013 091 411
- US-A1- 2014 372 867
- US-A1- 2015 012 862
- US-B1- 8 751 535

## Description

### BACKGROUND

The present disclosure relates to a mobile terminal used by further considering a user's convenience and a method of controlling the same.

Depending on whether terminals are movable, the terminals are divided into mobile/portable terminals and stationary terminals. Again, the mobile terminals may be divided into handheld terminals and vehicle mounted terminals depending on whether users can carry the mobile terminals personally.

Functions of the mobile terminals become diversified. For example, the functions include data and voice communication, picture capturing and video recording through a camera, voice recording, sound source playback through a speaker system, and image or video output to a display unit. Some terminals may have an additional electronic game play function or a multimedia player function. Especially, recent mobile terminals may receive multicast signals providing visual contents such as broadcasts and video or television programs.

As functions of a terminal are diversified, such a terminal may be implemented in a form of a multimedia player having multi-functions, for example, photo or video capturing, playback of sound source or video files, game plays, and broadcast reception.

US 5,666,502 describes a graphical user interface (GUI) using historical lists with field classes. The historical list is displayed to the user so that the user can input data by selecting an item from the historical list being displayed. The historical list contains the most recently and/or frequently used data values for the data field that the user is inputting data. By using the historical lists a user is able to enter data with a greater ease of use than previously obtainable. The historical can be shared between different applications that execute on the computer system concurrently or at different times. Therefore, a history table is produced from the history list that includes strings or pointer, the last time of using the string and a number of uses.

US 2014/0372867 A1 describes a system that includes a user device for receiving, from a remote server, itinerary-specific data relating to a particular travel itinerary and information for accessing a travel website for performing a travel-related action. The user device presents the itinerary-specific data in a contextual user interface element on the user device concurrently with a web page of the travel website for performing the travel-related action. The itinerary-specific data are presented as selectable data elements within the contextual user interface element. The user device receives a user selection of a selectable data element and to execute instructions for copying the itinerary-specific data from the contextual user interface element to a form field of the travel website in response to the user selection. The user selection is based on dragging and dropping.

US 2015/0012862 A1 describes an information processing apparatus including an operation recognition unit for recognizing a drag start area in a first application and a droppable area in a second application. A paste content processing unit analyzes attributes of the drag start area and the droppable area and determines a paste content in response to a comparison result between the respective attributes to paste the determined content in the droppable area, when the operation recognition unit recognizes a drop operation in the droppable area.

US 2013/0091411 A1 describes a document having multiple data entry areas and a list of suggestions for a designated data entry area. The list analyzes a first set of data previously entered into data entry areas of the document other than the designated data entry area and analyzes a second set of data including data outside the first set of data. The list of suggestions is presented without manual entry of data in the designated data entry area, and user input selecting one of the suggestions is received. Data represented by the selected suggestion can be entered in the data entry area in response to receiving the user input selecting the selected suggestion.

US 8 751 535 B1 discloses a method for securely storing and sharing personal information. The method includes receiving, at a mobile device, user profile information. The method includes storing the received user profile information in a database on the mobile device, where access to the user profile information is controlled by an operating system on the mobile device. The operating system selectively makes the user profile information available to a plurality of applications. The method further includes receiving a request for user information, and in response to the request, accessing the database, selecting at least a subset of stored user profile information in the database to be used to populate one or more fields, and populating the one or more fields with a selected subset of the stored user profile information.

In order to support and increase functions of such a terminal, it is considered to improve structural part and/or software part of a terminal.

Moreover, when trying to input desired data to a field (or data input field) displayed in an execution screen of each app or application execute through such a terminal, a user executes an app including data directly and inconveniently inputs data to a field while seeing necessary data in the executed app screen.

### SUMMARY

Embodiments provide a mobile terminal for allowing a user to input data to be inputted to a field automatically with simple manipulation and a method of controlling the same.

The above identified objectives are solved by the features of the independent claim. Advantageous embodiments are described in the dependent claims. Preferably, a mobile terminal includes: a touch screen (151); and a controller (180) in communication with the touch screen (151). The controller (180) configured to: execute an application and control the touch screen (151) to display an application screen including at least one field (1); process an input corresponding to a selection of a field from the at least one field (1) and display data (2) relating to the selected field; and process an input corresponding to a selection of a data item from the displayed data (2) and insert the selected data item into the selected field.

The mobile terminal further includes: a memory (170), wherein the controller (180) is further configured to store data in the memory and extract stored data from the memory.

The selected field has a format and the controller (180) is further configured to extract data stored in memory by searching for data having the same format as the format of the selected field.

The controller (180) is further configured to filter the data having the same format as the format of the selected field based on a predetermined condition.

The predetermined condition is the selected field associated with a particular receiver account, a particular sender account, the particular application being executed by the controller (180), and the user or a mobile terminal usage (402A, 402B) of the application, and a name (403A, 403B) of the application, the touch screen (151) is configured to sense a touch input selecting identification information, and the controller (180) is further configured to control the touch screen (151) to display the data corresponding to the selected identification information.

The controller (180) is further configured to control the touch screen (151) to align and display the data or the identification information based on a predetermined condition.

The controller (180) is further configured to process an input corresponding to a selection of identification information from the displayed identification information and to insert the selected identification information into the selected field.

The details of one or more embodiments are set forth in the accompanying drawings and the description below. Other features will be apparent from the description and drawings, and from the claims.

### BRIEF DESCRIPTION OF THE DRAWINGS

FIG. 1 is a block diagram illustrating a mobile terminal according to an embodiment of the present invention.
FIGs. 2 to 5 are screens of fields.
FIGs. 6 to 9 are screens of data.
FIG. 10 is a flowchart illustrating a method of inserting data into a field according to an embodiment of the present invention.
FIG. 11 is a screen of inserting data into a field.
FIG. 12 is a flowchart illustrating a method of selecting a field.
FIG. 13 is a screen illustrating a field selection operation.
FIG. 14 is a screen of displaying a selected field.
FIG. 15 is a screen of a field selection operation.
FIG. 16 is a screen of a field selection operation.
FIG. 17 is a screen of a field selection operation.
FIG. 18 is a screen of a field selection operation.
FIG. 19 is a screen of a field selection operation.
FIG. 20 is a flowchart illustrating a method of selecting a field depending on a predetermined condition.
FIG. 21 is a flowchart illustrating a method of selecting a field depending on a predetermined condition.
FIGs. 22 to 25 are views illustrating a method of selecting a field depending on a predetermined condition.
FIG. 26 is a flowchart illustrating a display method according to an embodiment of the present invention.
FIG. 27 is a screen illustrating a data display operation.
FIG. 28 is a flowchart illustrating a data search method.
FIGs. 29 and 30 are screens illustrating a data search operation.
FIG. 31 is a view of data relating to a message field as one example of a field.
FIG. 32 is a screen illustrating data relating to an address field as another example of a field.
FIG. 33 is a screen illustrating data relating to a URL field, an ID field, and a password field as another example of a field.
FIG. 34 is a screen illustrating data relating to a music title field.
FIG. 35 is a screen illustrating data relating to an account number field.
FIG. 36 is a screen illustrating data relating to an authentication number field.
FIG. 37 is a screen illustrating data relating to a card number field.
FIG. 38 is a screen illustrating data relating to a phone number field and an e-mail field.
FIG. 39 is a screen illustrating data relating to a search window field.
FIG. 40 is a flowchart illustrating a search data filtering method.
FIG. 41 is a flowchart illustrating a method of filtering data depending on a field app.
FIGs. 42 to 44 are screens illustrating an operation of filtering search data depending on a field app.
FIG. 45 is a flowchart illustrating a method of filtering search data depending on a receiver account of a message field .
FIGs. 46 to 49 are screens illustrating an operation of filtering search data depending on a receiver account of a message field.
FIG. 50 is a flowchart illustrating a method of filtering data depending on a sender account of data.
FIG. 51 is a screen illustrating a method of filtering data depending on a sender account of data.
FIG. 52 is a flowchart illustrating a method of filtering data depending on a data search location.
FIG. 53 is a flowchart illustrating a method of filtering data depending on an execution state of an app where data is found according to an embodiment of the present invention.
FIGs. 54 and 55 are screens illustrating an operation of filtering data depending on an execution state of an app where data is found according to an embodiment of the present invention.
FIG. 56 is a flowchart illustrating a method of filtering data depending on the type of an app where data is found.
FIG. 57 is a screen illustrating an operation of filtering data depending on the type of an app where data is found.
FIG. 58 is a flowchart illustrating a method of filtering data depending on a logged-in user account.
FIGs. 59 and 60 are screens illustrating an operation of filtering data depending on a logged-in user account.
FIG. 61 is a flowchart illustrating a method of filtering data depending on a state of a mobile terminal.
FIGs. 62 to 64 are screens illustrating an operation of filtering data depending on a state of a mobile terminal.
FIG. 65 is a flowchart illustrating a display method.
FIGs. 66 to 69 are screens illustrating a data display operation.
FIG. 70 is a flowchart illustrating a method of arranging and displaying data depending on a predetermined condition.
FIGs. 71a and 71b are screens illustrating an operation of aligning and displaying data depending on a predetermined condition.
FIGs. 72 and 73 are flowcharts illustrating a data selection method.
FIGs. 74 to 81 are screens illustrating a data selection operation.
FIG. 82 is a flowchart illustrating a method of automatically selecting data depending on a predetermined condition.
FIG. 83 is a flowchart illustrating a method of automatically selecting data depending on whether data is selected already .
FIG. 84 is a screen illustrating an operation for automatically selecting data depending on whether data is selected previously.
FIG. 85 is a flowchart illustrating a method of automatically selecting data depending on a sender account of data.
FIG. 86 is a screen illustrating an operation of automatically selecting data depending on a sender account of data.
FIG. 87 is a flowchart illustrating a method of automatically selecting data depending on a data app.
FIG. 88 is a screen illustrating an operation of automatically selecting data depending on a data app.
FIG. 89 is a flowchart illustrating a method of automatically selecting data depending on a user account.
FIGs. 90 and 91 are screens illustrating an operation of automatically selecting data depending on a user account.
FIG. 92 is a flowchart illustrating a method of automatically selecting data depending on the number of times that data is selected previously.
FIG. 93 is a screen illustrating an operation for automatically selecting data depending on the number of times that that is selected previously.
FIGs. 94 and 95 are screens illustrating various data selection operations.
FIG. 96 is a flowchart illustrating a method of inserting selected data into a field .
FIG. 97 is a screen illustrating an operation of inserting selected data into a field.
FIG. 98 is a flowchart illustrating a method of inserting data into a field.
FIG. 99 is a screen illustrating an operation of inserting data into a field.
FIGs. 100 and 101 are screens illustrating a data search operation.
FIG. 102 is a flowchart illustrating a method of automatically selecting data depending on a predetermined condition.
FIG. 103 is a screen illustrating an operation of automatically selecting data depending on a user account.
FIG. 104 is a flowchart illustrating a method of searching for a field relating to data and displaying it.
FIGs. 105 to 115 are screens illustrating an operation for searching for a field relating to data.
FIG. 116 is a flowchart illustrating a method of filtering a field depending on the type of a data app.
FIGs. 117 and 118 are screens illustrating an operation of filtering a field depending on the type of a data app.
FIG. 119 is a flowchart illustrating a method of filtering a field depending on a sender account of data.
FIGs. 120 and 121 are screens illustrating an operation of filtering a field depending on a sender account of data.
FIG. 122 is a flowchart illustrating a method of filtering a field depending on a receiver account of a field.
FIG. 123 is a screen illustrating an operation of filtering a field depending on a receiver account of a field.
FIGs. 124 and 125 are screens illustrating an operation of filtering a field depending on an execution state of a field app.
FIG. 126 is a flowchart illustrating a method of filtering a field depending on a user account.
FIGs. 127 and 128 are screens illustrating an operation of filtering a field depending on a user account.
FIG. 129 is a screen of displaying a found field.
FIG. 130 is a flowchart illustrating a method of aligning and displaying fields.
FIG. 131 is a screen of displaying a found field.
FIGs. 132 and 133 are screens illustrating an operation of selecting a field and inserting it into data.

### DETAILED DESCRIPTION OF THE EMBODIMENTS

Hereinafter, embodiments of the present invention are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and , do not have distinctive meanings or roles by themselves. In the following description, detailed descriptions of well-known functions or constructions will be omitted since they would obscure the invention in unnecessary detail. Additionally, the accompanying drawings are used to help easily understanding embodiments disclosed herein but the technical idea of the present invention is not limited thereto.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.

The terms of a singular form may include plural forms unless they have a clearly different meaning in the context.

Additionally, in this specification, the meaning of "include," "comprise," "including," or "comprising," specifies a property, a region, a fixed number, a step, a process, an element and/or a component but does not exclude other properties, regions, fixed numbers, steps, processes, elements and/or components.

Mobile terminals described in this specification may include mobile phones, smartphones, laptop computers, terminals for digital broadcast, personal digital assistants (PDAs), portable multimedia players (PMPs), navigation systems, slate PCs, tablet PCs, ultrabooks, and wearable devices (for example, smartwatchs, smart glasses, and head mounted displays (HMDs)).

However, it is apparent to those skilled in the art that configurations according to embodiments of the present invention disclosed in this specification are applicable to stationary terminals such as digital TVs, desktop computers, and digital signage, except for the case applicable to only mobile terminals.

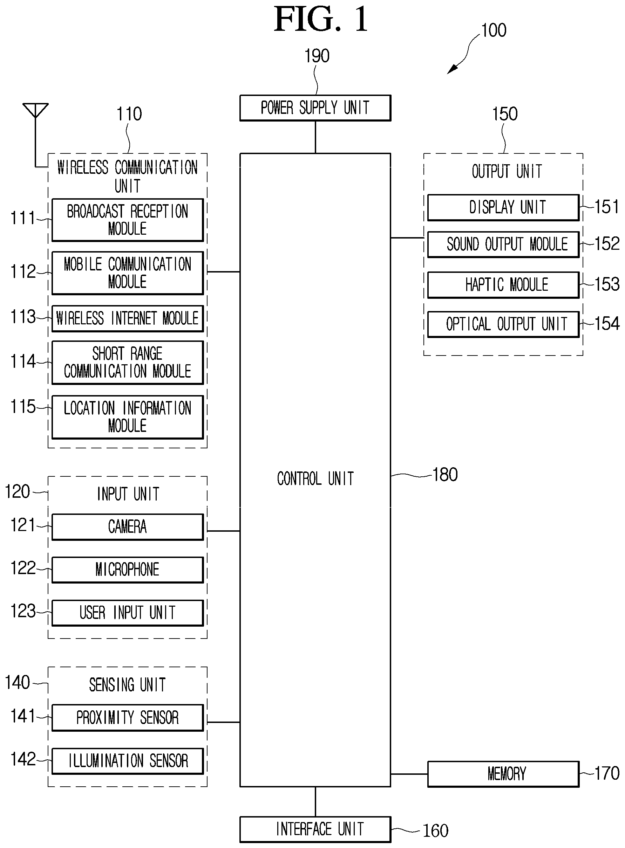

FIG. 1 is a block diagram illustrating a mobile terminal according to an embodiment of the present invention.

The mobile terminal 100 may include a wireless communication unit 110, an input unit 120, a sensing unit 140, an output unit 150, an interface unit 160, a memory 170, a controller 180, and a power supply unit 190. In implementing a mobile terminal, components shown in FIG. 1 are not necessary, so that a mobile terminal described in this specification may include components less or more than the components listed above.

In more detail, the wireless communication unit 110 in the components may include at least one module allowing wireless communication between the mobile terminal 100 and a wireless communication system, between the mobile terminal 100 and another mobile terminal 100, or between the mobile terminal 100 and an external server. Additionally, the wireless communication unit 110 may include at least one module connecting the mobile terminal 100 to at least one network.

The wireless communication unit 110 may include at least one of a broadcast receiving module 111, a mobile communication module 112, a wireless internet module 113, a short-range communication module 114, and a location information module 115.

The input unit 120 may include a camera 121 or an image input unit for image signal input, a microphone 122 or an audio input unit for audio signal input, and a user input unit 123 (for example, a touch key and a mechanical key)) for receiving information from a user. Voice data or image data collected by the input unit 120 are analyzed and processed as a user's control command.

The sensing unit 140 may include at least one sensor for sensing at least one of information in a mobile terminal, environmental information around a mobile terminal, and user information. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (for example, the camera 121), a microphone 122, a battery gauge, an environmental sensor (for example, a barometer, a hygrometer, a thermometer, a radiation sensor, a thermal sensor, and a gas sensor), and a chemical sensor (for example, an electronic noise, a healthcare sensor, and a biometric sensor). Moreover, a mobile terminal disclosed in this specification may combines information sensed by at least two or more sensors among such sensors and may then utilize it.

The output unit 150 is used to generate a visual, auditory, or haptic output and may include at least one of a display unit 151, a sound output unit 152, a haptic module 153, and an optical output unit 154. The display unit 151 may be formed with a mutual layer structure with a touch sensor or formed integrally, so that a touch screen may be implemented. Such a touch screen may serve as the user input unit 123 providing an input interface between the mobile terminal 100 and a user and an output interface between the mobile terminal 100 and a user at the same time.

The interface unit 160 may serve as a path to various kinds of external devices connected to the mobile terminal 100. The interface unit 160 may include at least one of a wired/wireless headset port, an external charger port, a wired/wireless data port, a memory card port, a port connecting a device equipped with an identification module, an audio Input/Output (I/O) port, a video I/O port, and an earphone port. In correspondence to that an external device is connected to the interface unit 160, the mobile terminal 100 may perform an appropriate control relating to the connected external device.

Additionally, the memory 170 may store data supporting various functions of the mobile terminal 100. The memory 170 may store a plurality of application programs (for example, application programs or applications) running on the mobile terminal 100 and also data and commands for operations of the mobile terminal 100. At least part of such an application program may be downloaded from an external server through a wireless communication. Additionally, at least part of such an application program may be included in the mobile terminal 100 from the time of shipment in order to perform a basic function (for example, an incoming call, a transmission function, and a message reception) of the mobile terminal 100. Moreover, an application program may be stored in the memory 170 and installed on the mobile terminal 100, so that it may run to perform an operation (or a function) of the mobile terminal 100 by the controller 180.

The controller 180 may control overall operations of the mobile terminal 100 generally besides an operation relating to the application program. The controller 180 may provide appropriate information or functions to a user or process them by processing signals, data, and information inputted/outputted through the above components or executing application programs stored in the memory 170.

Additionally, in order to execute an application program stored in the memory 170, the controller 180 may control at least part of the components shown in FIG. 1. Furthermore, in order to execute the application program, the controller 180 may combine at least two of the components in the mobile terminal 100 and may then operate it.

The power supply unit 190 may receive external power or internal power under a control of the controller 180 and may then supply power to each component in the mobile terminal 100. The power supply unit 190 includes a battery and the battery may be a built-in battery or a replaceable battery.

At least part of the each component may operate cooperatively in order to implement operations, controls, or control methods of a mobile terminal 100 according to various embodiments of the present invention described below. Additionally, the operations, controls, or control methods of a mobile terminal 100 may be implemented on the mobile terminal 100 by executing at least one application program stored in the memory 170.

Hereinafter, prior to examining various embodiments implemented through the mobile terminal 100, the above-listed components are described in more detail with reference to FIG. 1.

First, in describing the wireless communication unit 110, the broadcast receiving module 111 of the wireless communication unit 110 may receive a broadcast signal and/or broadcast related information from an external broadcast management server through a broadcast channel. The broadcast channel may include a satellite channel and a terrestrial channel. At least two broadcast receiving modules for simultaneous broadcast reception for at least two broadcast channels or broadcast channel switching may be provided to the mobile terminal 100.

The mobile communication module 112 may transmit/receive a wireless signal to/from at least one of a base station, an external terminal, and a server on a mobile communication network established according to the technical standards or communication methods for mobile communication (for example, Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSDPA), High Speed Uplink Packet Access (HSUPA), Long Term Evolution (LTE), and Long Term Evolution-Advanced (LTE-A)).

The wireless signal may include various types of data according to a voice call signal, a video call signal, or text/multimedia message transmission.

The wireless internet module 113 refers to a module for wireless internet access and may be built in or external to the mobile terminal 100. The wireless internet module 113 may be configured to transmit/receive a wireless signal in a communication network according to wireless internet technologies.

The wireless internet technology may include Wireless LAN (WLAN), Wireless-Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and Long Term Evolution-Advanced (LTE-A) and the wireless internet module 113 transmits/receives data according at least one wireless internet technology including internet technology not listed above.

From the viewpoint that wireless internet access by WiBro, HSDPA, HSUPA, GSM, CDMA, WCDMA, LTE, and LTE-A is achieved through a mobile communication network, the wireless internet module 113 performing wireless internet access through the mobile communication network may be understood as one type of the mobile communication module 112.

The short-range communication module 114 may support short-range communication by using at least one of Bluetooth™, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The short-range communication module 114 may support wireless communication between the mobile terminal 100 and a wireless communication system, between the mobile terminal 100 and another mobile terminal 100, or between networks including the mobile terminal 100 and another mobile terminal 100 (or an external server) through wireless area networks. The wireless area networks may be wireless personal area networks.

Here, the other mobile terminal 100 may be a wearable device (for example, a smart watch, a smart glass, and an HMD) that is capable of exchanging data (or interworking) with the mobile terminal 100. The short-range communication module 114 may detect (or recognize) a wearable device around the mobile terminal 100, which is capable of communicating with the mobile terminal 100 Furthermore, if the detected wearable device is a device authenticated to communicate with the mobile terminal 100, the controller 180 may transmit at least part of data processed in the mobile terminal 100 to the wearable device through the short-range communication module 114. Accordingly, a user of the wearable device may use the data processed in the mobile terminal 100 through the wearable device. For example, according thereto, when a call is received by the mobile terminal 100, a user may perform a phone call through the wearable device or when a message is received by the mobile terminal 100, a user may check the received message.

The location information module 115 is a module for obtaining the location (or the current location) of a mobile terminal and its representative examples include a global positioning system (GPS) module or a Wi-Fi module. For example, the mobile terminal may obtain its position by using a signal transmitted from a GPS satellite through the GPS module. As another example, the mobile terminal may obtain its position on the basis of information of a wireless access point (AP) transmitting/receiving a wireless signal to/from the Wi-Fi module, through the Wi-Fi module. If necessary, the position information module 115 may perform a function of another module in the wireless communication unit 110 in order to obtain data on the location of the mobile terminal substitutionally or additionally. The location information module 115 is a module for obtaining the position (or the current position) of the mobile terminal and is not limited to a module directly calculating and obtaining the position of the mobile terminal.

Then, the input unit 120 is used for inputting image information (or signal), audio information (or signal), data, or information inputted from a user and the mobile terminal 100 may include at least one camera 121 in order for inputting image information. The camera 121 processes image frames such as a still image or a video obtained by an image sensor in a video call mode or a capturing mode. The processed image frame may be displayed on the display unit 151 or stored in the memory 170. Moreover, a plurality of cameras 121 equipped in the mobile terminal 100 may be arranged in a matrix structure and through the camera 121 having such a matrix structure, a plurality of image information having various angles or focuses may be inputted to the input terminal 100. Additionally, the plurality of cameras 121 may be arranged in a stereo structure to obtain the left and right images for implementing a three-dimensional image.

The microphone 122 processes external sound signals as electrical voice data. The processed voice data may be utilized variously according to a function (or an application program being executed) being performed in the mobile terminal 100. Moreover, various noise canceling algorithms for removing noise occurring during the reception of external sound signals may be implemented in the microphone 122.

The user input unit 123 is to receive information from a user and when information is inputted through the user input unit 123, the controller may control an operation of the mobile terminal 100 to correspond to the inputted information. The user input unit 123 may include a mechanical input means (or a mechanical key, for example, a button, a dome switch, a jog wheel, and a jog switch at the front, back or side of the mobile terminal 100) and a touch type input means. As one example, the touch type input means may include a virtual key, a soft key, or a visual key displayed on a touch screen through software processing, or a touch key disposed at a portion other than the touch screen. Moreover, the virtual key or the visual key may have various forms and may be displayed on a touch screen and for example, may include graphic, text, icon, video, and a combination thereof.

Moreover, the sensing unit 140 may sense at least one of information in a mobile terminal, environmental information around a mobile terminal, and user information and may then generate a sensing signal corresponding thereto. On the basis of such a sensing signal, the controller 180 may control the drive or control of the mobile terminal 100 or may perform data processing, functions, or operations relating to an application program installed in the mobile terminal 100. Representative sensors among various sensors included in the sensing unit 140 will be described in more detail.

First, the proximity sensor 141 refers to a sensor detecting whether there is an object approaching a predetermined detection surface or whether there is an object around by using the strength of an electromagnetic field or infrared, without mechanical contact. The proximity sensor 141 may disposed in an inner area of a mobile terminal surrounded by the touch screen or around the touch screen.

Examples of the proximity sensor 141 may include a transmission-type photoelectric sensor, a direct reflective-type photoelectric sensor, a mirror reflective-type photoelectric sensor, a high-frequency oscillation-type proximity sensor, a capacitive-type proximity sensors, a magnetic-type proximity sensor, and an infrared proximity sensor. If the touch screen is a capacitive type, the proximity sensor 141 may be configured to detect the proximity of an object by changes in an electric field according to the proximity of the object having conductivity. In this case, the touch screen (or a touch sensor) itself may be classified as a proximity sensor.

Moreover, for convenience of description, an action for recognizing the position of an object on the touch screen as the object is close to the touch screen without contacting the touch screen is called "proximity touch" and an action that the object actually contacts the touch screen is called "contact touch". A position that an object is proximity-touched on the touch screen is a position that the object vertically corresponds to the touch screen when the object is proximity-touched. The proximity sensor 141 may detect a proximity touch and a proximity touch pattern (for example, a proximity touch distance, a proximity touch direction, a proximity touch speed, a proximity touch time, a proximity touch position, and a proximity touch movement state). Moreover, the controller 180 processes data (for information) corresponding to a proximity touch operation and a proximity touch pattern, detected through the proximity sensor 141, and furthermore, may output visual information corresponding to the processed data on the touch screen. Furthermore, according to whether a touch for the same point on the touch screen is a proximity touch or a contact touch, the controller 180 may control the mobile terminal 100 to process different operations or data (or information).

The touch sensor detects a touch (or a touch input) applied to the touch screen (or the display unit 151) by using at least one of various touch methods, for example, a resistive film method, a capacitive method, an infrared method, an ultrasonic method, and a magnetic field method.

For example, the touch sensor may be configured to convert a pressure applied to a specific portion of the touch screen or changes in capacitance occurring at a specific portion into electrical input signals. The touch sensor may be configured to detect a position and area that a touch target applying a touch on the touch screen touches the touch sensor, a pressured when touched, and a capacitance when touched. Here, the touch target, as an object applying a touch on the touch sensor, may be a finger, a touch pen, a stylus pen, or a pointer, for example.

In such a manner, when there is a touch input on the touch sensor, signal(s) corresponding thereto are sent to a touch controller. The touch controller processes the signal(s) and then transmits corresponding data to the controller 180. Therefore, the controller 180 may recognize which area of the display unit 151 is touched. Herein, the touch controller may be an additional component separated from the controller 180 or may be the controller 180 itself.

Moreover, the controller 180 may perform different controls or the same control according to types of a touch target touching the touch screen (or a touch key equipped separated from the touch screen). Whether to perform different controls or the same control according to types of a touch target may be determined according to a current operation state of the mobile terminal 100 or an application program in execution.

Moreover, the above-mentioned touch sensor and proximity sensor are provided separately or combined and may thus sense various types of touches, for example, short (or tap) touch), long touch, multi touch, drag touch, flick touch, pinch-in touch, pinch-out touch, swipe touch, and hovering touch for the touch screen.

The ultrasonic sensor may recognize position information of a detection target by using ultrasonic waves. Moreover, the controller 180 may calculate the position of a wave source through information detected by an optical sensor and a plurality of ultrasonic sensors. The position of the wave source may be calculated by using the property that light is much faster than ultrasonic wave, that is, a time that light reaches an optical signal is much shorter than a time that ultrasonic wave reaches an ultrasonic sensor. In more detail, the position of the wave source may be calculated by using a time difference with a time that ultrasonic wave reaches by using light as a reference signal.

Moreover, the camera 121 described as a configuration of the input unit 120 may include at least one of a camera sensor (for example, CCD and CMOS), a photo sensor (or an image sensor), and a laser sensor.

The camera 121 and the laser sensor may be combined to detect a touch of a detection target for a three-dimensional image. The photo sensor may be stacked on a display device and is configured to scan a movement of a detection target close to the touch screen. In more detail, the photo sensor mounts a photo diode and a transistor (TR) in a row/column and scans content disposed on the photo sensor by using an electrical signal changing according to an amount of light applied to the photo diode. That is, the photo sensor may calculate the coordinates of a detection target according to the amount of change in light and through this, may obtain the position information of the detection target.

The display unit 151 may display (output) information processed in the mobile terminal 100. For example, the display unit 151 may display execution screen information of an application program running on the mobile terminal 100 or user interface (UI) and graphic user interface (GUI) information according to such execution screen information.

Additionally, the display unit 151 may be configured as a three-dimensional display unit displaying a three-dimensional image.

A three-dimensional display method, for example, a stereoscopic method (a glasses method), an autostereoscopic (no glasses method), a projection method (a holographic method) may be applied to the three-dimensional display unit
The sound output unit 152 may output audio data received from the wireless communication unit 110 or stored in the memory 170 in a call signal reception or call mode, a recording mode, a voice recognition mode, or a broadcast reception mode. The sound output unit 152 may output a sound signal relating to a function (for example, a call signal reception sound and a message reception sound) performed by the mobile terminal 100. The sound output unit 152 may include a receiver, a speaker, and a buzzer.

The haptic module 153 generates various haptic effects that a user can feel. A representative example of a haptic effect that the haptic module 153 generates is vibration. The intensity and pattern of vibration generated by the haptic module 153 may be controlled by a user's selection or a setting of a controller. For example, the haptic module 153 may synthesize and output different vibrations or output different vibrations sequentially.

The haptic module 153 may generate various haptic effects, for example, effects by a pin arrangement moving vertical to a contact skin surface, injection power or suction power of air through an injection port or a suction port, rubbing a skin surface, electrode contact, stimulus of electrostatic force and effects by the reproduction of cold/warm sense by using a device absorbing or emitting heat.

The haptic module 153 may be implemented to deliver a haptic effect through a direct contact and also allow a user to feel a haptic effect through a muscle sense such as a finger or an arm. The haptic module 153 may be more than two according to a configuration aspect of the mobile terminal 100.

The optical output unit 154 outputs a signal for notifying event occurrence by using light of a light source of the mobile terminal 100. An example of an event occurring in the mobile terminal 100 includes message reception, call signal reception, missed calls, alarm, schedule notification, e-mail reception, and information reception through an application.

A signal outputted from the optical output unit 154 is implemented as a mobile terminal emits single color of multi-color to the front or the back. The signal output may be terminated when a mobile terminal detects user's event confirmation.

The interface unit 160 may serve as a path to all external devices connected to the mobile terminal 100. The interface unit 160 may receive data from an external device, receive power and deliver it to each component in the mobile terminal 100, or transmit data in the mobile terminal 100 to an external device. For example, the interface unit 160 may include a wired/wireless headset port, an external charger port, a wired/wireless data port, a memory card port, a port connecting a device equipped with an identification module, an audio I/O port, a video I/O port, and an earphone port.

Moreover, the identification module, as a chip storing various information for authenticating usage authority of the mobile terminal 100, may include a user identity module (UIM), a subscriber identity module (SIM), and a universal subscriber identity module (USIM). A device equipped with an identification module (hereinafter referred to as an identification device) may be manufactured in a smart card form. Accordingly, the identification device may be connected to the terminal 100 through the interface unit 160.

Additionally, when the mobile terminal 100 is connected to an external cradle, the interface unit 160 may become a path through which power of the cradle is supplied to the mobile terminal 100 or a path through which various command signals inputted from the cradle are delivered to the mobile terminal 100 by a user. The various command signals or the power inputted from the cradle may operate as a signal for recognizing that the mobile terminal 100 is accurately mounted on the cradle.

The memory 170 may store a program for an operation of the controller 180 and may temporarily store input/output data (for example, a phone book, a message, a still image, and a video). The memory 170 may store data on various patterns of vibrations and sounds outputted during a touch input on the touch screen.

The memory 170 may include at least one type of storage medium among flash memory type, hard disk type, Solid State Disk (SSD) type, Silicon Disk Drive (SDD) type, multimedia card micro type, card type memory (for example, SD or XD memory type), random access memory (RAM) type, static random access memory (SRAM) type, read-only memory (ROM) type, electrically erasable programmable read-only memory (EEPROM) type, programmable read-only memory (PROM) type, magnetic memory type, magnetic disk type, and optical disk type. The mobile terminal 100 may operate in relation to a web storage performing a storage function of the memory 170 on internet.

Moreover, as mentioned above, the controller 180 may control operations relating to an application program and overall operations of the mobile terminal 100 in general. For example, if a state of the mobile terminal 100 satisfies set conditions, the controller 180 may execute or release a lock state limiting an output of a control command of a user for applications.

Additionally, the controller 180 may perform a control or processing relating to a voice call, data communication, and a video call may perform pattern recognition processing for recognizing handwriting input or drawing input on the touch screen as a text and an image, respectively. Furthermore, the controller 180 may use at least one or a combination of the above components to perform a control in order to implement various embodiments described below on the mobile terminal 100.

The power supply unit 190 may receive external power or internal power under a control of the controller 180 and may then supply power necessary for an operation of each component. The power supply unit 190 includes a battery. The battery is a rechargeable built-in battery and may be detachably coupled to a terminal body in order for charging.

Additionally, the power supply unit 190 may include a connection port and the connection port may be configured as one example of the interface unit 160 to which an external charger supplying power for charging of the battery is electrically connected.

As another example, the power supply unit 190 may be configured to charge a battery through a wireless method without using the connection port. In this case, the power supply unit 190 may receive power from an external wireless power transmission device through at least one of an inductive coupling method based on a magnetic induction phenomenon, and a magnetic resonance coupling method based on an electromagnetic resonance phenomenon.

Moreover, various embodiments below may be implemented in a computer or device similar thereto readable medium by using software, hardware, or a combination thereof.

Hereinafter, embodiments relating to a control method implemented in such a configured mobile terminal are described with reference to the accompanying drawings. It is apparent to those skilled in the art that the present invention may be specified in a different specific form without departing from the scope and essential features of the present invention.

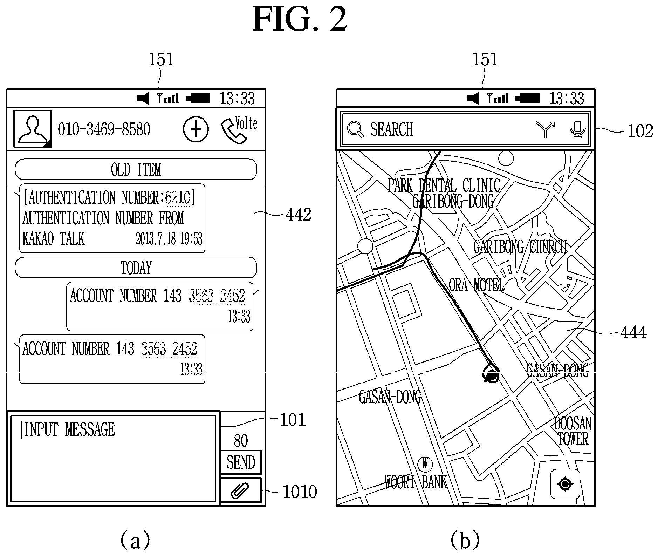

Hereinafter, a method of controlling a mobile terminal will be described with reference to FIGs. 2 to 133.

In this specification, "terminal" may be used interchangeably with "mobile terminal 100" described above.

In this specification, "touch screen" may mean a configuration in which "touch sensor" is integrally formed at "display unit 151" in the mobile terminal 100 described with reference to FIG. 1 or forms a multilayer structure.

In this specification, "field" may mean a blank area where specific format or form data is inputted. A user may select a field through a touch screen and may input a text to the selected field through a text input window but as described below in the present invention, a controller may extract (or search) data from data stored in a memory according to a predetermined condition and insert data (text or content) to the selected field. This will be described in more detail.

In this specification, "data" may mean a text or content data inputted to a specific format or form field. A user may input a text or content into the selected field by using a text input window or a file attachment tap through the touch screen 151 but according to an embodiment of the present invention, a controller may extract data stored in a memory to insert it to the selected field according to a predetermined condition.

In this specification, "account" may mean a specific person or a specific account recognized (or identified) by a mobile terminal.

In this specification, "sound source" may be used interchangeably with "music" and also may be used interchangeably with "sound source title", "sound source field", "music title", and "music field".

In this specification, "field app" or "data app" may mean "app including a field and executed while the included field is displayed on a screen" or "app including data and executed while the included data is displayed on a screen".

Hereinafter, a method of inserting data into a field is described with reference to FIGs. 2 to 97.

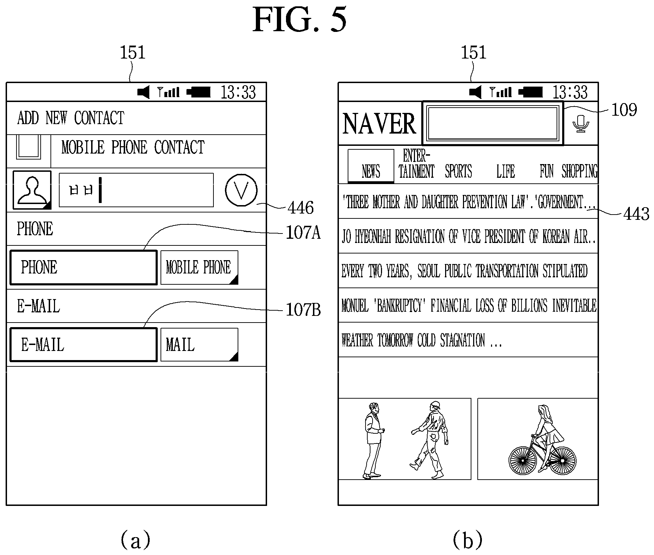

FIGs. 2 and 5 are screens of fields.

Examples of a field according to an embodiment of the present invention may include a message field, an address field, a URL field, a music title field, an account number field, an ID field, a password field, an authentication number field, a phone number field, an e-mail field, a card number field, a search window field, or a file attachment field and the present invention is not limited thereto.

Referring to FIG. 2a, a screen of a state in which an SNS app 442 is executed is displayed through the touch screen 151.

Additionally, as shown in FIG. 2a, a message field 101 and a file attachment field 1010 included in the screen of the SNS app 442 are displayed in addition to an SNS app screen.

Text (e.g., "mobile terminal") may be inputted to the message field 101 and content (for example, a music, image or video file) may be inputted (or attached) to the file attachment field 1010 but the present invention is not limited thereto.

Referring to FIG. 2b, a state in which a map app 444 is executed is displayed. Additionally, an address field 102 included in the screen of the map app 444 is displayed in addition to an address app screen.

A text (e.g., A city, B gu, and C dong) in address format may be inputted to the address field 102 and the present invention is not limited thereto.

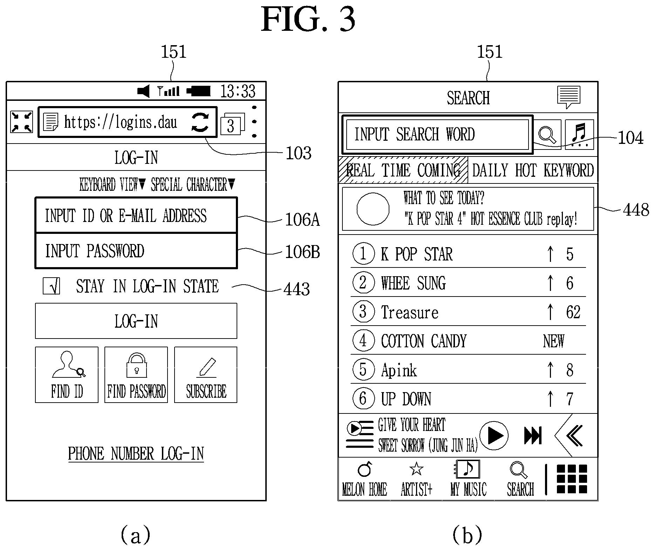

Referring to FIG. 3a, a screen of a state in which an internet app 443 is executed is being displayed and an ID field 106A and a password field 106B included in the screen of the internet app 443 are displayed in addition to the screen of the internet app 443.

An ID format text (or a combination of a text of less than a predetermined first length and a number of less than a predetermined second length, for example "ABCD123") may be inputted to an ID field and a password format text (or a combination of a text of less than a predetermined third length and a number of less than a predetermined fourth length, for example "EDF45") may be inputted to a password field.

Referring to FIG. 3b, a screen of a state in which a music listening app 448 is executed is being displayed and a music title field 104 included in the screen of the music listening app 448 is displayed in addition to the screen of the music listening app 448.

A music title format text (or a combination of words of less than a predetermined number, for example, "LAST CHRISTMAS") may be inputted to a music title field.

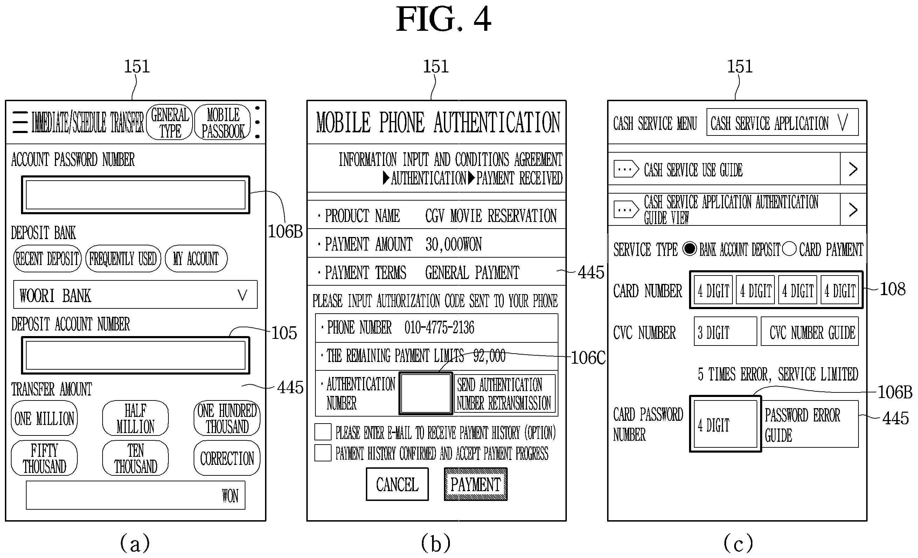

Referring to FIG. 4a, a screen of a state in which a finance app 445 is executed is being displayed and a password field 106B and an account number field 105 included in the screen of the finance app 445 are displayed in addition to the screen of the finance app 445.

An account number format number (e.g., "123-44556-678-90") may be inputted to an account number field and the present invention is not limited thereto.

Referring to FIG. 4b, a screen of a state in which another format finance app 445 different from the finance app shown in FIGs. 3a and 4a is executed is being displayed and an authentication number field 106C included in the screen of the finance app 445 is displayed in addition to the screen of the finance app 445.

An authentication number format number (or a number of less than a predetermined digit number, for example, "1234") may be inputted to an authentication number field and the present invention is not limited thereto.

Referring to FIG. 4c, a screen of a state in which another format finance app 445 is executed is being displayed and a card number field 108 and a password field 106C included in the screen of the finance app 445 are displayed in addition to the screen of the finance app 445.

A card number format number (e.g., "9876-5432-1100-1234") may be inputted to a card number field and the present invention is not limited thereto.

Referring to FIG. 5a, a screen of a state in which a contact app 446 is executed is being displayed and a phone number field 107A and an e-mail field 107B included in the screen of the contact app 446 are displayed in addition to the screen of the contact app 446.

A phone number format number (e.g., "012-3456-7890") may be inputted to a phone number field and an e-mail format text (or a combination of text and number, for example, "abcdef1234@korea.com") may be inputted to the e-mail field 170B but the present invention is not limited thereto.

Referring to FIG. 5b, a screen of a state in which another format internet app 443 is executed is being displayed and a search window field 109 included in the screen of the internet app 443 is displayed in addition to the screen of the internet app 443.

A text (e.g., "mobile terminal") may be inputted to a search window field and the present invention is not limited thereto.

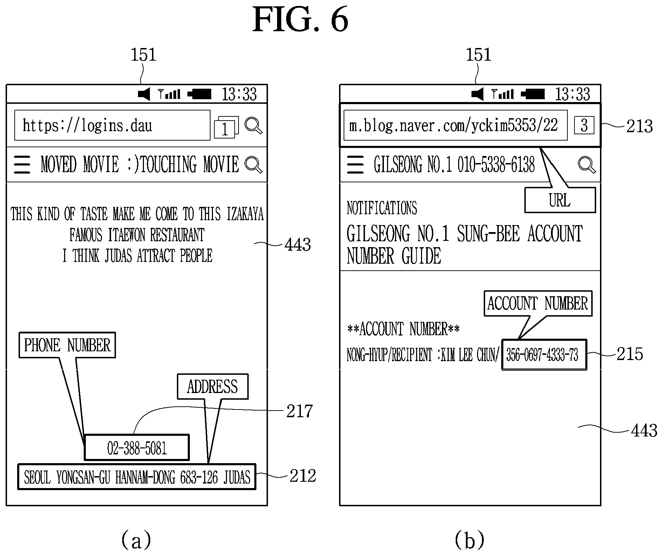

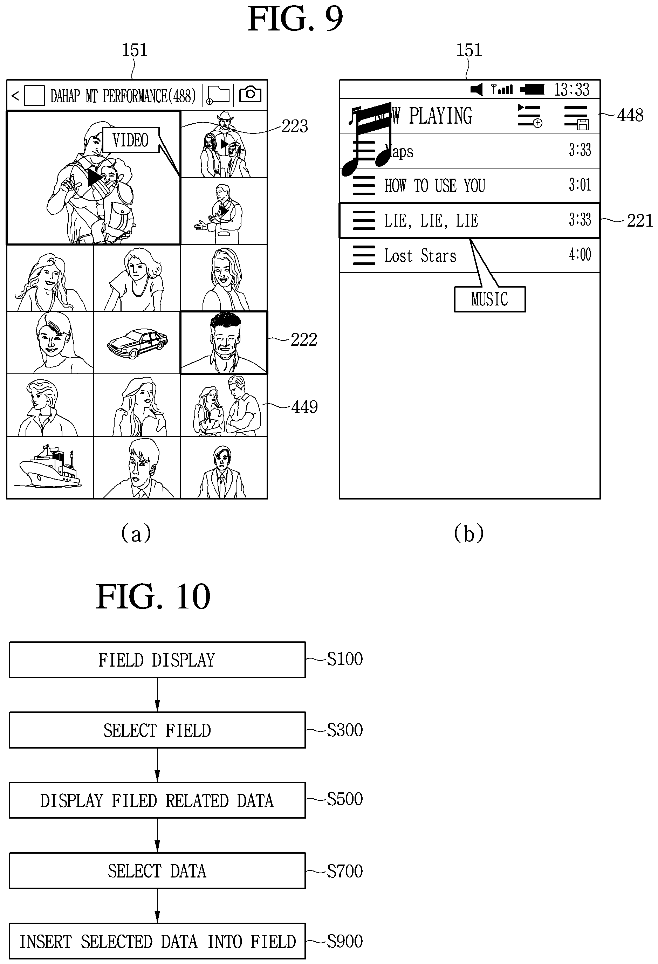

FIGs. 6 and 9 are screens of data.

As an example of data according to an embodiment of the present invention, text or content may be included.

As an example of text according to an embodiment of the present invention, an address, a URL, a music title, an account number, an ID, a password, an authentication number, a phone number, a card number, or an e-mail may be included.

As an example of content according to an embodiment of the present invention, sound source, image, or video may be included.

As shown in FIG. 6a, a text may be included in the screen of the internet app 443 and especially, referring to FIG. 6a, a phone number ("02-388-5081") 217 or an address ("Seoul Yongsan-gu Hannam-dong 683-126 Judas Itaewon branch") 212 may be included in the screen of the internet app 443.

Additionally, referring to FIG. 6b, URL (or internet address) ("m.blog.naver.com/yckim5353/22008") 213 or an account number ("356-0697-4333-73") 215 may be included in the screen of the internet app 443.

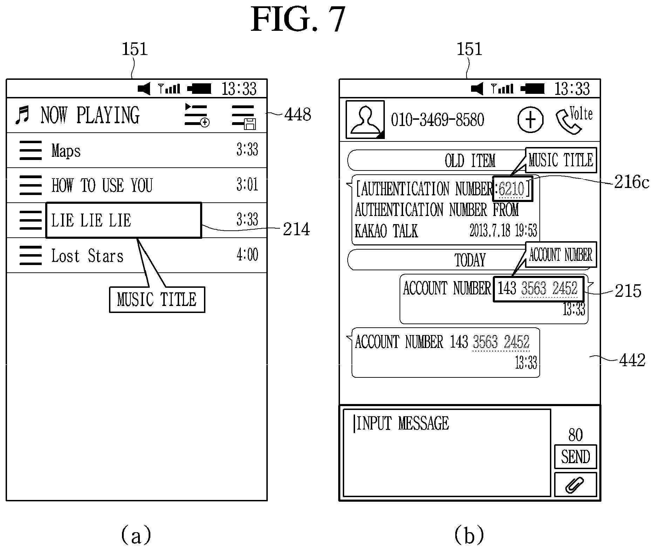

Referring to FIG. 7a, when the music listening app 448 is executed, as soon as the screen of the music listening app 448 is displayed, a music title ("lie, lie, lie") 214 may be included in the screen of the music listening app 448.

Referring to FIG. 7b, in addition to the screen of an SNS app 442 displayed after the SNS app 442 is executed, an authentication number ("6210") 106C or an account number ("143 3563 2452") 215 may be displayed.

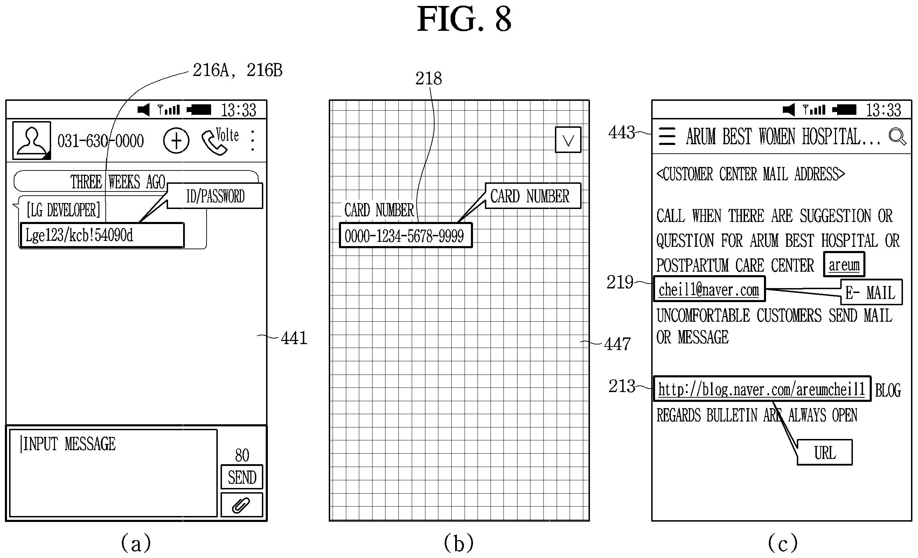

Referring to FIG. 8a, in addition to the screen of a message app 441 after the message app 441 is executed, an ID ("Lge123") 216A or a password ("kcb!54090d") 216B may be displayed.

As shown in FIG. 8b, as soon as the screen of a memo pad app 447 is displayed, a card number ("0000-1234-5678-9999") 218 may be displayed in the screen of the memo pad app 447.

Additionally, referring to FIG. 8c, an e-mail ("areumcheil1@naver.com") 219 or a URL ("http://blog.naver.com / areumcheil1") 213 may be included in the screen of the internet app 443.

Referring to FIG. 9a, in addition to the execution screen of a gallery app 449, a video 223 or an image 222 may be displayed in the screen of the gallery app 449.

Additionally, as shown in FIG. 9b, a sound source (or music) 221 may be simultaneously displayed in the screen of the music listening app 448.

Hereinafter, a method of inserting data into a field will be described with reference to FIGs. 10 to 11.

FIG. 10 is a flowchart illustrating a method of inserting data -into a field according to an embodiment of the present invention.

The controller 180 of the mobile terminal 100 may obtain an execution command for an app (or a field app) including at least one field (or data field).

According to an embodiment of the present invention, as an example of a displayed app execution screen, a message app, SNS app, internet app, map app, finance app, contact app, memo pad app, music listening app, or gallery app screen may be included and the present invention is not limited thereto.

As shown in FIG. 10, once an execution command for field app is obtained, the controller 180 may execute a field app and may control the touch screen 151 to display at least one field in addition to a field app execution screen in operation S100.

When at least one field is displayed, the controller 180 obtains the selection of at least one field among the at least one field in operation S300.

As one example of obtaining the field selection, the controller 180 may obtain the selection of a field through an input (e.g., touch) sensed by the touch screen 151 as at least one field.

As another example of obtaining the field selection, the controller 180 may input a selection of at least one field according to a predetermined condition (e.g., a user account recognized according to a predetermined gesture).

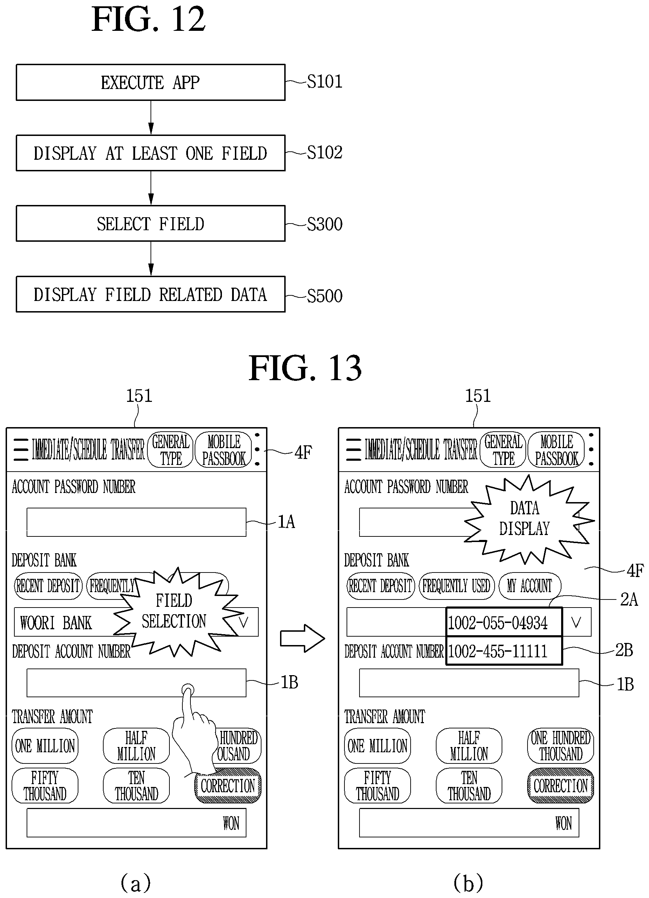

Detailed description for a method of obtaining a field selection is described later with reference to FIGs. 12 to 25.

FIG. 10 is referenced again.

When a field selection is obtained, the controller 180 displays at least one data relating to a inputted field (or at least one field) in operation S500.

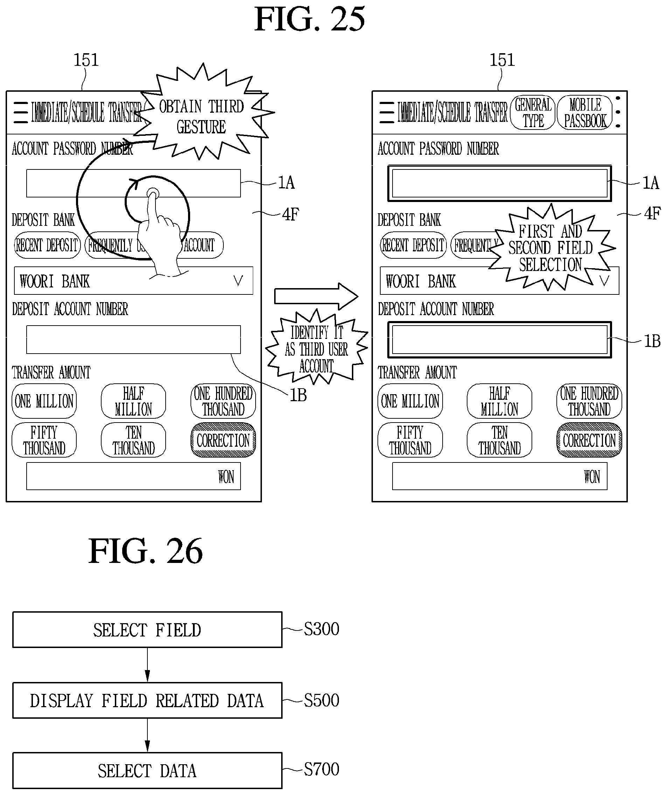

Detailed description for a method of displaying data related to a inputted field is described later with reference to FIGs. 26 to 71.

Again, referring to FIG. 10, when the at least one data relating to a field is displayed, the controller 180 obtains the selection of at least one data among the displayed at least one data in operation S700.

As one example of obtaining the data selection, the controller 180 may obtain the selection of data through an input (e.g., double touch) sensed by the touch screen 151 as at least one data.

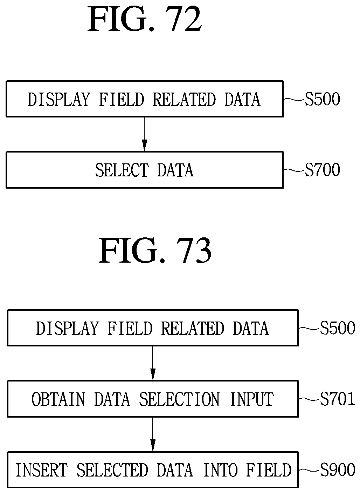

As another example, of obtaining the data selection, the controller 180 may input a selection of at least one data according to a predetermined condition (e.g., the type of an app including data), and detailed description for a method of obtaining a data selection will be described later with reference to FIGs. 72 to 81.

Referring to FIG. 10 again, once a data selection is obtained, the controller 180 inserts the inputted data into the inputted field in operation S900.

As one example of inserting the inputted data into the inputted field, the controller 180 may insert the inputted data into the inputted field through a drag and drop input.

According to an embodiment of the present invention, in order to insert the inputted field into the inputted data, each time specific data (e.g., an account number) is received from the outside (for example, a message transmitted from a first account), the controller 180 may store the data in the memory 170 in the mobile terminal 100.

Each time specific data is received from the outside, the data is stored in the memory 170. Thus it is advantageous that the controller 180 may swiftly search for and display at least one data to be inserted into the inputted field.

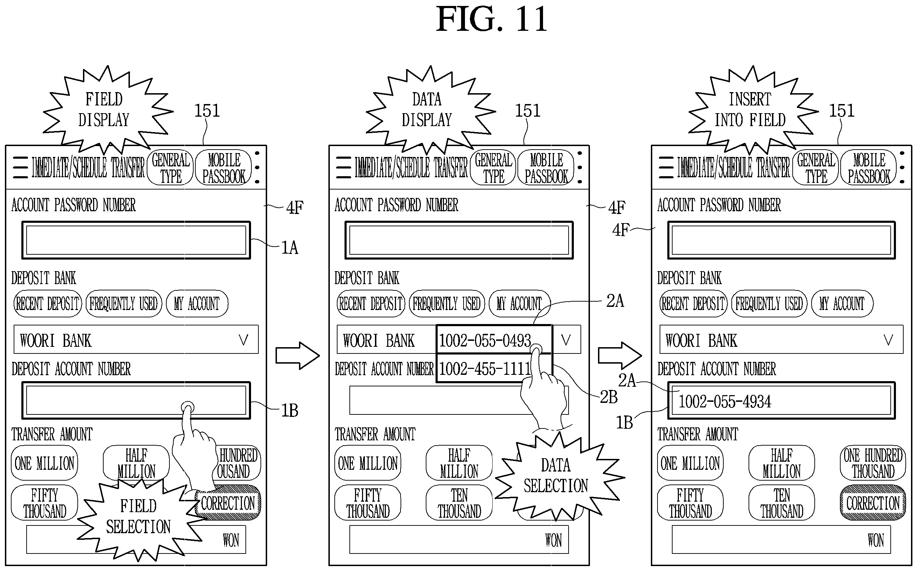

FIG. 11 is a screen of inserting data into a field.

Referring to FIG. 11, when the screen of a field app 4F including a first field (a password field) 1A and a second field (an account number field) 1B is displayed, the controller 180 may obtain a selection (a touch input to a second field 1B through the touch screen 151) of the second field 1B among at least one field 1A and 1B).

Once the selection to the second field 1B is obtained, the controller 180 may control the touch screen 151 to display first data ("1002-055-04934") 2A and second data ("1002-455-11111") 2B relating to the inputted second field 1B.

When a section to the first data 2A among at least one of data 2A and 2B is obtained, the controller 180 may insert the inputted first data 2A into the inputted second field 1B.

Once the first data 2A is inserted into the second field 1B, the controller 180 may control the touch screen 151 to include the first data 2A in the second field 1B and display it together.

Hereinafter, a method of selecting a field will be described with reference to FIGs. 12 to 25.

FIG. 12 is a flowchart illustrating a method of selecting a field .

Referring to FIG. 12, the controller 180 obtains an app execution command in operation S101, and controls the touch screen 151 to display at least one field in addition to an app execution screen according to the obtained app execution command in operation S102.

When at least one field is displayed, the controller 180 obtains the selection of a specific field among at least one field in operation S300.

As one example of obtaining the specific field selection, the controller 180 may include a method of obtaining the selection of a specific field by a user's input through the touch screen 151. As another example of obtaining the specific field selection, the controller 180 may include a method of selecting a specific field according to a predetermined condition.

As an example of obtaining the selection of a specific field by a user's input through the touch screen 151, a method of obtaining the selection of a specific field through a touch input to a specific field, a horizontal drag input to a specific field, a touch input to a data insertion button displayed at a position corresponding to a specific field, a drag input for moving a data extraction button displayed in a specific area in an app execution screen to a specific field, or a input to a data input menu may be included.

FIG. 12 is referenced again.

Once the selection of the specific field is obtained, the controller 180 controls the touch screen 151 to display data relating to the inputted specific field in operation S500.

FIG. 13 is a screen illustrating a field selection operation.

As shown in FIG. 13, when a selection (a touch input through the touch screen 151) to a specific field (an account number) 1B in the screen of a field app 4F is obtained, the controller 180 may control the touch screen 151 to display at least one of data (an account number such as "1002-055-04934", "1002-455-11111") 2A and 2B relating to the inputted specific field 1B.

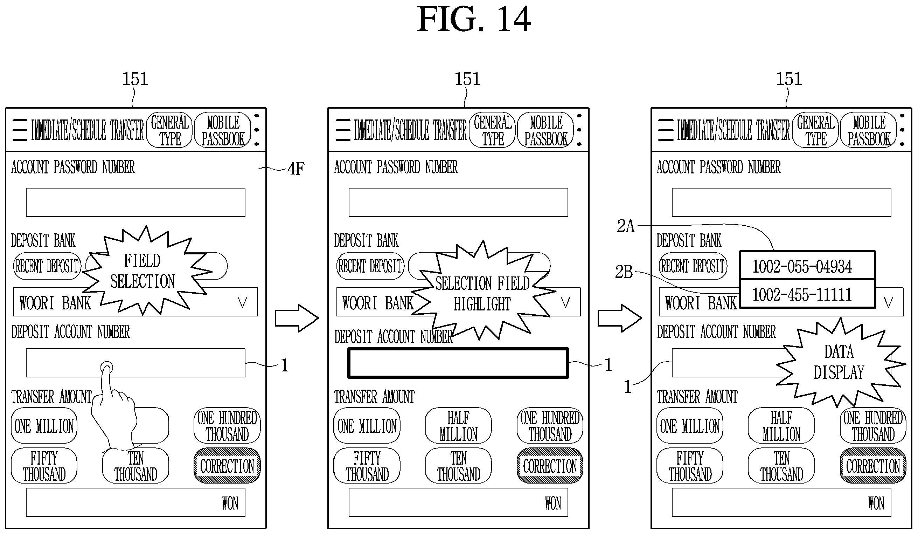

FIG. 14 is a screen of displaying a inputted field.

Referring to FIG. 14, when a selection to a specific field (an account number) 1 included in the execution screen of the field app 4F is obtained, the controller 180 may display the inputted specific field 1 to be distinguished from another area.

As an example of a method of displaying the inputted specific field to be distinguished from another area, a method of highlighting and displaying the peripheral area of the inputted specific field, a method of enlarging and displaying the inputted specific field by predetermined times (e.g., two times), and a method of highlighting and displaying a blank area in the inputted specific field may be included.

By displaying the inputted field to be distinguished from another area, a user may accurately specify which field a user selects from at least one field.

Once the inputted field is displayed to be distinguished from another area, the controller 180 may control the touch screen 151 to display at least one of data 2A and 2B relating to the inputted and highlighted field 1.

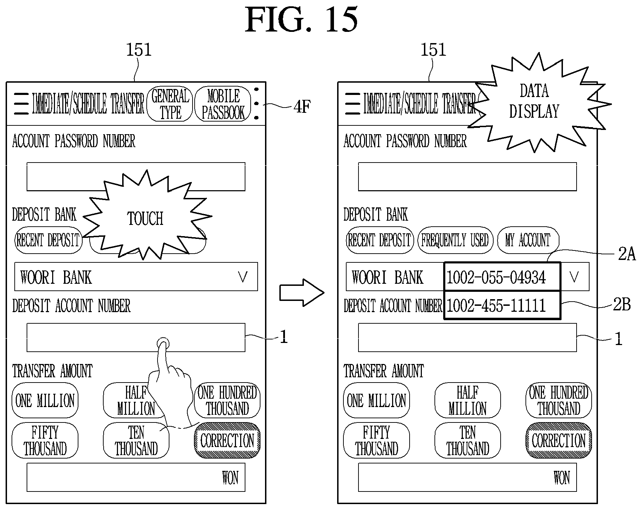

FIG. 15 is a screen of a field selection operation.

Referring to FIG. 15, the touch screen 151 may sense a touch input to a specific field 1 among at least one field displayed through the touch screen 151.

As an example of a touch input, short touch, long touch, double touch, nail touch, or knuckle touch may be included and the present invention is not limited thereto.

Through an example of the above, a user may conveniently select a field to be inputted through a touch on the touch screen 151.

When a touch input to the specific field 1 is sensed through the touch screen 151, the controller 180 may input a selection of the specific field 1 according to the sensed touch input.

Once the specific field 1 is inputted, the controller 180 may control the touch screen 151 to display at least one of data 2A and 2B relating to the inputted specific field 1.

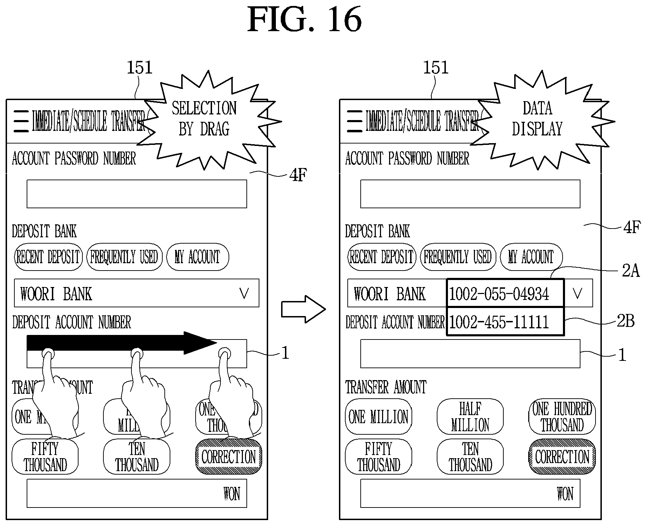

FIG. 16 is a screen of a field selection operation.

Referring to FIG. 16, the touch screen 151 may sense a drag input to a specific field 1 among at least one field displayed through the touch screen 151.

As shown in FIG. 16, the drag input to the specific field 1 may include a drag input (a field selection by dragging) in the length direction of a field inputted as the specific field 1.

In the case that the form of a specific field is long in a first direction (e.g., a horizontal direction), a drag input to the specific field may include a drag input in the first direction (e.g., a horizontal direction) and the present invention is not limited thereto.

When a touch input to the specific field 1 is sensed through the touch screen 151, the controller 180 may input a selection of the specific field 1 according to the sensed drag input.

Once the specific field 1 is inputted, the controller 180 may control the touch screen 151 to display at least one of data 2A and 2B relating to the inputted specific field 1.

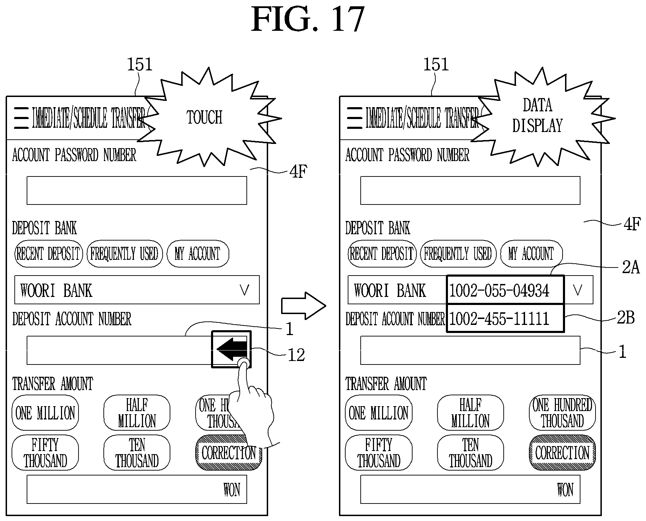

FIG. 17 is a screen of a field selection operation.

Referring to FIG. 17, the controller 180 may control the touch screen 151 to display a data insertion button 12 at a position corresponding to at least one displayed each field.

As shown in FIG. 17, the data insertion button 12 may have the an arrow form and may be displayed in addition to the specific field 1 at one end (the right end) of the specific field 1 and the present invention is not limited thereto.

A user may easily select a desired field by selecting the data insertion button 12 displayed at a position corresponding to at least one each field.

The touch screen 151 may sense the selection input of the data insertion button 12 displayed at a position corresponding to the specific field 1 among at least one displayed field.

When the data insertion button 12 at the position corresponding to the specific field 1 is inputted, the controller 180 may input a selection of the specific field 1 corresponding to the data insertion button 12. Once the specific field 1 is inputted, the controller 180 may control the touch screen 151 to display at least one of data 2A and 2B relating to the inputted specific field 1.

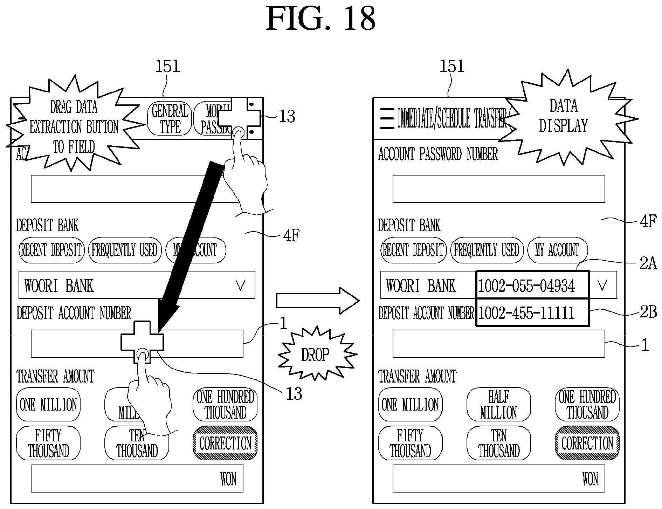

FIG. 18 is a screen of a field selection operation.

Referring to FIG. 18, the controller 180 may control the touch screen 151 to display a data extraction button 13 in a specific area in addition to the execution screen of a field app 4F.

As shown in FIG. 18, the data extraction button 13 may have the form "+" that means "addition" or "insertion" but the present invention is not limited thereto.

A user may select (e.g., touch) a data extraction button displayed in a specific area and may conveniently select a specific field through an input (e.g., drag input) for moving the inputted data extraction button to a field to be inputted.

The touch screen 151 Referring to FIG. 16, the touch screen 151 may sense an input (a drag input) for inputting the data extraction button 13 to be displayed in a specific area and moving the inputted data extraction button 13 to the specific field 1 among at least one field.

When an input for moving the data extraction button 13 to the specific field 1 is obtained, the controller 180 may input a selection of the specific field 1 where the data extraction button 13 is moved. Once the specific field 1 is inputted, the controller 180 may control the touch screen 151 to display at least one of data 2A and 2B relating to the inputted specific field 1.

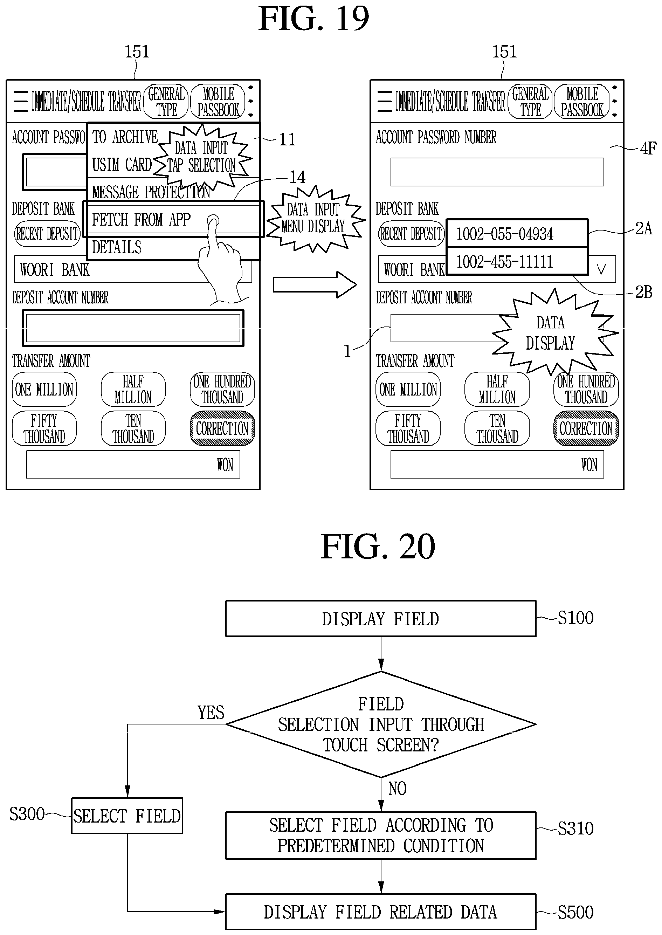

FIG. 19 is a screen of a field selection operation.

Referring to FIG. 19, once the selection of the specific field 1 is obtained, the controller 180 may control the touch screen 151 to display a data input menu 16.

The data menu 16 may include a data input tap ("get it from App) 14 for inserting external data (e.g., data stored in a memory) into the inputted specific field 1.

A user may select a specific field and select the data input tap 14 in a data menu 16 displayed after the field is inputted, so that the use can input desired data to the inputted field conveniently.

When the selection of a specific field is obtained and a selection input (e.g., touch input) is obtained through the data input tap 14 for inserting data into the inputted specific field, the controller 180 may control the touch screen 151 to display data 2A and 2B relating to the inputted specific field according to the selection input to the data input tap 14.

Hereinafter, a method of automatically selecting a specific field from at least one field according to a predetermined condition will be described with reference to FIGs. 20 to 25.

FIG. 20 is a flowchart illustrating a method of selecting a field depending on a predetermined condition.

Referring to FIG. 20, the controller 180 displays at least one field through the touch screen 151 in operation S100.

When a selection input to a specific field among at least one displayed field is obtained through the touch screen 151, the controller 180 may input a selection of a specific field according to the selection input in operation S300 and controls the touch screen 151 to display data relating to the inputted field in operation S500.

On the other hand, when a selection input to a specific field is not obtained through the touch screen 151, the controller 180 may input a selection of a specific field from at least one field according to a predetermined condition in operation S310.

The predetermined condition may include the type of a recognized user account and the present invention is not limited thereto.

Once a specific field is inputted according to a predetermined condition, the controller 180 controls the touch screen 151 to display at least one data relating to the inputted specific field in operation S500.

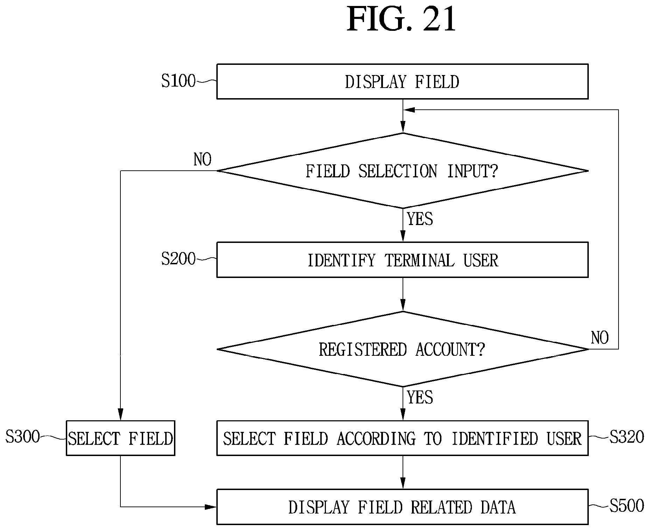

FIG. 21 is a flowchart illustrating a method of selecting a field depending on a predetermined condition.

Referring to FIG. 21, at least one field is displayed in operation S100 and when a selection input to at least one specific field among at least one field is not obtained, the controller 180 may identify the user account of the mobile terminal 100 in operation S200.

As described above, the user account may mean a specific person or a specific account recognized by a mobile terminal.

As an example of a method of identifying a user account, when a first gesture is sensed by the touch screen 151, the controller 180 may identify a user account as the first user account corresponding to the first gesture according to the sensed first gesture.

FIG. 21 is referenced again.

When the user account of the mobile terminal 100 is identified, the controller 180 determines whether the identified user account is a registered account, and when the user account is identified as a registered account, input a selection of a specific field corresponding to the identified user account in operation S320.

As one example of inputting a specific field corresponding to a user account, the controller 180 may store information on the number of times that each field is inputted in a memory and then when the first user account is identified, may input a selection of a first field that is inputted most in a state where the first user account is logged-in.

As another example of inputting a specific field corresponding to a user account, the controller 180 may store account information registered in a state where the identified second user account is logged-in and then, when the second user account is identified, may input a selection of a message field of a message to be transmitted to a first group account registered by the second user account.

Once a specific field is inputted, the controller 180 controls the touch screen 151 to display data relating to the inputted specific field in operation S500.

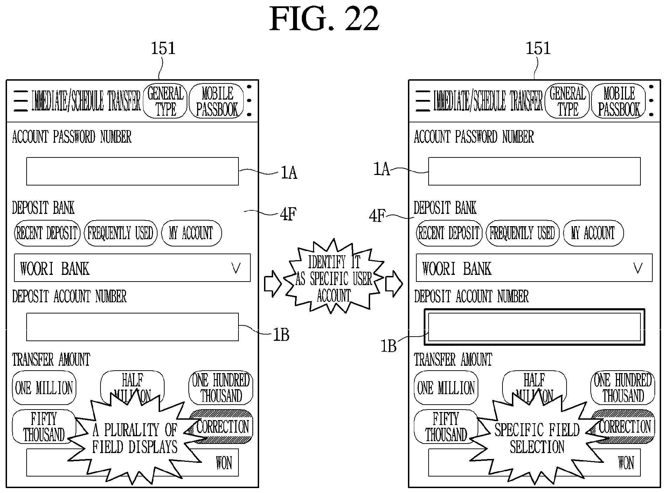

FIGs. 22 to 25 are views illustrating a method of selecting a field depending on a predetermined condition.

Referring to FIG. 22, the controller 180 may control the touch screen 151 to display a field app 4F and a plurality of fields 1A and 1B.

When the field app 4F is displayed, the controller 180 may identify the user account of the mobile terminal 100.

When the user account of the mobile terminal 100 is identified as a specific user account, the controller 180 may input a selection of a specific field 1B corresponding to an identified specific user account.

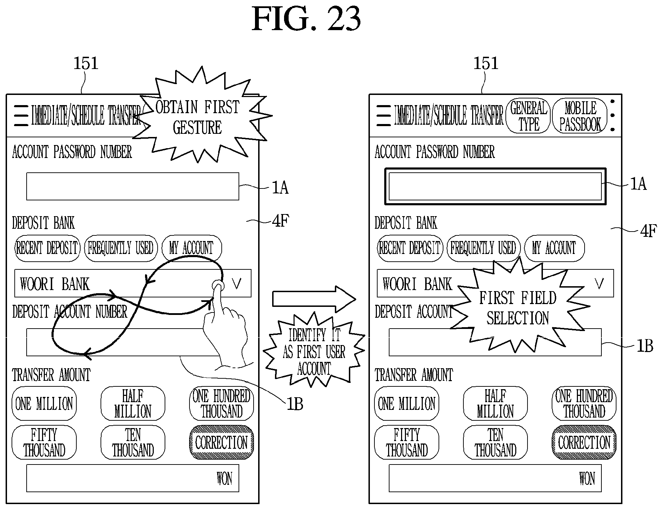

Referring to FIG. 23, when the screen of the field app 4F including a first field 1A and a second field 1B is displayed, if a first gesture is obtained through the touch screen 151, the controller 180 may identify a user account of the mobile terminal 100 as the first user account.

When the user account of the mobile terminal 100 is identified as the first user account, the controller 180 may input a selection of a first field 1A corresponding to the identified first user account.

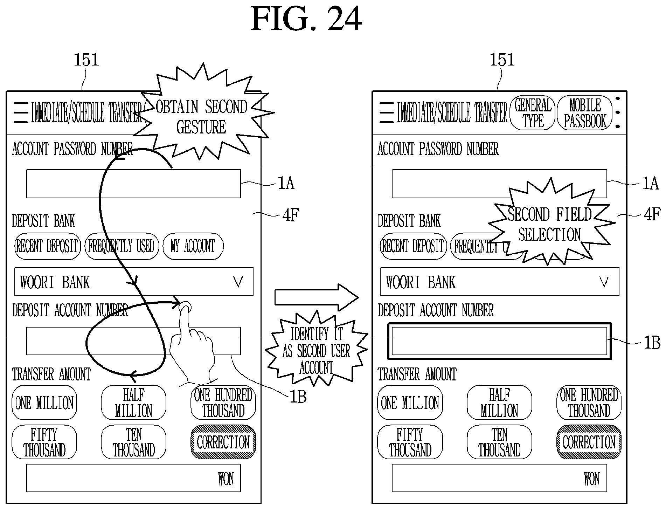

As shown in FIG. 24, when the screen of the field app 4F including the first field 1A and the second field 1B is displayed, if a second gesture is obtained through the touch screen 151, the controller 180 may identify a user account of the mobile terminal 100 as a second user account. When the user account of the mobile terminal 100 is identified as a second user account, the controller 180 may input a selection of a second field 1B corresponding to the identified second user account.

Referring to FIG. 25, when the screen of the field app 4F including a first field 1A and a second field 1B is displayed, if a third gesture is obtained through the touch screen 151, the controller 180 may identify a user account of the mobile terminal 100 as a third user account. When the user account of the mobile terminal 100 is identified as a third user account, the controller 180 may input a selection of the first field 1A and the second field 1B corresponding to the identified third user account.

Hereinafter, a method of displaying data relating a inputted field will be described with reference to FIGs. 26 to 71.

FIG. 26 is a flowchart illustrating a display method.

Referring to FIG. 26, once a field is inputted in operation S300, the controller 180 controls the touch screen 151 to display at least one data relating to the inputted field in operation S500.

As an example of data relating to the inputted field, data in the same format as the format of the inputted field may be included. As an example of data relating to the inputted field, when the inputted field is an account number field, data relating to the inputted field may be an account number having the same format as the format of an account number field.

In more detail, when a field is inputted, the controller 180 may search for at least one data relating to the inputted field from the memory 170 where at least one data is stored.

When at least one data relating to the inputted field is found from data stored in the memory 170, the controller may perform filtering according to a predetermined condition (e.g., search for data received from a predetermined registered account).

When at least one data is filtered according to the predetermined condition, the controller 180 may control the touch screen 151 to arrange and display at least one filtered data according to a predetermined condition (e.g., in the order in which the number of previous selections is large).

When at least one data is displayed, the controller 180 may input a selection of a specific data from at last one data on the basis of an input through the touch screen 151 or a predetermined condition in operation S700.

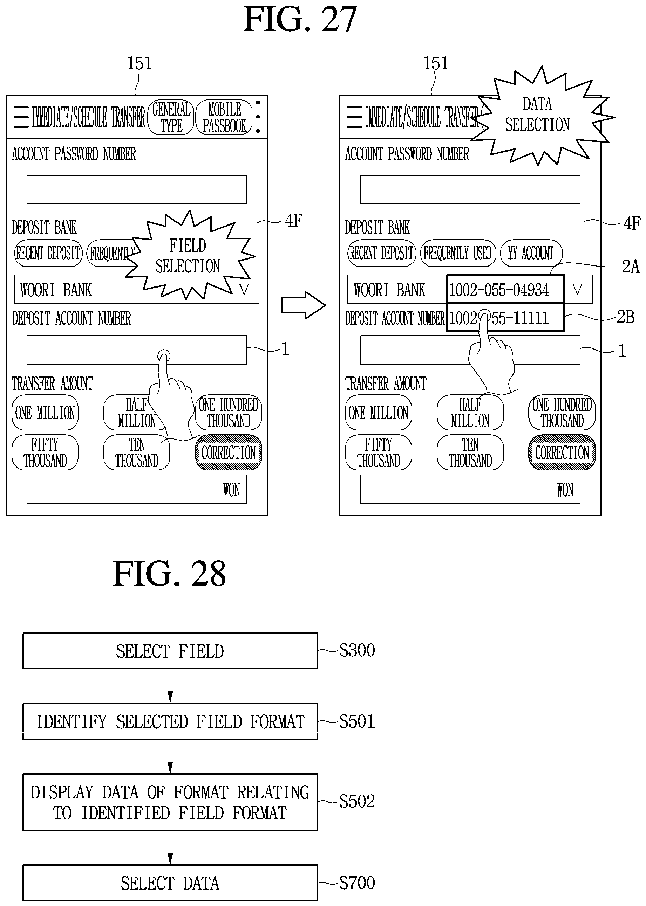

FIG. 27 is a screen illustrating a data display operation.

Referring to FIG. 27, when a specific field 1 is inputted from at least one field, the controller 180 may control the touch screen 151 to display at least one of data 2A and 2B relating to the inputted field 1.

When at least one of data 2A and 2B is displayed, the controller 180 may select specific data on the basis of a predetermined condition or an input through the touch screen 151.

Hereinafter, a method of searching for data relating to the inputted field will be described with reference to FIGs. 28 to 39.

FIG. 28 is a flowchart illustrating a data search method.

Referring to FIG. 28, once a field is inputted in operation S300, the controller 180 identifies the format of the inputted field in operation S501.

As one example, when the inputted field is a message field, the controller 180 may identify the format of the inputted message field as a text format.

As another example, when the inputted field is an address field, the controller 180 may identify the format of the inputted message field as an address format.

As another example, when the inputted field is a URL field, the controller 180 may identify the format of the inputted URL field as a URL format and the present invention is not limited thereto.

Once the format of the inputted field is identified, the controller 180 controls the touch screen 151 to display data of a format relating to the format of the identified field in operation S502.

In more detail, the controller 180 may search for data having the same format as the identified field from the memory 170 and control the touch screen 151 to display the searched data.

When the searched data is displayed, the controller 180 may input a selection of at least one data from the displayed data in operation S700.

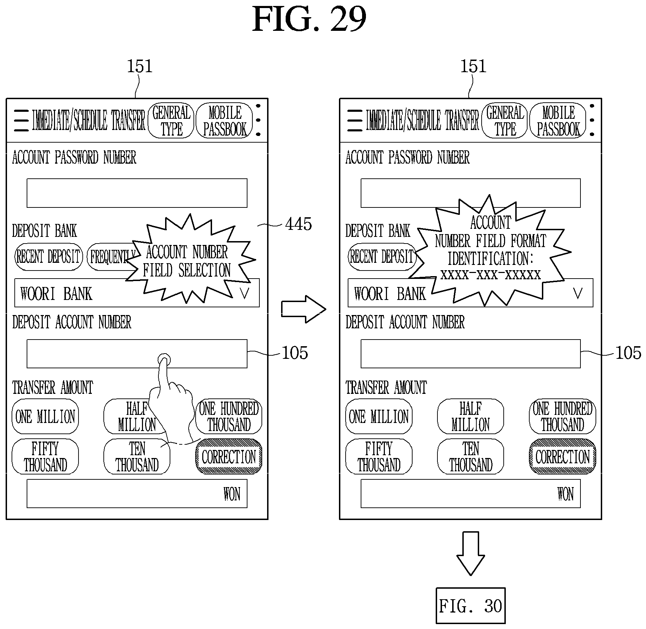

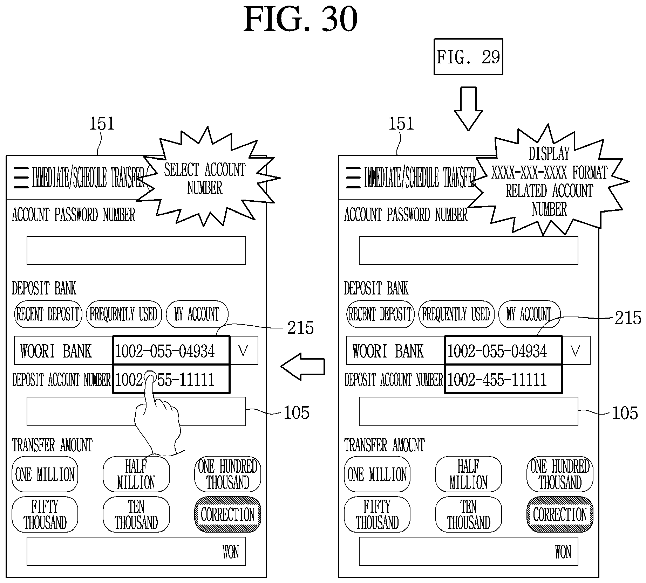

FIGs. 29 and 30 are screens illustrating a data search operation according to an embodiment of the present invention.

Referring to FIG. 29, once the execution command of a finance app 445 is obtained, the controller 180 may control the touch screen 151 to display the execution screen of the finance app 445 and an account number field 105 included in the screen of the finance app 445.

When a selection (or touch) to the account number field 105 is obtained, the controller 180 may identify the format ("XXXX-XXX-XXXXX", wherein X is a number) of the inputted account number field 105.

As shown in FIG. 30, when the format of the account number field 105 is identified, the controller 180 may control the touch screen 151 to display at least one of account numbers 215A and 215B, that is, data relating to the format of the identified account number field 105.

In more detail, when the format of the account number field 105 is identified, the controller 180 may search for a first account number ("1002-055-04934") and a second account number ("1002-455-11111"), that are data having the format (("YYYY-YYY-YYYYY", wherein Y is a number) identical to the format ("XXXX-XXX-XXXXX") of the identified account number field 105, from the memory 170 and may control the touch screen 151 to display the found first and second account numbers 2A and 2B.

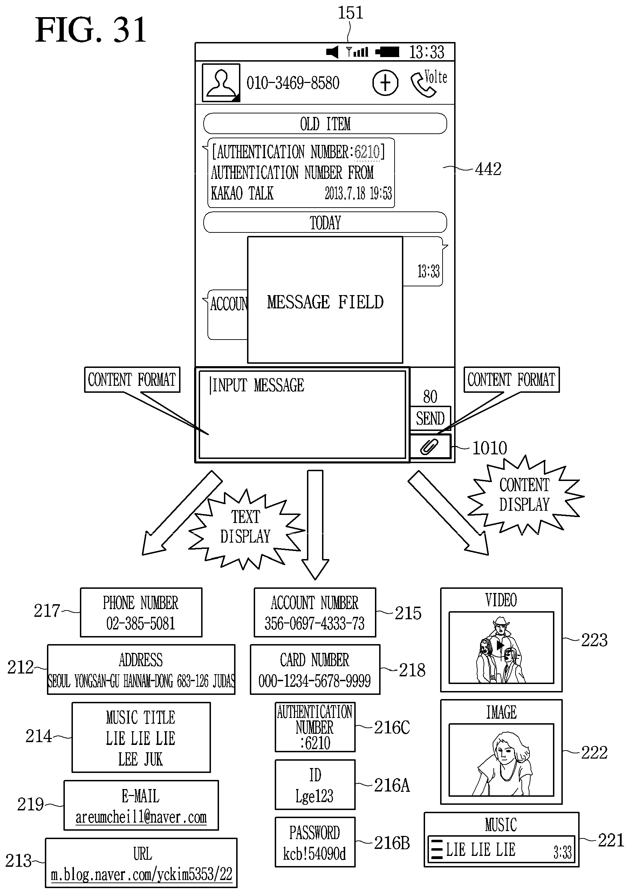

FIG. 31 is a view of data relating to a message field as one example of a field.

Referring to FIG. 31, a message field 101 in the screen of an SNS app 442 is a field of a text format. As an example of data including a text format, an address 212, a URL 213, a music title 214, an account number 215, an ID 216A, a password 216B, an authentication number 216C, a phone number 217, a card number 218, or an e-mail 219 may be included.

Additionally, as shown in FIG. 31, a file attachment field 1010 in the screen of the SNS app 422 has a content format and as an example of data including the content format, a sound source 221, an image 222, or a video 223 may be included.

Once the execution command of the SNS app 442 is obtained, the controller 180 may control the touch screen 151 to display the screen of the SNS app 442 and a message field 101 or a file attachment field 1010 in the screen of the SNS app 442.

When the message field 101 is displayed, the controller 180 searches for the address 212, the URL 213, the music title 214, the account number 215, the ID 216A, the password 216B, the authentication number 216C, the phone number 217, the card number 218, or the e-mail 219, that is, data including the text format of the message field 101, and may perform a control to on the touch screen 151 to display the searched data.

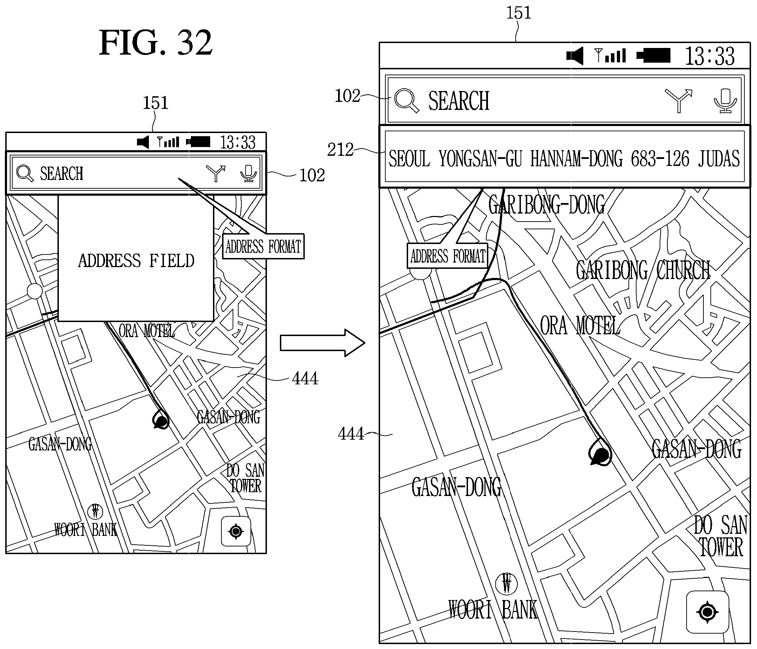

FIG. 32 is a screen illustrating data relating to an address field as another example of a field.

As shown in FIG. 32, the address field 102 in the screen of the map app 444 may be a field of a text format and especially may have an address format among text formats. As an example of data including an address format, the address 212 may be included.

When the address field 102 is displayed, the controller 180 searches for an address ("Seoul Yongsan-gu Hannam-dong 683-126 Judas Itaewon branch"), that is, data including the address format of the address field 102, and may perform a control to on the touch screen 151 to display the found address 212.

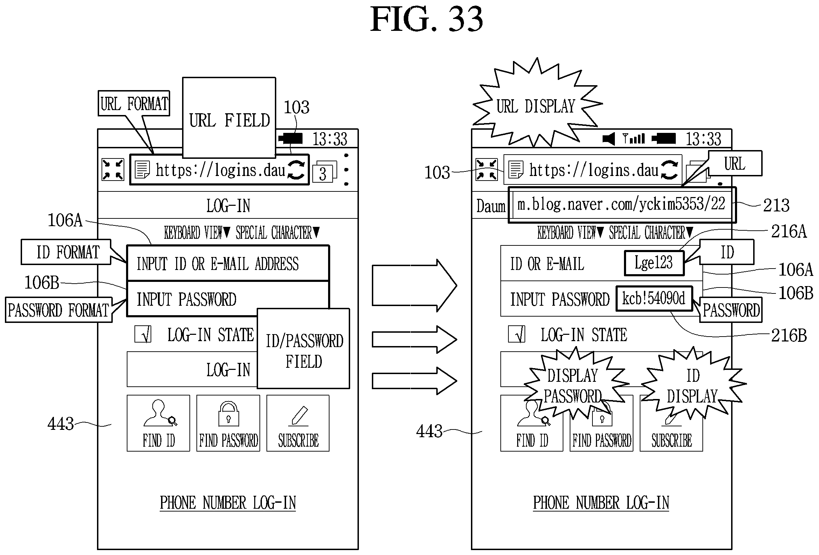

FIG. 33 is a screen illustrating data relating to a URL field, an ID field, and a password field as another example of a field according to an embodiment of the present invention.

Referring to FIG. 33, a URL field 103 in the screen of an internet app 443 is a field of a text format and especially, according to an embodiment of the present invention, may have a URL format among text formats. As an example of data including a URL format, a URL 213 may be included.

When the URL field 103 is displayed, the controller 180 searches for a URL ("m.blog.naver.com/yckim5353/22008") 213, that is, data including the URL format of the URL field 103, and may perform a control to on the touch screen 151 to display the found URL 213.

Additionally, an ID field 106A in the screen of an internet app 443 is a field of a text format and especially may have an ID format among text formats. As an example of data including an ID format, an ID 216A may be included.

Once the ID field 106A is displayed, the controller 180 may control the touch screen 151 to display an ID ("Lge123") 216A, that is, data including the ID format of the ID field 106A.

Additionally, the ID field 106B in the screen of an internet app 443 is a field of a text format and especially may have a password format among text formats. As an example of data including a password format, a password 216B may be included.

Once the password field 106B is displayed, the controller 180 may control the touch screen 151 to display a password ("kcb!54090d") 216B, that is, data including the password format of the password field 106B.

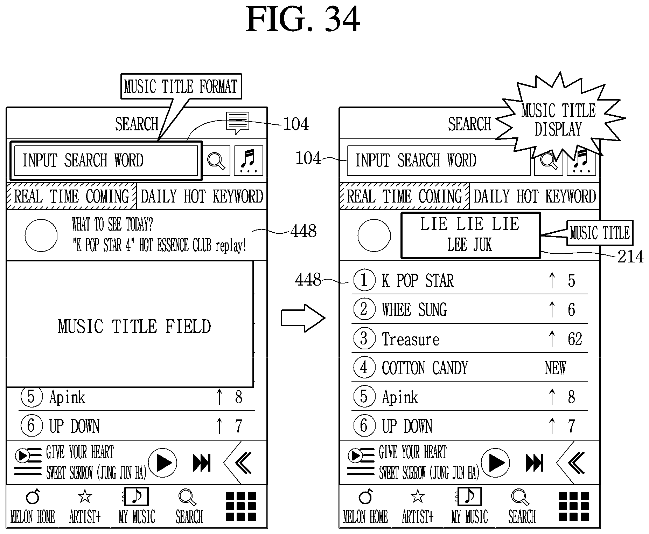

FIG. 34 is a screen illustrating data relating to a music title field.

Referring to FIG. 34, a music title field 104 in the screen of a music listening app 448 is a field of a text format and especially, may have a music title format among text formats. As an example of data including a music title format, a music title 214 may be included.

Once the music title field 104 is displayed, the controller 180 may control the touch screen 151 to display a music title ("lie, lie, lie") 214, that is, data including the music title format of the music title field 104.

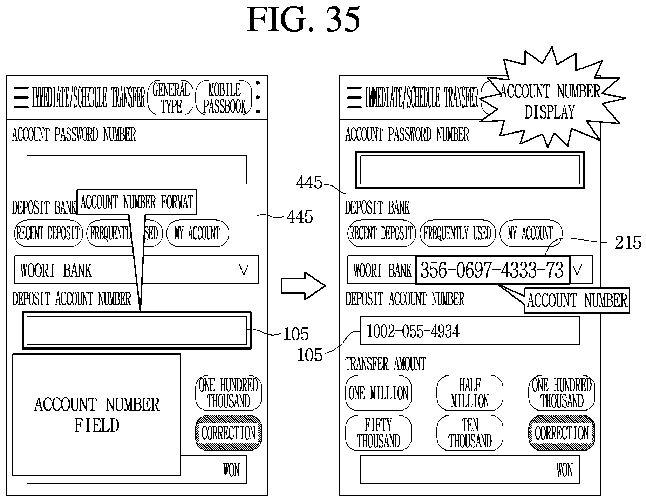

FIG. 35 is a screen illustrating data relating to an account number field.

Referring to FIG. 35, an account number field 105 in the screen of a finance app 445 is a field of a text format and especially, may have an account number format among text formats. As shown in FIG. 35, as an example of data including an account number format, an address 215 may be included.

Once the account number field 105 is displayed, the controller 180 may control the touch screen 151 to display an account number ("356-0697-4333-73") 215, that is, data including the account number format of the account number field 105.

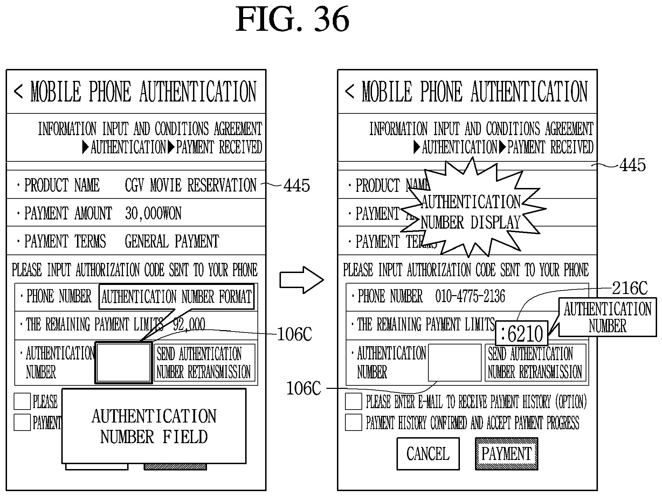

FIG. 36 is a screen illustrating data relating to an authentication number field.

Referring to FIG. 36, an authentication number field (or an authorization number field) 106C in the screen of a finance app 445 is a field of a text format and especially, may have an authentication number format among text formats.

Once the authentication number field 106C is displayed, the controller 180 may control the touch screen 151 to display an authentication number ("6210") 216C, that is, data including an authentication number format of the authentication number field 106C.

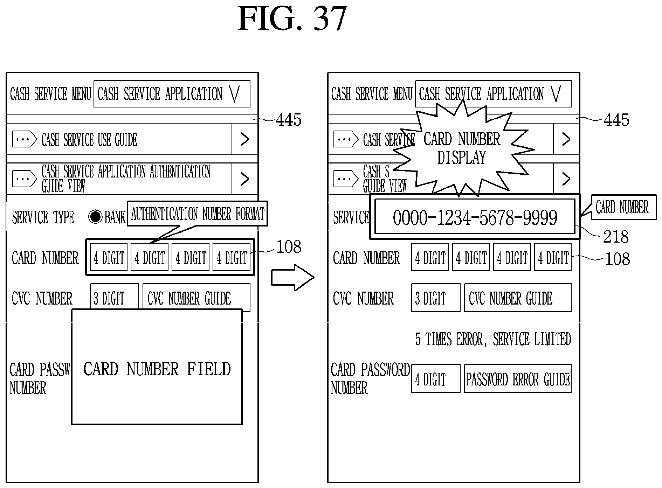

FIG. 37 is a screen illustrating data relating to a card number field .

Referring to FIG. 37, a card number field 108 in the screen of a finance app 445 may have a card number format among text formats.

Once the card number field 108 is displayed, the controller 180 may control the touch screen 151 to display a card number ("0000-1234-5678-9999") 218, that is, data including the card number format of the card number field 108.

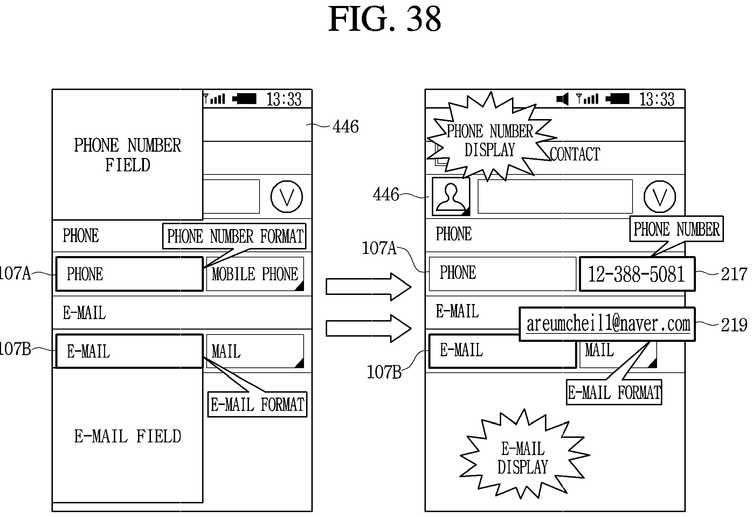

FIG. 38 is a screen illustrating data relating to a phone number field and an e-mail field.

Referring to FIG. 38, a phone number field 107A in the screen of a contact app 446 may have a phone number format among text formats.

Once the phone number field 107A of a phone number format is displayed, the controller 180 may control the touch screen 151 to display a phone number ("12-388-5081") 217, that is, data including the phone number format of the phone number field 107A.

Additionally, an e-mail field 107B in the screen of the contact app 446 may have a text format and especially, may have an e-mail format among text formats.

Once the e-mail field 107B of an e-mail format is displayed, the controller 180 may control the touch screen 151 to display an e-mail ("areumcheil1@naver.com") 219, that is, data including an e-mail field.

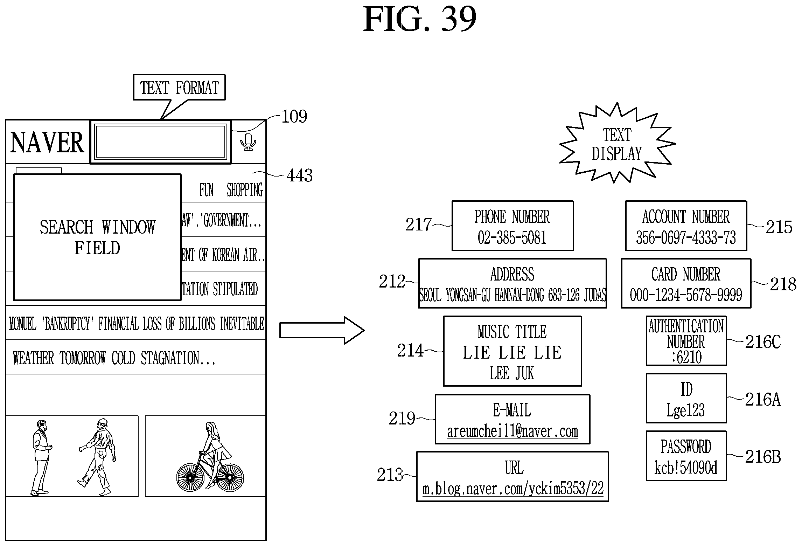

FIG. 39 is a screen illustrating data relating to a search window field.

Referring to FIG. 39, a search window field 109 in the screen of an internet app 443 is a field of a text format. As an example of data including a text format, an address 212, a URL 213, a music title 214, an account number 215, an ID 216A, a password 216B, an authentication number 216C, a phone number 217, a card number 218, or an e-mail 219 may be included.

When the search window field 109 is displayed, the controller 180 searches for the address 212, the URL 213, the music title 214, the account number 215, the ID 216A, the password 216B, the authentication number 216C, the phone number 217, the card number 218, or the e-mail 219, that is, data including the text format of the search window field 109, and may perform a control to on the touch screen 151 to display the searched data.

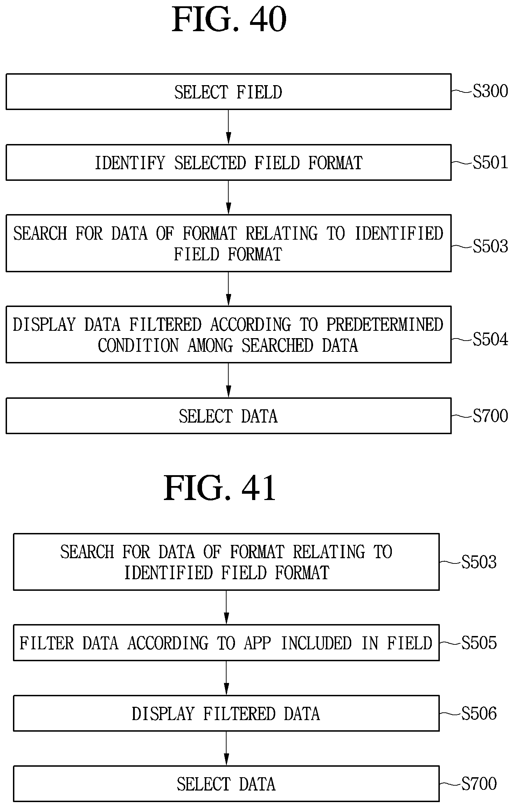

Hereinafter, a method of filtering at least one searched data will be described with reference to FIGs. 40 to 64.

FIG. 40 is a flowchart illustrating a search data filtering method.

Referring to FIG. 40, once a field is inputted in operation S300 and the format of the inputted field is identified in operation S501, the controller 180 searches for data of a format relating to the format of the identified field in operation S503.

Once data of a format relating to the format of the identified field is found, the controller 180 controls the touch screen 151 to display filtered data among the searched data according to a predetermined condition in operation S504.

In more detail, when data is found, the controller 180 may filter (e.g., display only the data received from a first registered account) at least one searched data according to a predetermined condition and may control the touch screen 151 to display at least one filtered data (data received from a first registered account).

That is, the controller may control the touch screen 151 to display some data among at least one searched data according to a predetermined condition and not to display data different from the some data according to a predetermined condition.

As an example of a predetermined condition, the type of an app including a inputted field, a message receiver account of a inputted field, a message sender account of searched data, an execution state or type of an app including searched data, an identified user account, or a state of a mobile terminal may be included.

Referring to FIG. 40 again, when filtered data is displayed, the controller 180 may input a selection of specific data according to a predetermined condition or an input through the touch screen 151 in operation S700.

FIG. 41 is a flowchart illustrating a method of filtering data depending on a field app.

Referring to FIG. 41, when data of a format relating to the format of an identified field is found in operation S503, the controller 180 filters the data according to an app (or a field app) including a inputted field in operation S505.

As an example of an app (or a field app) including a field, message app, SNS app, internet app, map app, finance app, contact app, memo pad app, music listening app, or gallery app may be included.

As one example of filtering data according to a field app, in relation to a first app and second app including both a first field and a second field, the controller 180 may control the touch screen 151 to display first data relating to the first field and second data relating to the second field in addition to a first app screen or display only the first data relating to the first field in addition to a second app screen.

Once data is filtered, the controller 180 may control the touch screen 151 to display the filtered data and may obtain a selection on displayed data in operation S700.

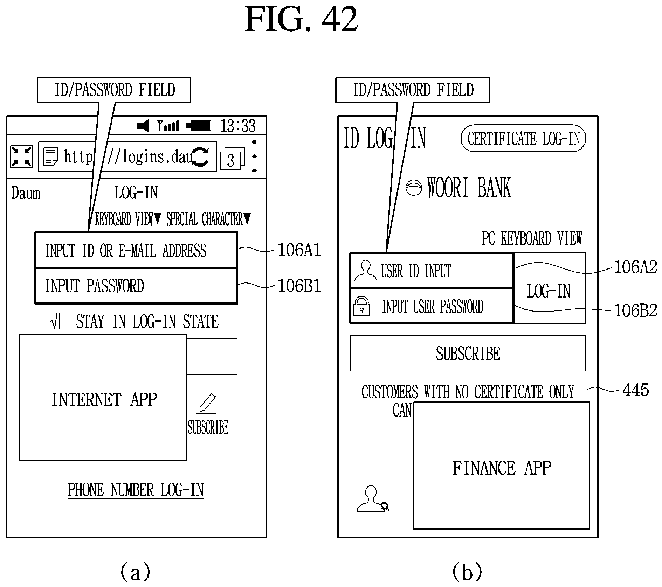

FIGs. 42 to 44 are screens illustrating an operation of filtering search data depending on a field app.

Referring to FIG. 42a, the screen of an internet app 443 may include a first ID field 106A1 and a first password field 106B1. Additionally, as shown in FIG. 42b, a finance app 455 may also include a second ID field 106A2 and a second password field 106B2.

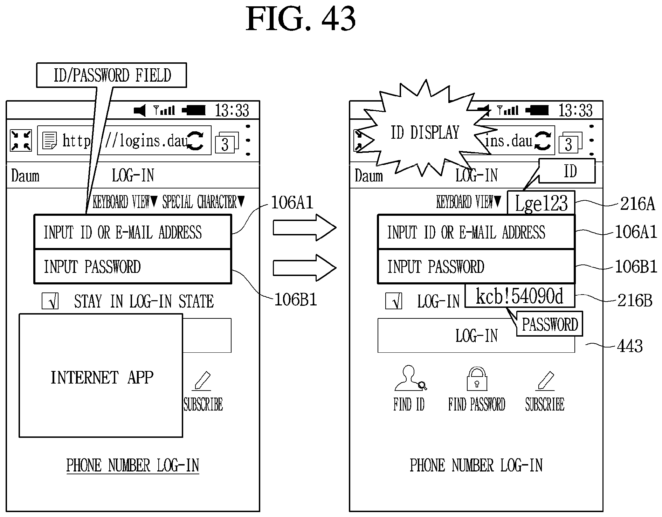

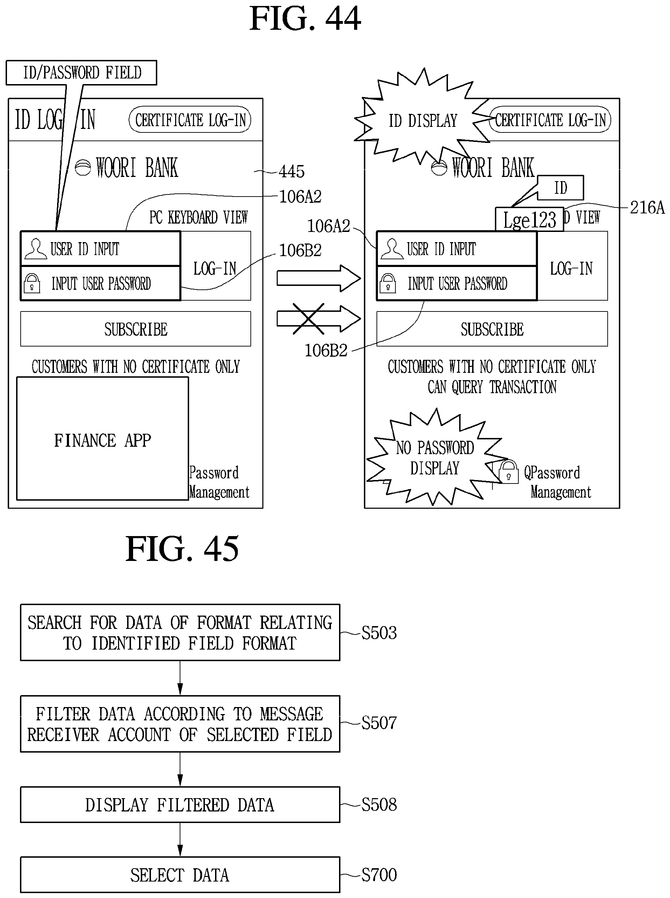

Referring to FIG. 43, in addition to the screen of the internet app 443, the first ID field 106A1 and the first password field 106B1 are displayed and referring to FIG. 44, in addition to the screen of the finance app 445, a second ID field 106A2 and a second password field 106B2 are displayed.

When the first or second ID field 106A1 or 106A2 and the first or second password field 106B1 or 106B2 displayed in addition to the internet app 443 of FIG. 43 and the finance app 445 of FIG. 44 are inputted, the controller 180 may search for at least one ID and password relating to the inputted first or second ID field 106A1 or 106A2 and first or second password field 106B1 or 106B2 from the memory 170.

Once at least one ID and password relating to the ID field 106A and the password field 106B is found, the controller 180 may identify an app (a finance app or an internet app) including the inputted first or second ID field 106A1 or 106A2 and first or second password field 106B1 or 106B2 and may filter the at least one found ID and password on the basis of the identified app.

First, referring to FIG. 43, when an app including the inputted first ID field 106A1 and first password field 106B1 is identified as the internet app 443, the controller 180 may control the touch screen 151 to display both a found ID ("Lge123") 216A and password ("kcb!54090d") 216B.

On the other hand, referring to FIG. 44, when an app including the inputted second ID field 106A2 and second password field 106B2 is identified as the finance app 445, the controller 180 may control the touch screen 151 to filter a found password ("kcb!54090d ") 216B and display a found ID (" Lge123") 216A.

In this specification, it is assumed that the finance app 445 is displayed with a less amount of data than the internet app 445.

A user receives recommendation on a greater amount of data through a first app (an internet app) that is less sensitive to data leakage than a second app (a finance app) and receives recommendation on a less amount of data through a second app (a finance app) that is more sensitive to data leakage than a first app (an internet app).

According to the present invention, a user may set importance or security for each field app and may receive recommendation on a desired amount of data or a desired type of data according to the set importance or security.

FIG. 45 is a flowchart illustrating a method of filtering search data depending on a receiver account of a message field.

Referring to FIG. 45, when data of a format relating to the format of an identified field is found in operation S503, the controller 180 filters the data according to the message receiver account of the inputted field in operation S507.

As one example of filtering data according to a receiver account of a inputted field, in relation to a first SNS app and second SNS app screen including a message field transmitted to each first account and second account, the controller 180 may control the touch screen 151 to display first data and second data relating to the message field in addition to a first SNS app screen or display only the first data relating to the message field in addition to a second SNS app screen.

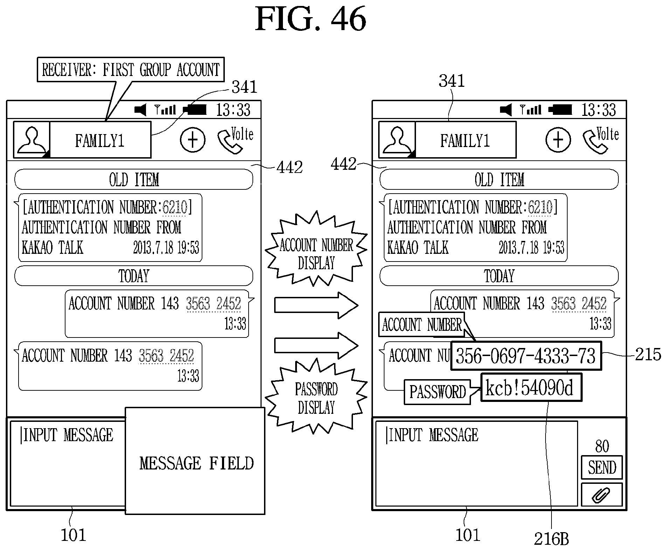

FIGs. 46 to 49 are screens illustrating an operation of filtering search data depending on a receiver account of a message field.

When a message field 101 of FIG. 46 is inputted as the screen of a first SNS app 442 of FIG. 46 including the message field 101, where a receiver account is "family1" (a first group account of FIG. 46), is displayed, the controller 180 may search for the account number ("356-0697-4333-73") 215 of FIG. 46 and the password ("kcb!54090d") 216B of FIG. 46, which are text data relating to the inputted message field 101.

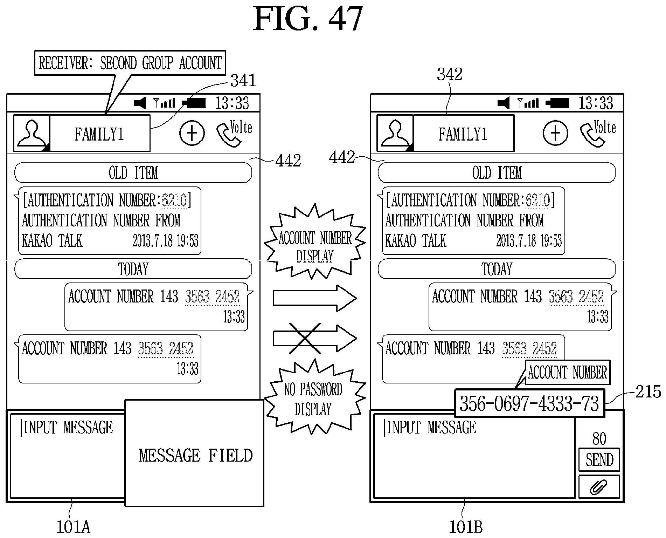

Additionally, when a message field 101 of FIG. 47 is inputted as the screen of a second SNS app 442 of FIG. 47 including the message field 101, where a receiver account is "friend1" (a second group account of FIG. 47), is displayed, the controller 180 may search for the account number 215 of FIG. 46 and the password 216B of FIG. 46, which are text data relating to the inputted message field 101.

Once an account number and a password are found, the controller 180 may identify a receiver account (a first group account of FIG. 46 or a second group account of FIG. 47) of a message field, that is, a predetermined condition, and may filter at least one data among already found account numbers and passwords according to the identified receiver account.

Referring to FIG. 46, the controller 180 may control the touch screen 151 to identify the receiver account ("family1") of the message field ("family1" is a first group account) and display the already found account number 215 and password 216B according to the identified receiver account (the first group account).

Unlike this, referring to FIG. 47, the controller 180 may control the touch screen 151 to identify the receiver account ("friend1") of the message field ("friend1" is a second group account), block the password number 216B among the already found account number 215 and password 216B and display the account number 215 according to the identified receiver account (the second group account).

That is, the controller 180 may not display second data having a higher predetermined importance and display first data having a lower predetermined importance among already found first data and second data according to the identified receiver account.

Thus, according to the identified receiver account, a user may easily transmit both data having high importance and data having low importance to a predetermined first group and may easily transmit only data having low importance to a predetermined second group without transmitting data having high importance.

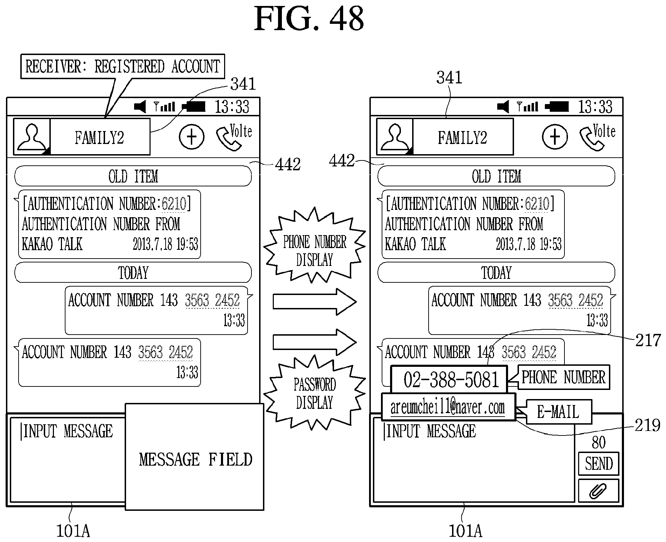

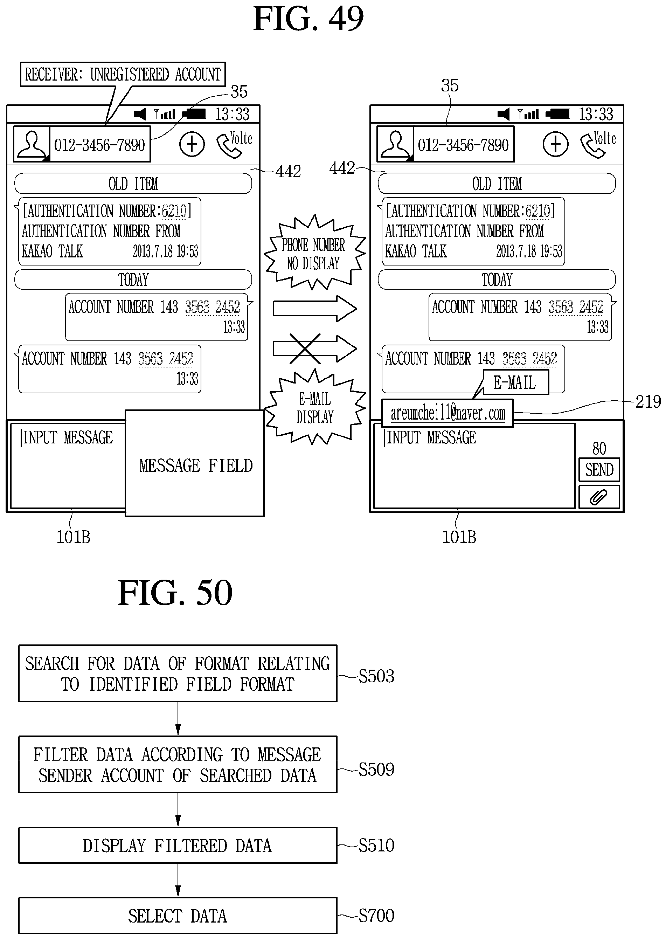

Moreover, the controller 180 may identify whether the identified receiver account is a registered account and filter searched data according to the identified receiver account (a registered account or an unregistered account). This will be described in more detail with reference to FIGs. 48 and 49.

When a message field 101 in the screen of an SNS app 442 is inputted, the controller may search for a phone number ("02-388-5081") 217 of FIG. 47 and an e-mail (areumcheil1@naver.com) 219 of FIG. 48, that is, text data relating to the message field 101.

When the phone number 217 and the e-mail 219 are found, the controller 180 identifies ("friend2" is a registered account and "012-3456-7890" is an unregistered account) a receiver account ("friend2" of FIG. 48 and "012-3456-7890" of FIG. 49) of the inputted message field 10.

Referring to FIG. 48, the receiver account of the message field 101 of FIG. 48 is "friend1" and "friend1" is an account pre-registered by the mobile terminal 100.

On the other hand, referring to FIG. 49, the receiver account of the message field 101 of FIG. 49 is "012-3456-7890" and "012-3456-7890" is an account unregistered by the mobile terminal 100.

As shown in FIG. 48, when the receiver account of the message field 101 is identified as a registered account, the controller 180 may control the touch screen 151 to display both the found phone number 217 and e-mail 219.

On the other hand, as shown in FIG. 49, when the receiver account of the message field 101 is identified as an unregistered account, the controller 180 may control the touch screen 151 not to display of the e-mail 219 of FIG. 48 among the found phone number 217 of FIG. 48 and e-mail 219 of FIG. 48 and display the phone number 217.

FIG. 50 is a flowchart illustrating a method of filtering data depending on a sender account of data.

Referring to FIG. 50, when data of a format relating to the format of an identified field is found in operation S503, the controller 180 filters the data according to the sender account of searched data in operation S509.

As one example of filtering data according to a sender account of searched data, in relation to first data transmitted from each registered account and second data transmitted from an unregistered account, even when both the first data and second data relating to a message field are all found, the controller 180 may control the touch screen 151 not to display of the second data transmitted from an unregistered account and display first data transmitted from a registered account.

Once the searched data is filtered, the controller 180 controls the touch screen 151 to display the filtered data in operation S510.

When the filtered data is displayed, the controller 180 may input a selection of specific data from the displayed data in operation S700.

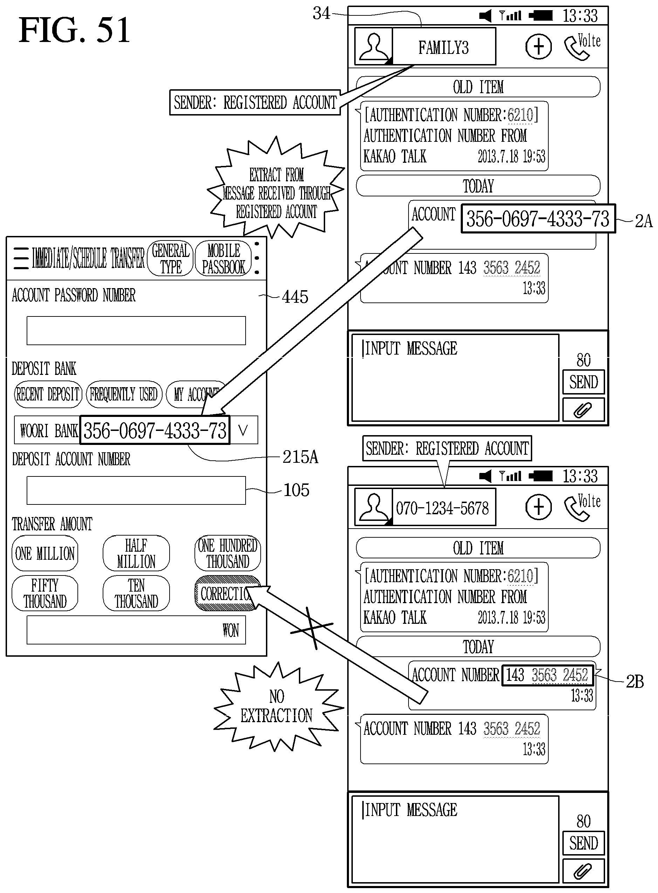

FIG. 51 is a screen illustrating a method of filtering data depending on a sender account of data.

Referring to FIG. 51, when a specific field 1 is inputted from the screen of a field app 4F, the controller 180 may identify the format (an account number format) of the specific field 1.

Once the format of the specific field 1 is identified, the controller 180 may search for data of a format relating to the format (an account number format) of the identified specific field 1 from the memory 170.

When first data ("356-0697-4333-73") 2A included in a message transmitted from a registered account ("friend3") and second data ("143-3563-2452") 2B included in a message transmitted from an unregistered account ("070-1234-5678") among at least one data (account number) stored in the memory 170 are found, the controller 180 may filter some data among the first data 2A and the second data 2B according to "message sender account of search data", that is, a predetermined condition.

In more detail, the controller 180 may identify the sender account of each data 2A and 2B from the first data 2A and the second data 2B.

As shown in FIG. 51, the controller 180 may recognize the sender account of the first data 2A as a registered account ("friend3") and may control the touch screen 151 to display the first data 2A transmitted from the registered account ("friend3").

On the other hand, as shown in FIG. 51, the controller 180 may recognize the sender account of the second data 2B as an unregistered account ("070-1234-5678") and may control the touch screen 151 not to display the second data 2B transmitted from the unregistered account ("070-1234-5678").

That is, the controller 180 may filter (or extract) some data transmitted from a predetermined account (in the case of FIG. 51, a registered account) from at least one data, and may control the touch screen 151 to display the filtered some data (in the case of FIG. 51, first data transmitted from a registered account).

In more detail, the controller 180 may not extract some data transmitted from a predetermined account from at least one data.

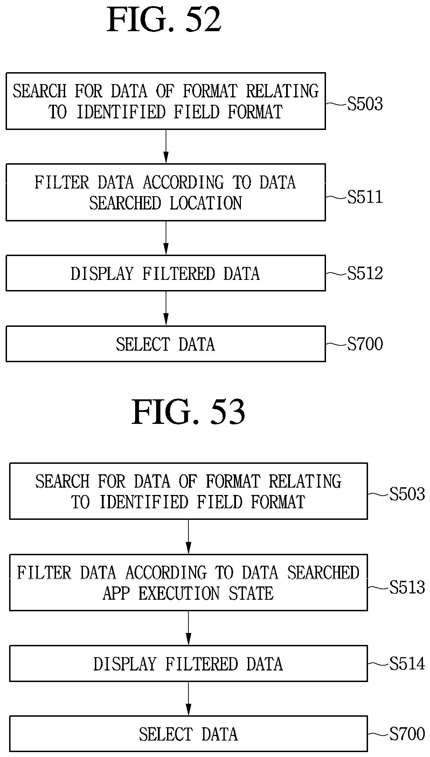

FIG. 52 is a flowchart illustrating a method of filtering data depending on a data search location.

Referring to FIG. 52, once the format of a inputted field is identified, the controller 180 searches for data of a format relating to the format of the identified field from the memory 170 in operation S503.

When at least one data is found from the memory 170, the controller 180 filters the data on the basis of the location where data is found among at least one searched data in operation S511.

For example, the controller 180 may filter data on the basis of the type of a data app including searched data or an execution state of a data app.

Once the data is filtered, the controller 180 controls the touch screen 151 to display the filtered data in operation S514.

When data is displayed, the controller 180 selects specific data from the displayed data in operation S700.

FIG. 53 is a flowchart illustrating a method of filtering data depending on an execution state of an app where data is found according to an embodiment of the present invention.

Referring to FIG. 53, when data of a format relating to the format of an identified field is found in operation S503, the controller 180 filters the data according to an execution state of a data app where data is found in operation S513.

For example, the controller 180 may display data included in an executed data app among data apps where data is found or may display data included in a data app executed right before the execution of a field app among data apps where data is found.

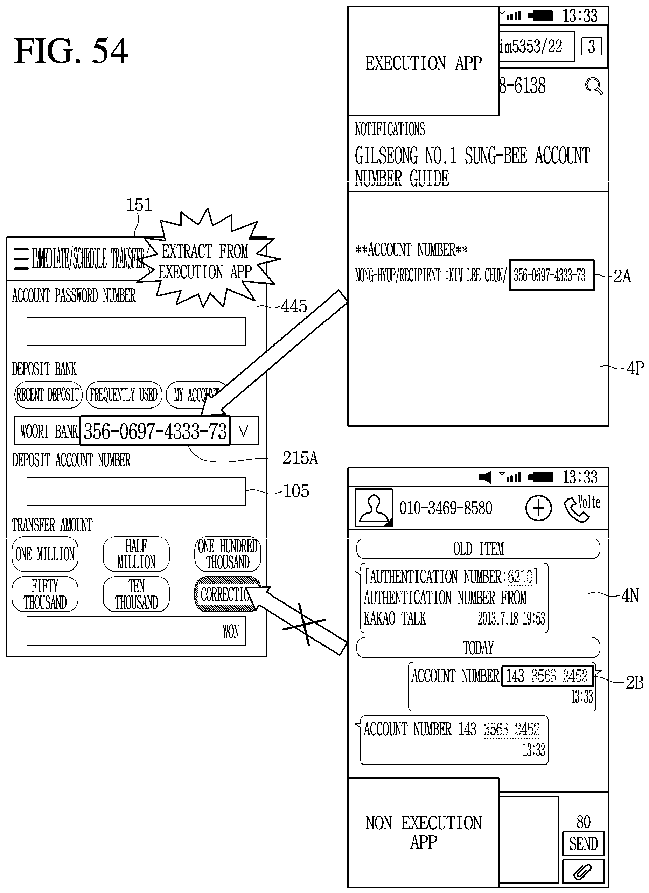

FIGs. 54 to 55 are screens illustrating an operation of filtering data depending on an execution state of an app where data is found according to an embodiment of the present invention.

Referring to FIG. 54, when a selection to a field 1 in a field app 4F is obtained and the format (an account number format) of the inputted field 1 is identified, the controller 180 may search for data (account number) of a format relating to the format (an account number format) of the identified field 1 from the memory 170.

As shown in FIG. 54, as an example of data (account number) of a format relating to the format (account number format) of the field 1, first data ("356-0697-4333-73") 2A included in an execution app 4P, that is, a data app that is executed already and second data ("143-3563-2452") 2B included in a non-execution app 4N, that is, a data app that is not executed yet, may be found.

Referring to FIG. 54, the controller 180 may filter data from the found first data 2A and second data 2B according to an execution state (whether it is executed or not) of an app where each of data 2A and 2B is found.

As shown in FIG. 54, the controller 180 may control the touch screen 151 to display the found first data 2A included in the execution app 4P among the first and second data 2A and 2B.

On the other hand, as shown in FIG. 54, the controller 180 may not display the found second data 2B included in the non-execution app 4N among the first and second data 2A and 2B.

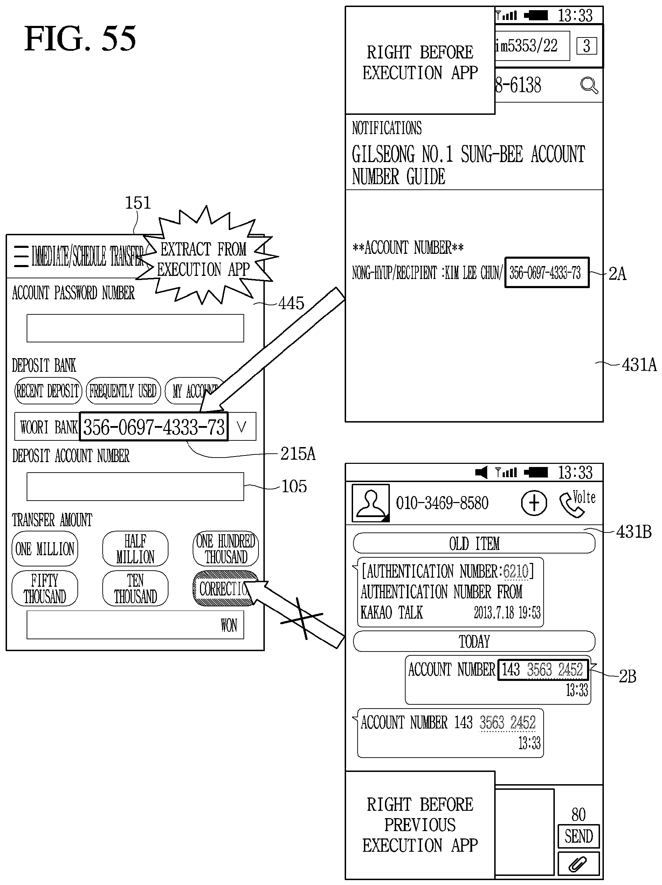

Referring to FIG. 55, when a selection to a field 1 in a field app 4F is obtained and the format (an account number format) of the inputted field 1 is identified, the controller 180 may search for data (account number) of a format relating to the format (an account number format) of the identified field 1 from the memory 170.

Referring to FIG. 55, when a selection to a field 1 in a field app 4F is obtained and the format (an account number format) of the inputted field 1 is identified, the controller 180 may search for data (account number) of a format relating to the format (an account number format) of the identified field 1 from the memory 170.

As shown in FIG. 55, as an example of data (account number) of a format relating to the format (account number format) of the field 1, first data ("356-0697-4333-73") 2A included in a previous execution app 431A, that is, a data app that is executed just before a field app including the inputted field 1, and second data ("132-3563-2452") 2B included in a right before previous execution app 431B, that is a data app executed previously right before an field app is executed, may be found.

Referring to FIG. 55, the controller 180 may filter data from the found first data 2A and second data 2B according to an execution state (the executed order) of an app where each of data 2A and 2B is found.

As shown in FIG. 55, the controller 180 may control the touch screen 151 to display the found first data 2A included in the previous execution app 431A among the first and second data 2A and 2B.

On the other hand, as shown in FIG. 55, the controller 180 may not display the found second data 2B included in the right before previous execution app 431B among the first and second data 2A and 2B.

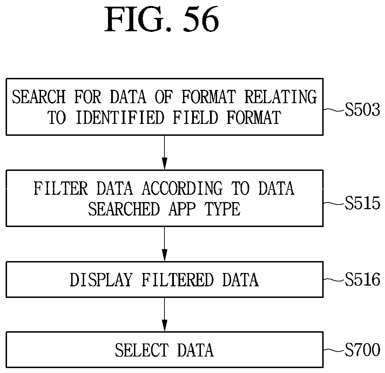

FIG. 56 is a flowchart illustrating a method of filtering data depending on the type of an app where data is found.

Referring to FIG. 56, when data of a format relating to the format of an identified field is found in operation S503, the controller 180 filters the data according to the type of a data app where data is found in operation S515.

For example, the controller 180 may display first data included in a first data app and may not display second data included in a second data app among data apps where data is found.

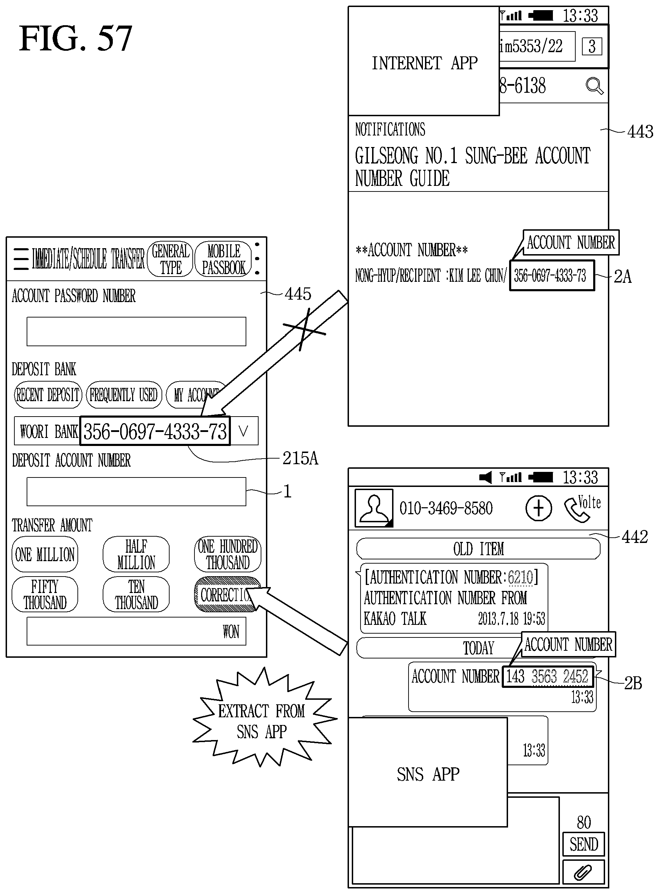

FIG. 57 is a screen illustrating an operation of filtering data depending on the type of an app where data is found.

Referring to FIG. 57, when a selection to a field 1 in a field app 4F is obtained and the format (an account number format) of the inputted field 1 is identified, the controller 180 may search for data (account number) of a format relating to the format (an account number format) of the identified field 1 from the memory 170.

As shown in FIG. 57, as an example of data (account number) of a format relating to the format (account number format) of the field 1, first data ("356-0697-4333-73") 2A included in an internet app 443 and second data ("143-3563-2452") 2B included in an SNS app 442 may be found.

The controller 180 may filter data from the found first data 2A and second data 2B according to the type of an app where each of data 2A and 2B is found.

The controller 180 may not display the found first data 2A included in the internet app 443 among the first and second data 2A and 2B. On the other hand, the controller 180 may control the touch screen 151 to display the found second data 2B included in the SNS app 442 among the first and second data 2A and 2B.

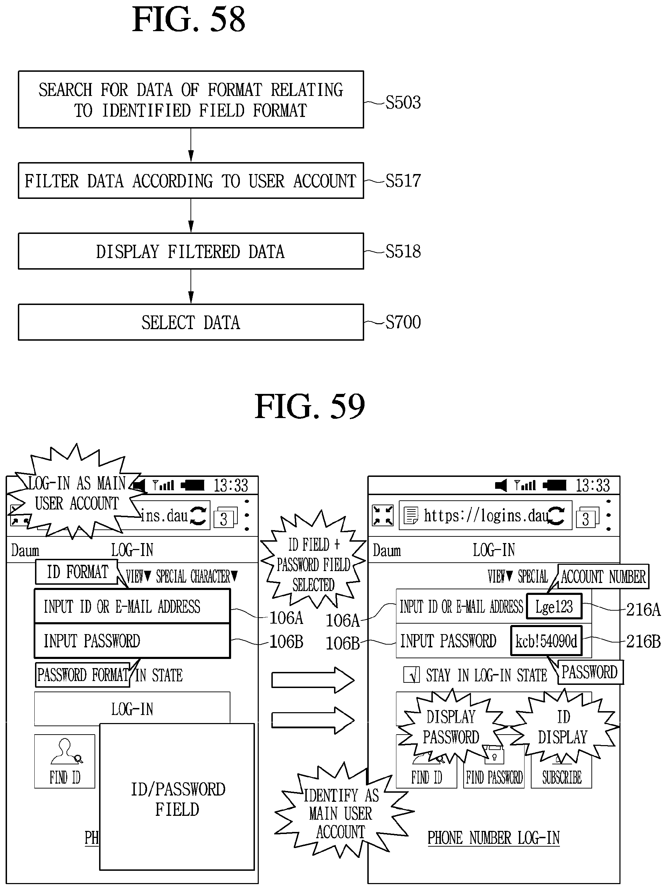

FIG. 58 is a flowchart illustrating a method of filtering data depending on a logged-in user account.

Referring to FIG. 58, when data of a format relating to the format of an identified field is found in operation S503, the controller 180 filters the data according to a logged-in user account in operation S517.

In more detail, the controller 180 may identify a logged-in user account, display some data corresponding to an identified user account among searched data, or not display the remaining data.

FIGs. 59 to 60 are screens illustrating an operation of filtering data depending on a logged-in user account.

Referring to FIG. 59, when an ID field 106A and a password field 106B in a field app 4F are inputted as a user logs in as "main user account", the controller 180 may identify the formats of the ID field 106A and the password field 106B.

When the format (ID) of the ID field 106A and the format (password) of the password field 106B are identified, the controller 180 may search for at least one ID and password respectively relating to the formats of the ID field 106A and the password field 106B.

When at least one ID and password are found, the controller 180 may control the touch screen 151 to display a found ID 216A and password 216B on the basis of the identified user account (main user account).

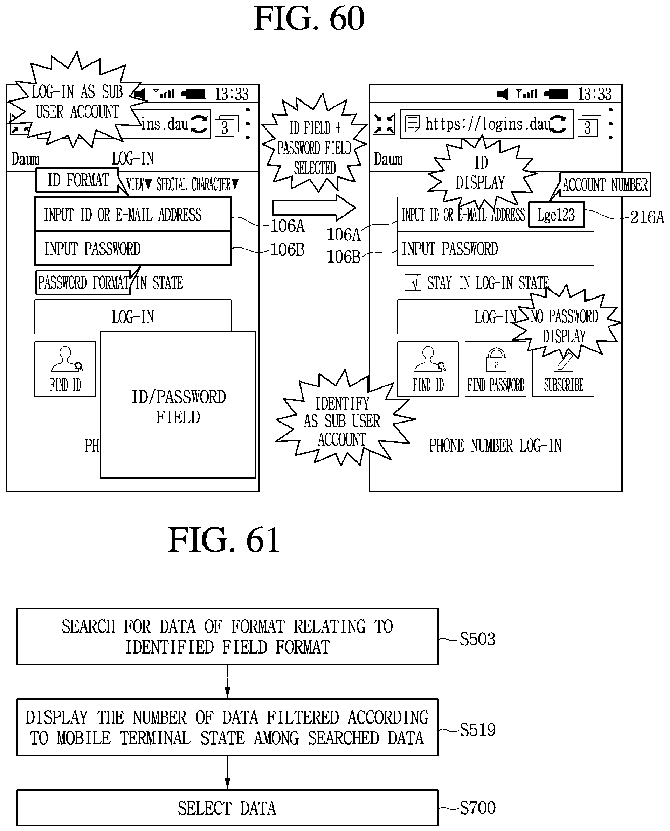

On the other hand, referring to FIG. 60, as a user is logged-in as "sub user account", when the ID 216A and the password 216B of a format relating to the formats of the ID field 106A and the password field 106B are found, the controller 180 may control the touch screen 151 not to display the password 216B among the found ID 216A and password 216B and display the ID 216A on the basis of the identified user account (sub user account).

FIG. 61 is a flowchart illustrating a method of filtering data depending on a state of a mobile terminal.

Referring to FIG. 61, once the format of a inputted field is identified, the controller 180 searches for data of a format relating to the format of the identified field from the memory 170 in operation S503 and may control the touch screen 151 to display the number of filtered data according to a state of a mobile terminal among the searched data.

For example, when a usage state of the current mobile terminal 100 is a first state, the controller 180 may control the touch screen 151 to display a less number of data than the number of data displayed when a usage state of the mobile terminal 100 is a second state that is lower than the first state.

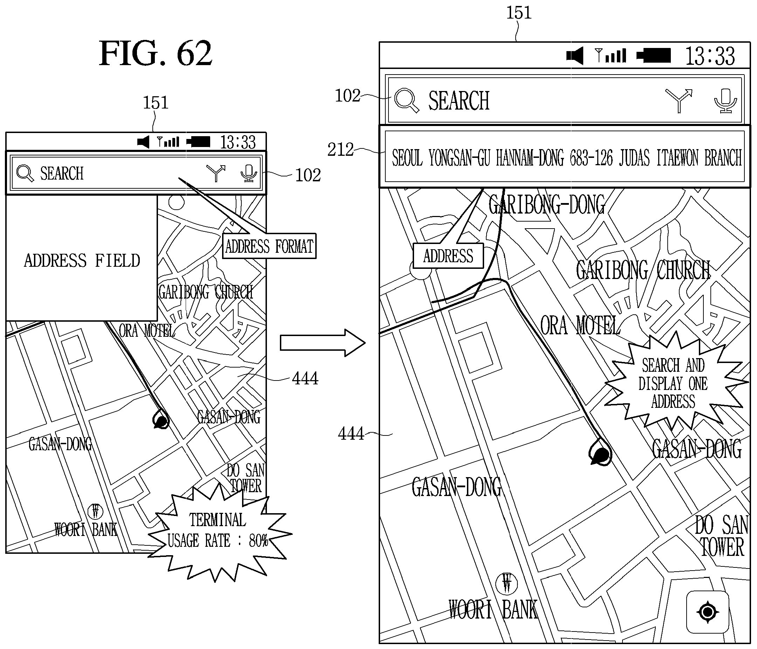

FIGs. 62 to 64 are screens illustrating an operation of filtering data depending on a state of a mobile terminal.

Referring to FIG. 62, the controller 180 may search for at least one data (address) relating to the format (address format) of the inputted field 1 from the memory 170 and may control the touch screen 151 to display a predetermined number (one) of data (addresses) 212 according to state information (terminal utilization ratio: 80%) of the currently identified mobile terminal 100 among the at least one searched data (address).

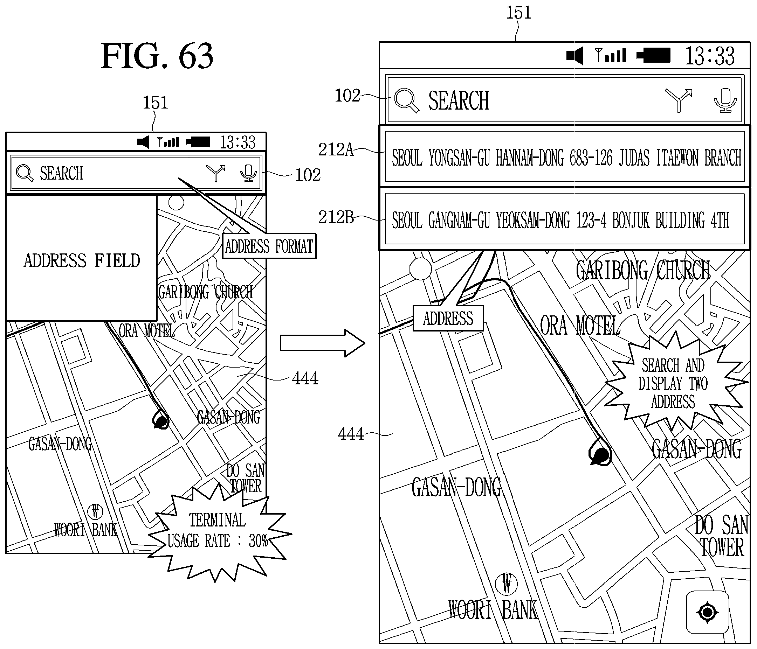

Referring to FIG. 63, the controller 180 may search for at least one data (address) relating to the format (address format) of the inputted field 1 from the memory 170 and may control the touch screen 151 to display a predetermined number (two) of data (addresses) 212A and 212B according to state information (terminal utilization ratio: 30%) of the currently identified mobile terminal 100 among the at least one searched data (address).

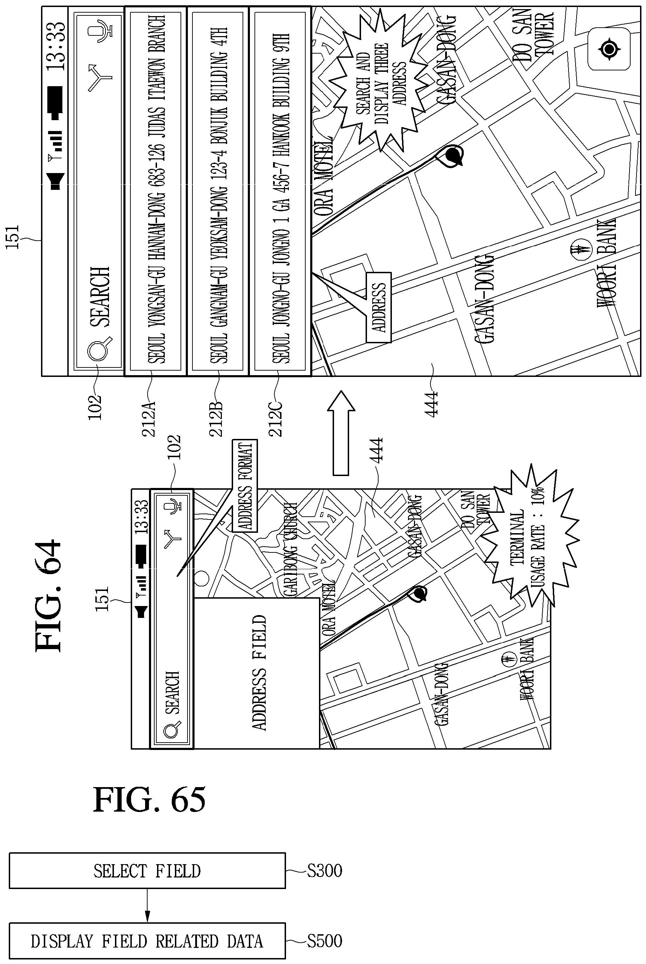

Referring to FIG. 64, the controller 180 may search for at least one data (address) relating to the format (address format) of the inputted field 1 from the memory 170 and may control the touch screen 151 to display a predetermined number (three) of data (addresses) 212A, 212B, and 212C according to state information (terminal utilization ratio: 10%) of the currently identified mobile terminal 100 among the at least one searched data (address).

Hereinafter, a method of displaying searched data will be described with reference to FIGs. 65 to 71.

FIG. 65 is a flowchart illustrating a display method.

Referring to FIG. 65, once a specific field is inputted from at least one displayed field in operation S300, the controller 180 may control the touch screen 151 to display data relating to the inputted specific field.

In more detail, when a specific field is inputted from displayed fields, the format of a selection field is identified, data having the same format as the identified field is found from the memory 170, and some data are filtered according to a predetermined condition from the searched data, the controller 180 may control the touch screen 151 to display the filtered some data according to a predetermined condition.

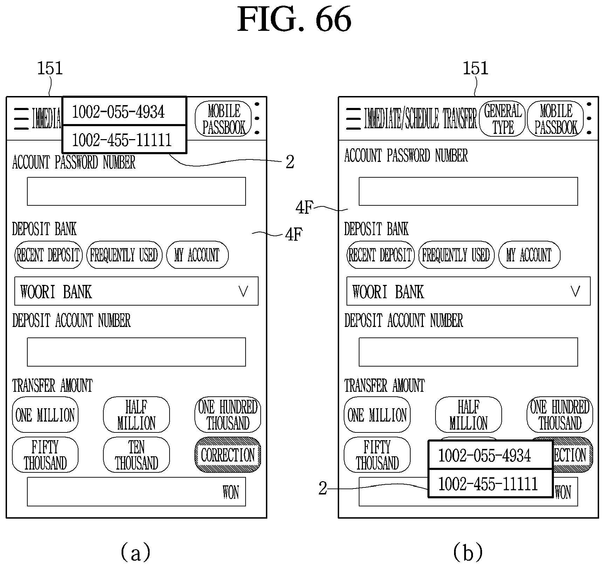

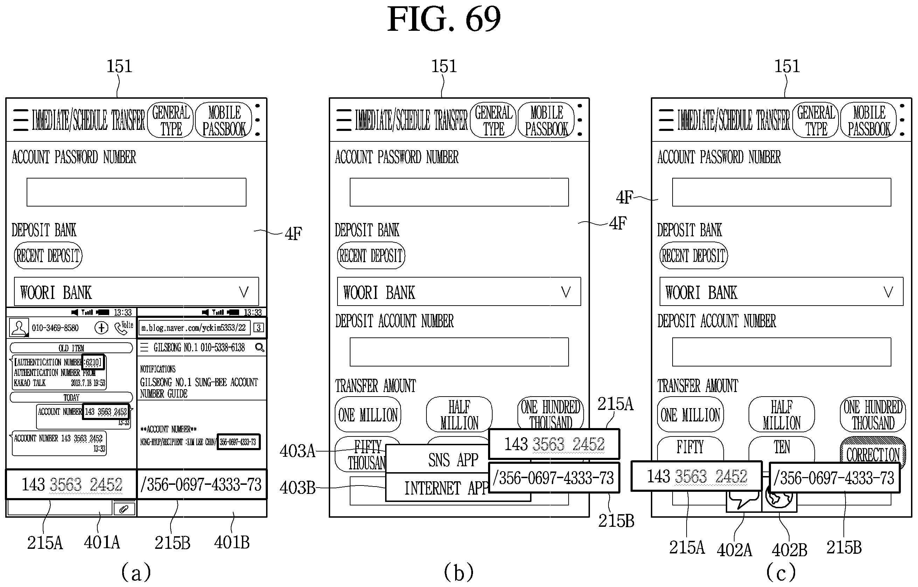

FIGs. 66 and 69 are screens illustrating a data display operation .

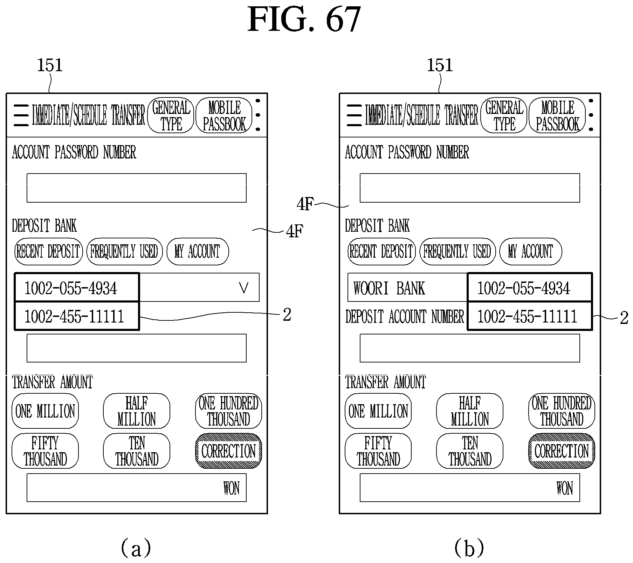

As shown in FIG. 66a, at least one data 2A and 2B relating to a field may be displayed at the upper end portion of the inputted field 1, or as shown in FIG. 66b, may be displayed at the lower end portion of the inputted field 1, as shown in FIG. 67a, may be displayed at the left portion of the inputted field 1, or as shown in FIG. 67b may be displayed at the right portion of the field 1.

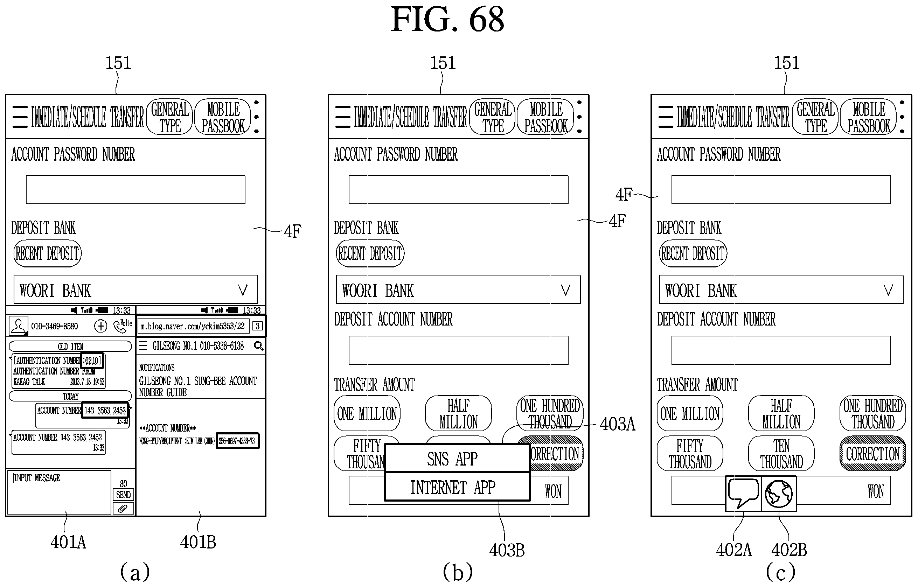

Additionally, although data may be displayed as it is as shown in FIGs. 66 and 67, as shown in FIG. 68, it may be displayed in the form of data identification information (app thumbnails 401A and 401B of FIG. 68a, app names 403A and 403B of FIG. 68b, and app icons 402A and 402B of FIG. 68c).

Additionally, referring to FIG. 69, data 2 may be displayed in the form of preview in addition to the data identification information 401, 402, and 403.

As shown in FIG. 69a, first data 2A may be displayed in addition to a first app thumbnail 401A corresponding to the first data 2A and second data 2B may be displayed in addition to a second app thumbnail 401B corresponding to the second data 2B.

Additionally, as shown in FIG. 69b, first data 2A may be displayed in addition to a first app name 403A corresponding to the first data 2A and second data 2B may be displayed in addition to a second app name 403B corresponding to the second data 2B.

Additionally, as shown in FIG. 69c, first data 2A may be displayed in addition to a first app icon 402A corresponding to the first data 2A and second data 2B may be displayed in addition to a second app icon 402B corresponding to the second data 2B.

Moreover, unlike the above description, while each of data 2A and 2B is not displayed, if a touch input to each of data identification information 401, 402, and 403 is obtained, the controller 180 may perform on the touch screen 151 to display each data 2A or 2B corresponding to each of data identification information 401, 402, and 403.

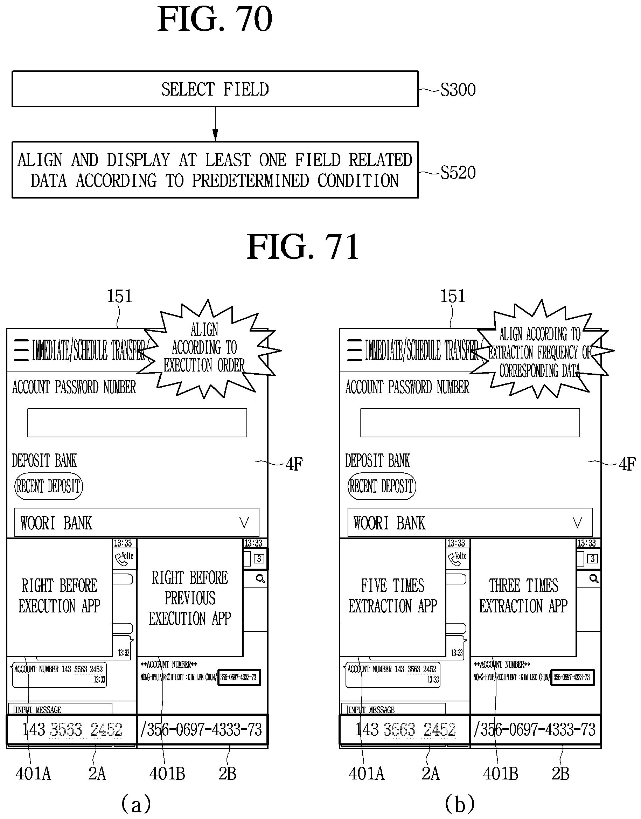

FIG. 70 is a flowchart illustrating a method of arranging and displaying data depending on a predetermined condition.

Referring to FIG. 70, once a specific field is inputted in operation S300, the controller 180 controls the touch screen 151 to arrange and display at least one data relating to the inputted specific field according to a predetermined condition in operation S520.

As one example, the controller 180 may control the touch screen 151 to arrange and display at least one data according to an execution state of an app including each data or the number of times that each data is extracted (or filtered).

FIGs. 71a to 71b are screens illustrating an operation of aligning and displaying data depending on a predetermined condition.

Referring to FIG. 71a, the controller 180 may align and display each of data 2A and 2B and identification information 401A and 401B of each data according to an execution order of an app including each of data 2A and 2B among the found first data 2A and second data 2B.

In more detail, the controller 180 may control the touch screen 151 to display the first data 2A and a first data app thumbnail 401A corresponding to the first data 2A, where an app including corresponding data among each of data 2A and 2B is a right before execution app executed right before the execution of the field app 4F, at the first position from the leftmost and display the second data 2B and a second data app thumbnail 401B corresponding to the second data 2B, where an app including corresponding data is a right before previous app executed previously right before, at the second position from the leftmost.

Referring to FIG. 71b, the controller 180 may align and display each of data 2A and 2B and identification information 401A and 401B of each data according to the number of times that each of data 2A and 2B among the found first data 2A and second data 2B is extracted.

In more detail, the controller 180 may control the touch screen 151 to display the first data 2A where corresponding data among each of data 2A and 2B is extracted five times and the first data app thumbnail 401A corresponding to the first data 2A at the first position from the leftmost and the second data 2B where corresponding data is extracted three times and the second data app thumbnail 401B corresponding to the second data 2B at the second position from the leftmost.

Hereinafter, a data selection method will be described with reference to FIGs. 72 to 81.

FIGs. 72 and 73 are flowcharts illustrating a data selection method.

Referring to FIG. 72, when data relating to a field is displayed, the controller 180 may input a selection of some data from at least one displayed data in operation S700.

In more detail, referring to FIG. 73, when data relating to a field is displayed, the controller 180 obtains a selection input through the touch screen 151 by using some data among at least one displayed data in operation S701.

For example, the touch screen 151 may sense a touch input to some data and the controller 180 may input touch inputted some data according to the sensed touch input.

When data is inputted by a selection input, the controller 180 inserts the inputted data into the inputted field in operation S900.

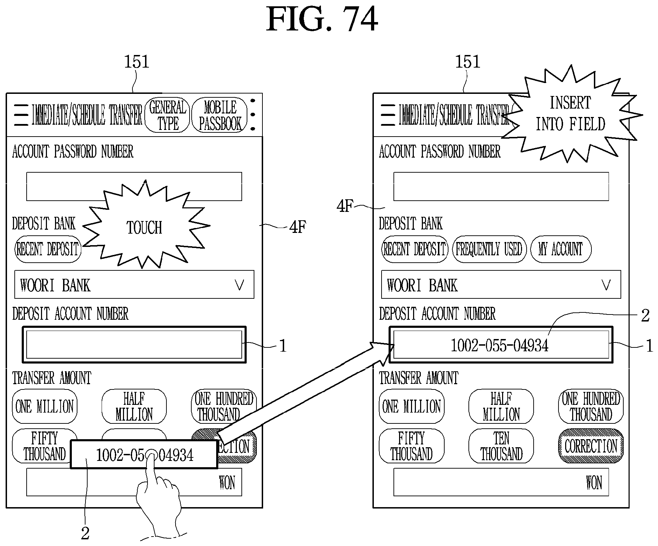

FIGs. 74 to 81 are screens illustrating a data selection operation.

As one example of a method of obtaining a selection input for data, as shown in FIG. 74, when a touch input to the displayed data 2 is sensed by the touch screen 151, the controller 180 may control the touch screen 151 to input the touch inputted data according to the sensed touch input and insert the inputted data 2 into the inputted field 1.

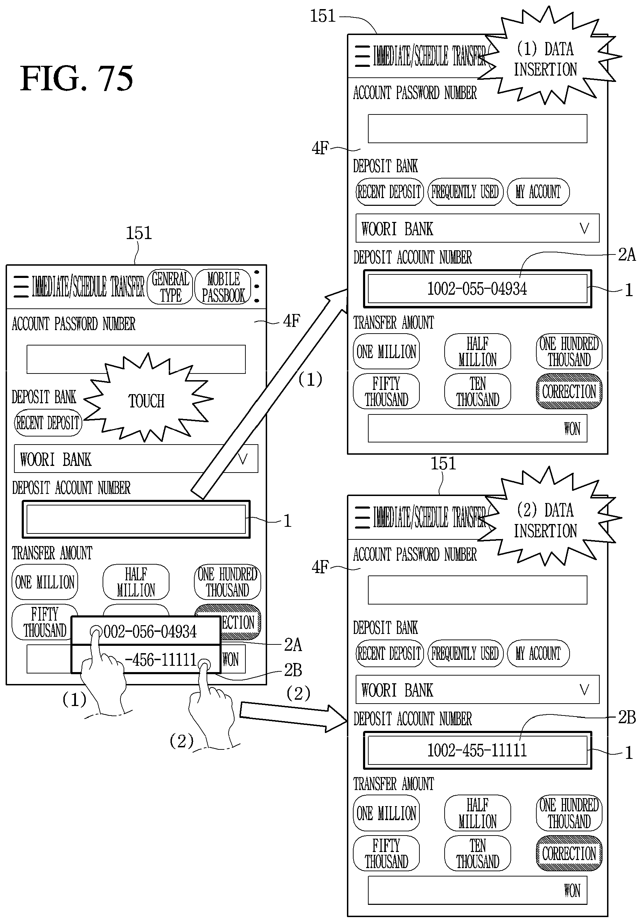

as shown in FIG. 75, when a double touch input "(1)" to the first data 2A among the displayed first data 2A and second data 2B is sensed by the touch screen 151, the controller 180 may insert the double touch inputted first data 2A to the inputted field 1 according to the double touch input "(1)" to the first data 2A.

Additionally, when a double touch input "(2)" to the second data 2B among the displayed first data 2A and second data 2B is sensed by the touch screen 151, the controller 180 may insert the double touch inputted second data 2B to the inputted field 1 according to the double touch input "(2)" to the second data 2B.

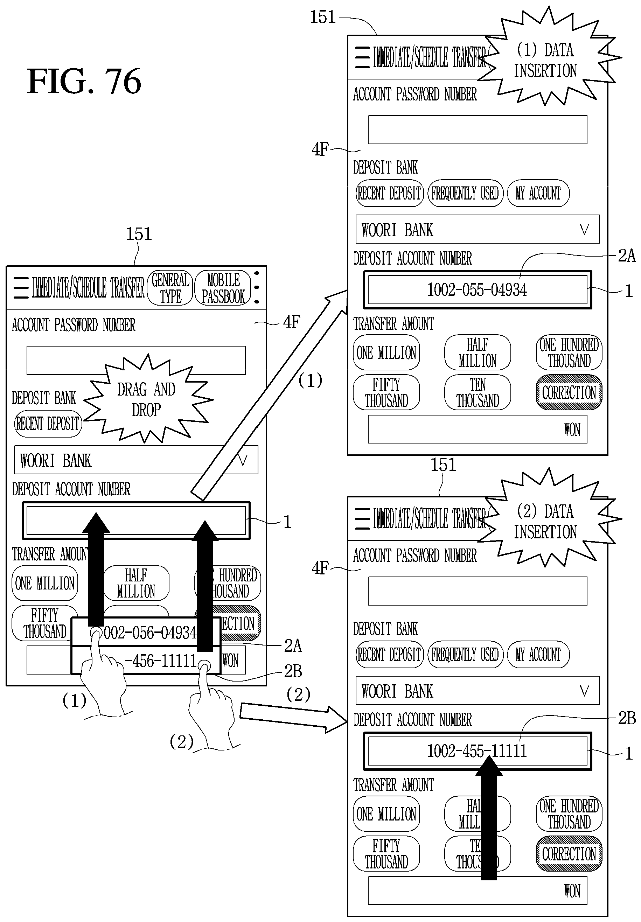

As another example of a method of obtaining a selection input for data, referring to FIG. 76, when a drag input "(1)" for moving the first data 2A among the displayed first data 2A and second data 2B to the field 1 is sensed by the touch screen 151, the controller 180 may insert the moved first data 2A to the inputted field 1 according to the drag input "(1)" for moving the first data 2A to the field 1.

Additionally, when a drag touch input "(2)" for moving the second data 2B among the displayed first data 2A and second data 2B to the field 1 is sensed by the touch screen 151, the controller 180 may insert the moved second data 2B to the inputted field 1 according to the drag input "(2)" for moving the second data 2B to the second field 1.

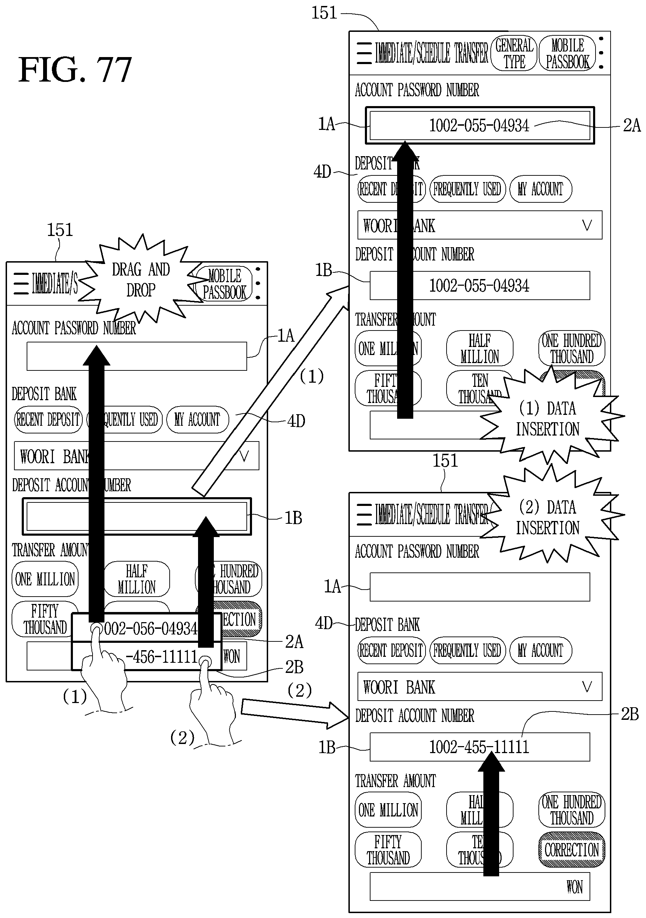

As another example of a method of obtaining a selection input for data, referring to FIG. 77, when a drag (drag and drop) input for moving the first data 2A to the first field 1A is sensed by the touch screen 151 as a plurality of fields 1A and 1B and a plurality of data 2A and 2B are displayed, the controller 180 may control the touch screen 151 to insert the moved first data 2A to the first field 1A according to the drag and drop input.

As a plurality of fields 1A and 1B and a plurality of data 2A and 2B are displayed, when a drag (drag and drop) input for moving the second data 2B to the second field 1B is sensed by the touch screen 151, the controller 180 may control the touch screen 151 to insert the moved second data 2B to the second field 1B according to the drag and drop input.

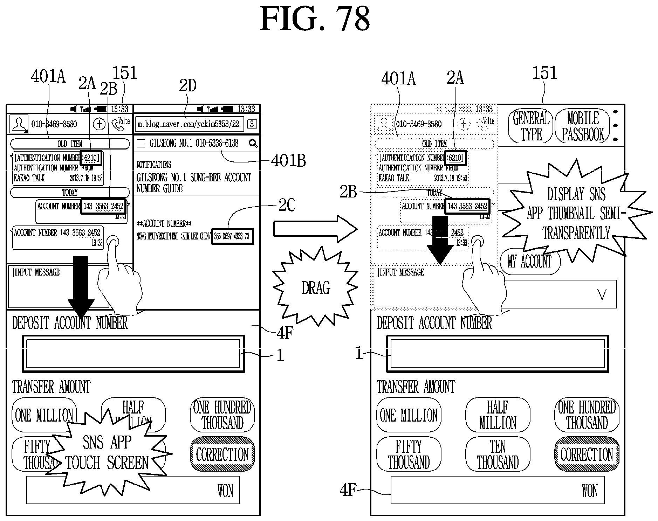

Referring to FIG. 78, when a touch input and a drag input to the first data app thumbnail 401A among the displayed first data app thumbnail 401A and second data app thumbnail 401B in the screen of the field app 4F are obtained, the controller 180 may move the first data app thumbnail 401A to a drag input direction according to the touch input.

Additionally, the controller 180 may control the touch screen 151 to distinguish the first data 2A and the second data 2B included in the first data app thumbnail 401A from another area in the first data app thumbnail 401A according to a touch input and display them.

Additionally, the controller 180 may control the touch screen 151 to display the reaming area other than the first data 2A and the second data 2B included in the first data app thumbnail 401A to be semi-transparent.

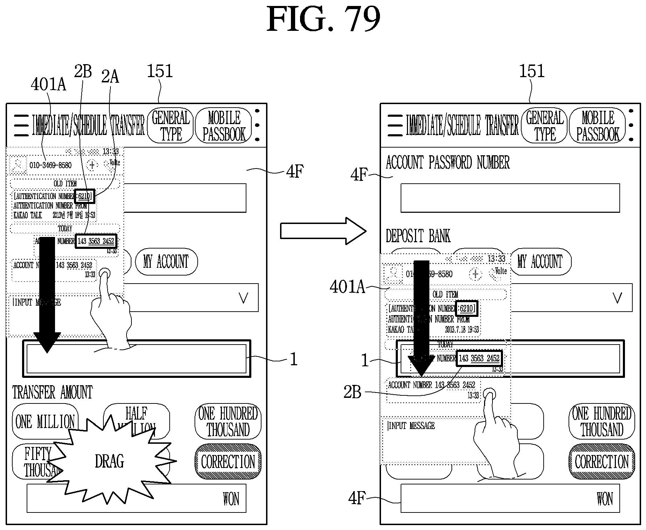

Referring to FIG. 79, when a drag input for moving the first data app thumbnail 401A through the touch screen 151 is sensed, the controller 180 may move the first data app thumbnail 401A in a direction of a drag input.

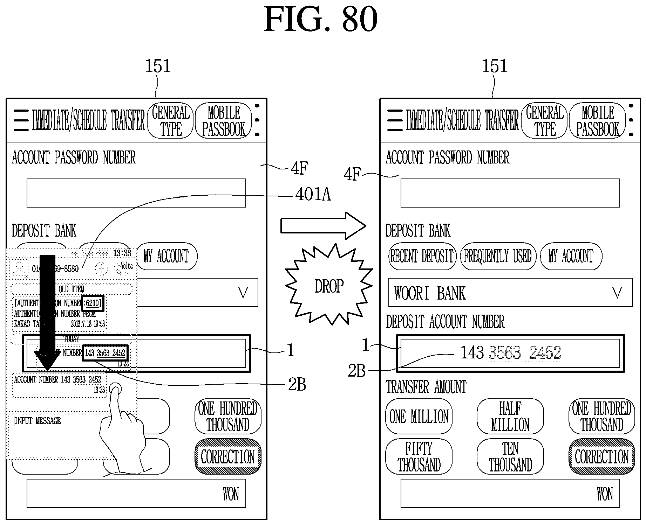

Referring to FIG. 80, when the second data 2B included in the first data app thumbnail 401A is moved within a predetermined distance according to a drag input, the controller 180 may perform on the touch screen 151 to distinguish the second data 2B from another area and display it.

When a drag input is released (or dropped) after the second data 2B is moved within a predetermined distance according to a drag input, the controller 180 may perform on the touch screen 151 to insert the moved second data 2B.

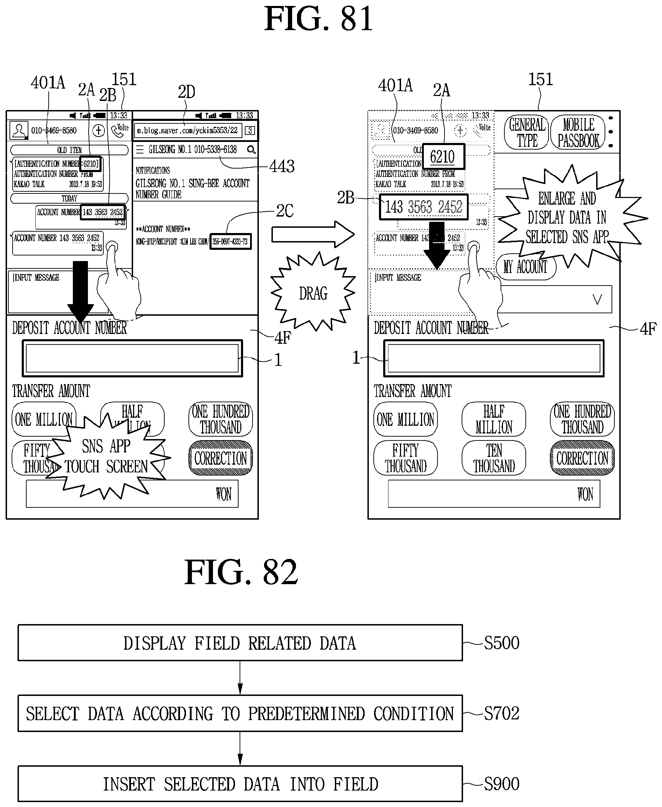

Referring to FIG. 81, the controller 180 may control the touch screen 151 to enlarge the first data 2A and the second data 2B included in the first data app thumbnail 401A and display them according to a touch input or a drag input to the fire data app thumbnail 401A.

Hereinafter, a method of automatically selecting data according to a predetermined condition will be described with reference to FIGs. 82 to 95.

FIG. 82 is a flowchart illustrating a method of automatically selecting data depending on a predetermined condition.

Referring to FIG. 82, when data relating to a field is displayed in operation S500, the controller 180 may input a selection of some data from at least one displayed data according to a predetermined condition in operation S702.

For example, the controller 180 may input a selection of some data from at least one data according to whether already inputted data exist, a sender account of each data, a data app including each data, a logged-in user account, or the number of times that each data is inputted previously.

When data is inputted according to a predetermined condition, the controller 180 inserts the inputted data into the inputted field in operation S900.

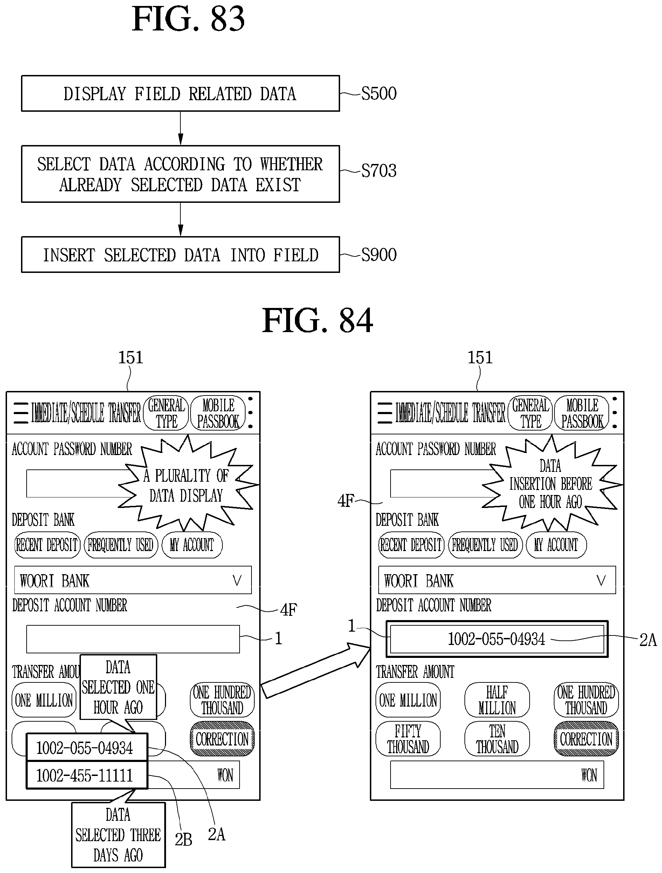

FIG. 83 is a flowchart illustrating a method of automatically selecting data depending on whether data is inputted already.

Referring to FIG. 83, when data relating to a field is displayed, the controller 180 may input a selection of some data from at least one data according to whether already inputted data exist in operation S703.

When some data are inputted, the controller 180 inserts the inputted data into the field in operation S900.

FIG. 84 is a screen illustrating an operation for automatically selecting data depending on whether data is inputted previously.

Referring to FIG. 84, when first data 2A and second data 2B relating to a field are displayed, the controller 180 may input a selection of the most recently inputted first data 2A among the first data 2A that is inputted one hour ago and the second data 2B that is inputted three days ago.

When the first data 2A is inputted, the controller 180 may insert the inputted first data 2A into the inputted field 1.

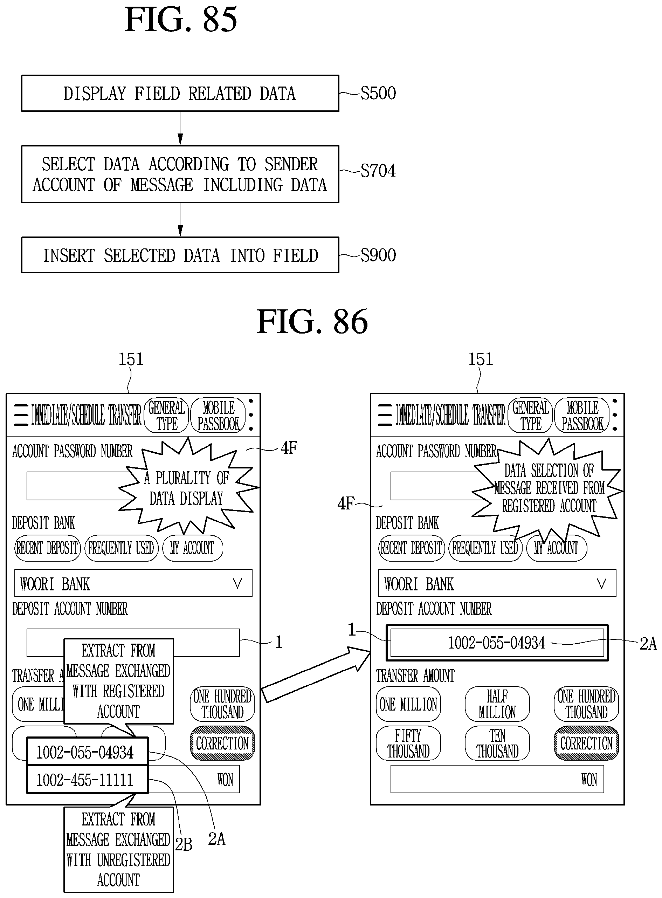

FIG. 85 is a flowchart illustrating a method of automatically selecting data depending on a sender account of data.

Referring to FIG. 85, when data relating to a field is displayed in operation S500, the controller 180 may input a selection of some data from at least one data according to a sender account of a message including each data in operation S704.

When some data are inputted, the controller 180 inserts the inputted data into the field in operation S900.

FIG. 86 is a screen illustrating an operation of automatically selecting data depending on a sender account of data.

Referring to FIG. 86, when first data 2A and second data 2B relating to a field are displayed, the controller 180 may input a selection of the first data 2A transmitted from the registered account from the first data 2A included in a message (or exchanged with a registered account) transmitted from a registered account and second data 2B included in a message (or exchanged with an unregistered account) transmitted from an unregistered account and may insert the inputted first data 2A into the field 1.

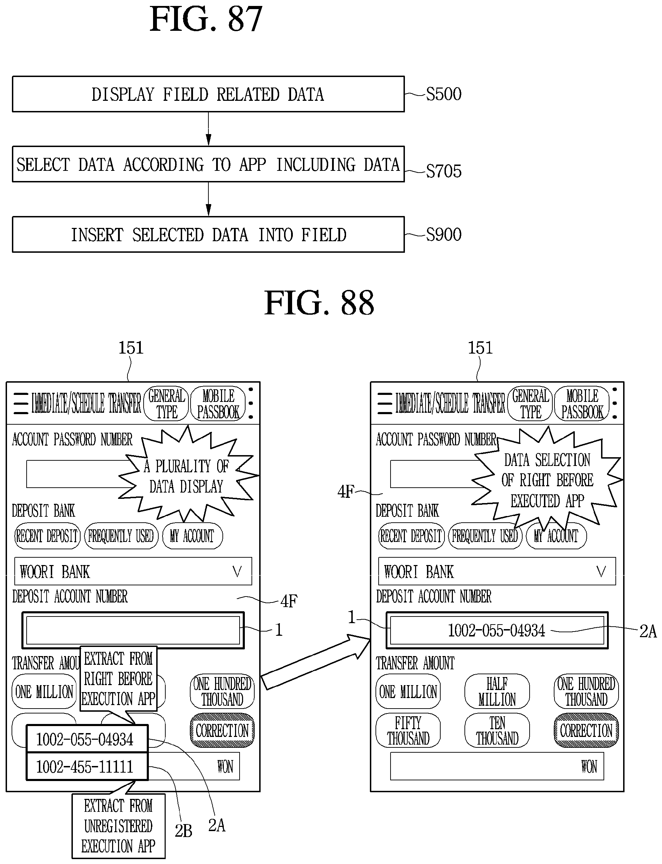

FIG. 87 is a flowchart illustrating a method of automatically selecting data depending on a data app.

Referring to FIG. 87, when at least one data relating to a field is displayed in operation S500, the controller 180 may input a selection of data according to a data app including each data in operation S705 and inserts the inputted data into a field in operation S900.

FIG. 88 is a screen illustrating an operation of automatically selecting data depending on a data app.

Referring to FIG. 88, when first data 2A and second data 2B relating to a inputted field are displayed, the controller 180 may control the touch screen 151 to input the first data 2A included in an app 431A executed right before the execution of a field app 4F from the first data 2A included (or extracted from a right before execution app) in a right before execution app 431A and second data 2B included in an un-execution app 4P not executed yet and insert the inputted first data 2A into a field 1.

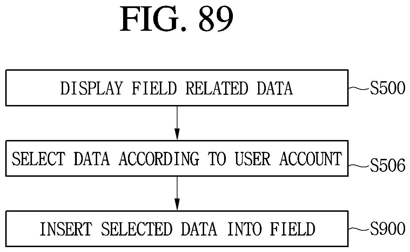

FIG. 89 is a flowchart illustrating a method of automatically selecting data depending on a user account.

Referring to FIG. 89, when at least one data relating to a field is displayed in operation S500, the controller 180 may input a selection of data according to a logged-in user account in operation S706 and inserts the inputted data into a field in operation S900.

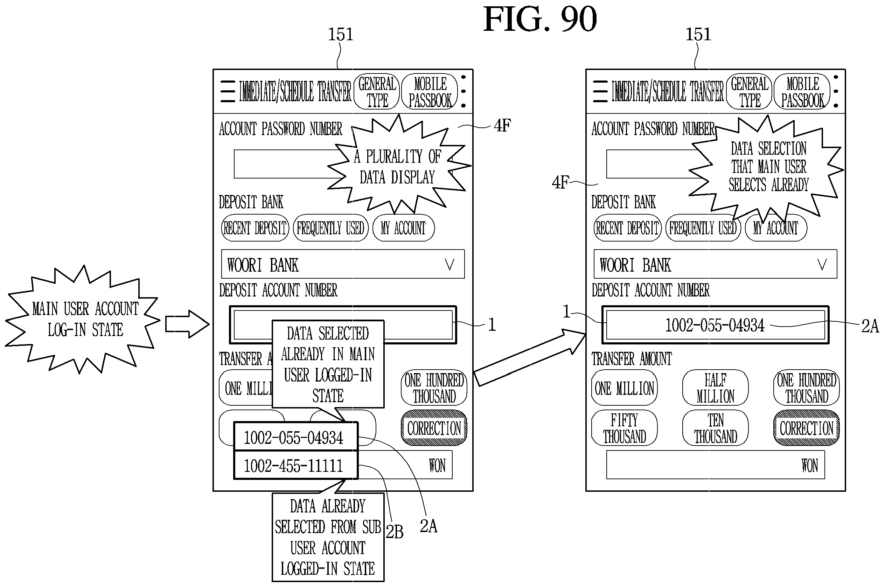

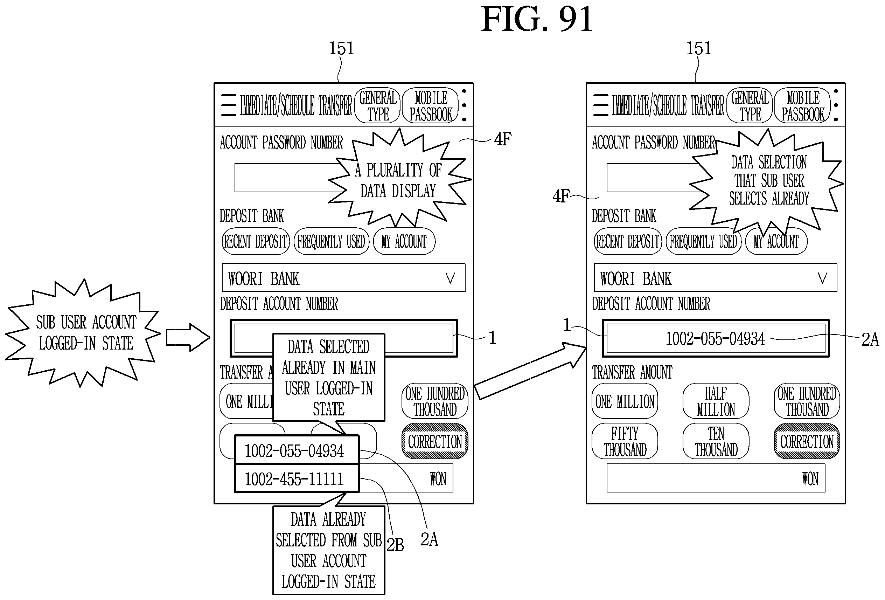

FIGs. 90 and 91 are screens illustrating an operation of automatically selecting data depending on a user account.

Referring to FIG. 90, as a main user account is logged-in through the mobile terminal 100, when first data 2A and second data 2B relating to a field 1 are displayed, the controller 180 may control the touch screen 151 to input the first data 2A that the currently logged-in main user account selects already from the first data 2A that is data already inputted previously in a main user account logged-in state and the second data 2B that is data already inputted in a sub user account logged-in state and insert the inputted first data 2A into the inputted field 1.

Unlike this, referring to FIG. 91, as a sub user account is logged-in through the mobile terminal 100, when first data 2A and second data 2B relating to a field 1 are displayed, the controller 180 may control the touch screen 151 to input the second data 2B that the currently logged-in sub user account selects already from the first data 2B that is data already inputted previously in a main user account logged-in state and the second data 2B that is data already inputted in a sub user account logged-in state and insert the inputted second data 2B into the inputted field 1.

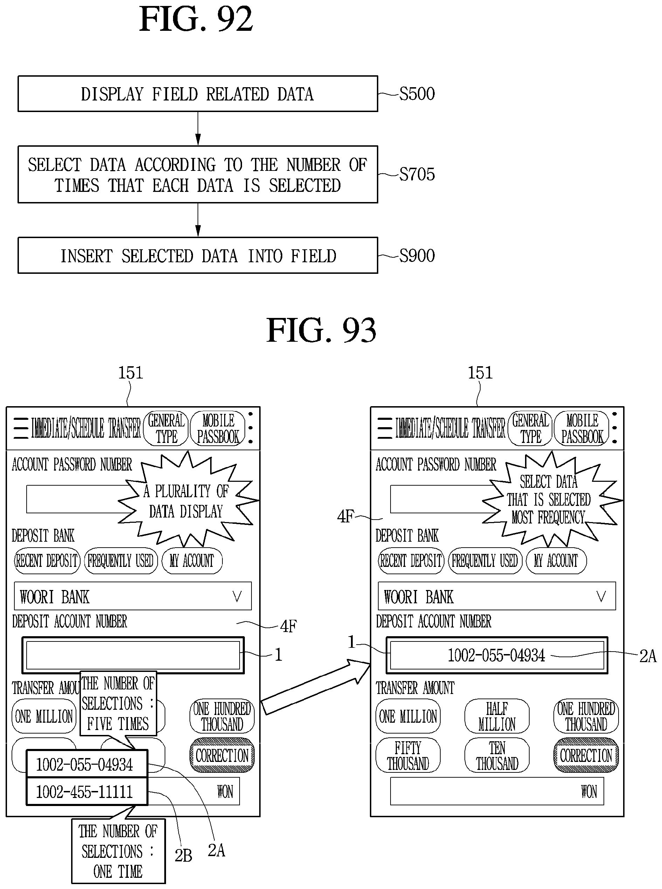

FIG. 92 is a flowchart illustrating a method of automatically selecting data depending on the number of times that data is inputted previously.

Referring to FIG. 92, when data relating to a field is displayed in operation S500, the controller 180 may input a selection of data according to the number of times that each data is inputted in operation S707 and inserts the inputted data into a field in operation S900.

FIG. 93 is a screen illustrating an operation for automatically selecting data depending on the number of times that that is inputted previously.

Referring to FIG. 93, when first data 2A and second data 2B relating to a field 1 are displayed, the controller 180 may control the touch screen 151 to input the first data 2A that is inputted more times from the first data 2A that is inputted five times previously and the second data 2B that is inputted one time previously to insert the first data 2A into the field 1.

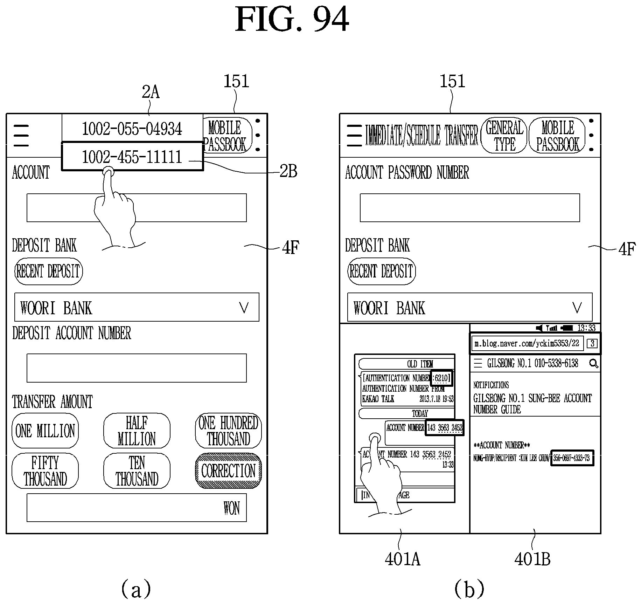

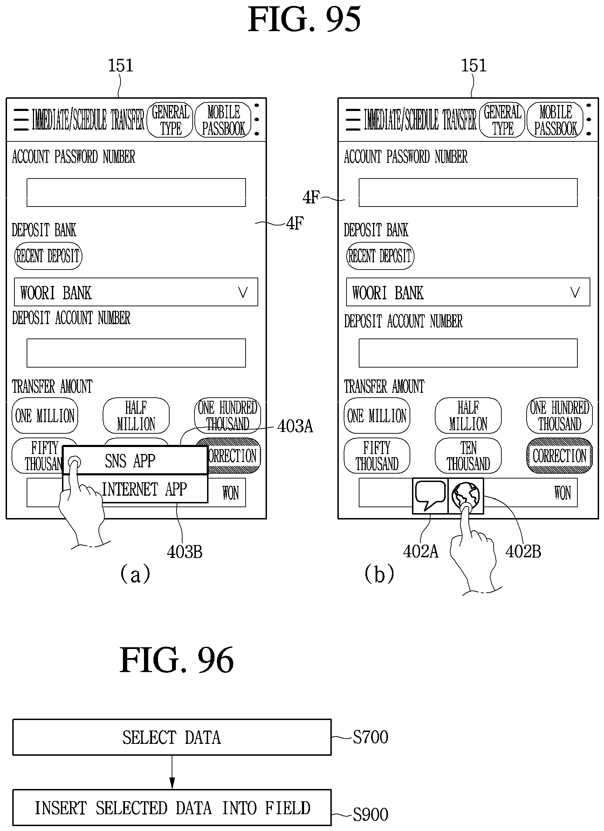

FIGs. 94 and 95 are screens illustrating various data selection operations.

Referring to FIG. 94a, when a touch input to second data 2B is sensed through the touch screen 151, the controller 180 may input a selection of the second data 2B according to the sensed touch input.

Referring to FIG. 94b, when a touch input to a first data app thumbnail 401A is sensed through the touch screen 151, the controller 180 may input a selection of first data corresponding to the first data app thumbnail 401A according to the sensed touch input.

Referring to FIG. 95a, when a touch input to a first data app name 403A is sensed through the touch screen 151, the controller 180 may input a selection of first data corresponding to the first data app name 403A according to the sensed touch input.

Referring to FIG. 95b, when a touch input to a second data app icon 402B is sensed through the touch screen 151, the controller 180 may input a selection of second data corresponding to the second data app icon 402B according to the sensed touch input.

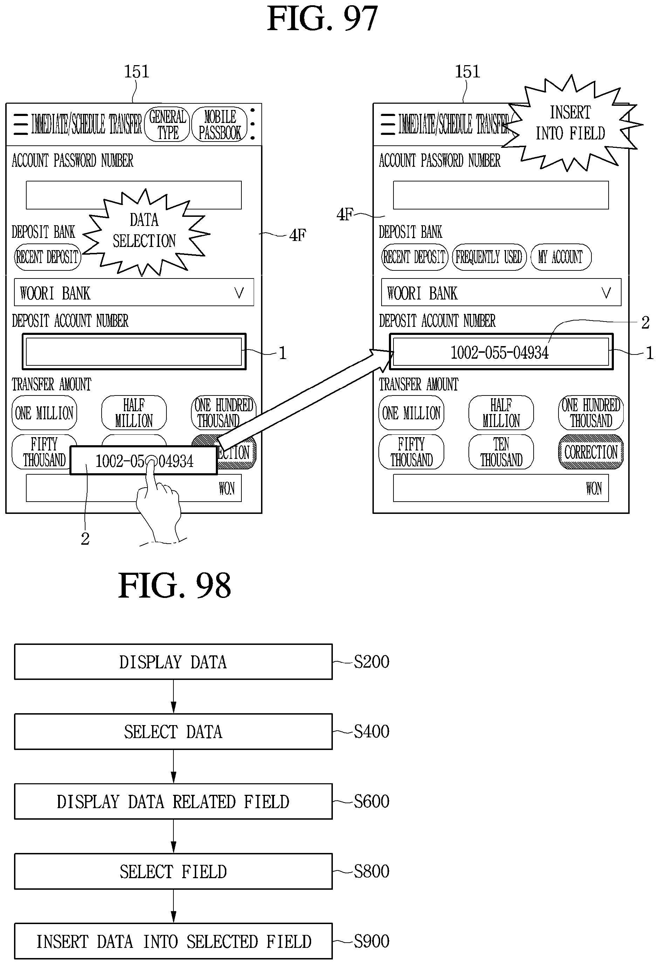

Hereinafter, a method of inserting inputted data into a field will be described with reference to FIGs. 96 and 97.

FIG. 96 is a flowchart illustrating a method of inserting inputted data into a field.

Referring to FIG. 96, when specific data is inputted according to a selection input through the touch screen 151 or a predetermined condition in operation S700, the controller 180 inserts the inputted data into a field in operation S900.

FIG. 97 is a screen illustrating an operation of inserting inputted data into a field.

As shown in FIG. 97, when data ("1002-055-04934") 2 is inputted according to a selection input (touch) through the touch screen 151 or a predetermined condition, the controller 180 may control the touch screen 151 to insert the inputted data 2 into the inputted field (account number field) 1.

Hereinafter, a method of inserting data into a field is described with reference to FIGs. 98 to 133.

FIG. 98 is a flowchart illustrating a method of inserting data into a field.

Referring to FIG. 98, the controller 180 of the mobile terminal 100 may obtain an execution command for an app (or a data app) including at least one data.

Once an execution command for data app is obtained, the controller 180 may execute a data app and may control the touch screen 151 to display at least one data in addition to a data app execution screen in operation S200.

When at least one data is displayed, the controller 180 obtains a selection of one or more data among at least one data in operation S400.

As one example of obtaining the field selection, the controller 180 may obtain a selection of a field through an input (e.g., touch) sensed by the touch screen 151 as at least one field.

As another example of obtaining the data selection, the controller 180 may input a selection of at least one data according to a predetermined condition (e.g., a user account recognized according to a predetermined gesture).

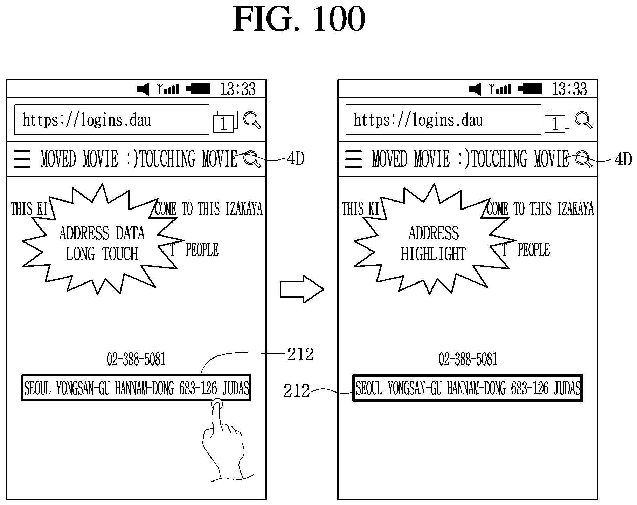

Detailed description for a method of obtaining a data selection is described later with reference to FIGs. 100 to 103.

FIG. 98 is referenced again.

When a field selection is obtained, the controller 180 displays at least one field relating to a inputted data (or at least one inputted data) in operation S600.

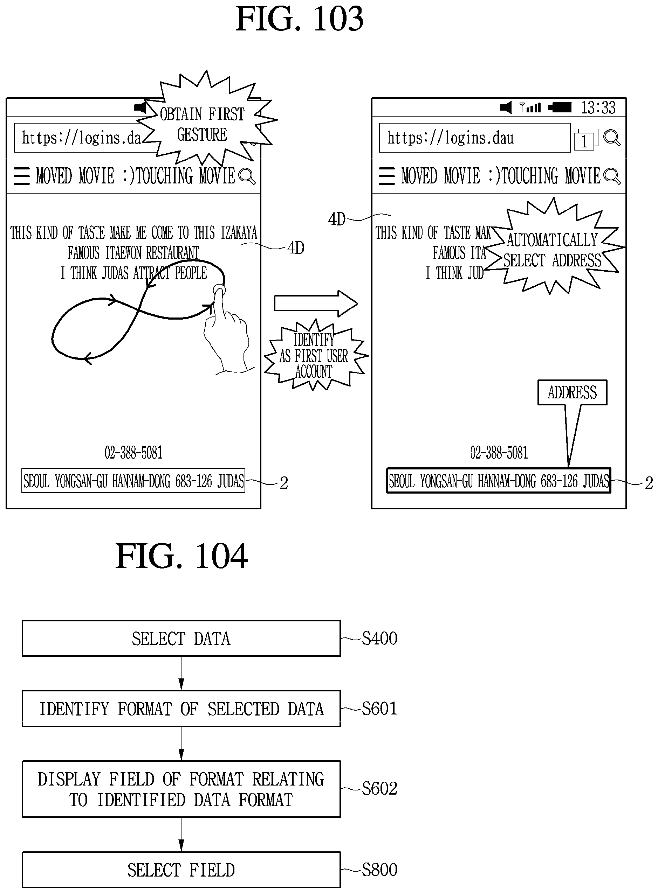

Detailed description for a method of displaying data related to inputted data is described later with reference to FIGs. 104 to 129.

Again, referring to FIG. 98, when at least one field relating to data is displayed, the controller 180 obtains a selection of at least one field among displayed fields in operation S800.

As one example of obtaining the field selection, the controller 180 may obtain a selection of a field through an input (e.g., double touch) sensed by the touch screen 151 as at least one field.

As another example, of obtaining the field selection, the controller 180 may input a selection of at least one field according to a predetermined condition (e.g., the type of an app including a field), and detailed description for a method of obtaining a field selection will be described later with reference to FIGs. 72 to 132 and FIG. 133.

Referring to FIG. 98 again, once a field selection is obtained, the controller 180 inserts the inputted data into the inputted field in operation S900.

As one example of inserting the inputted data into the inputted field, the controller 180 may insert the inputted data into the inputted field through a drag and drop input.

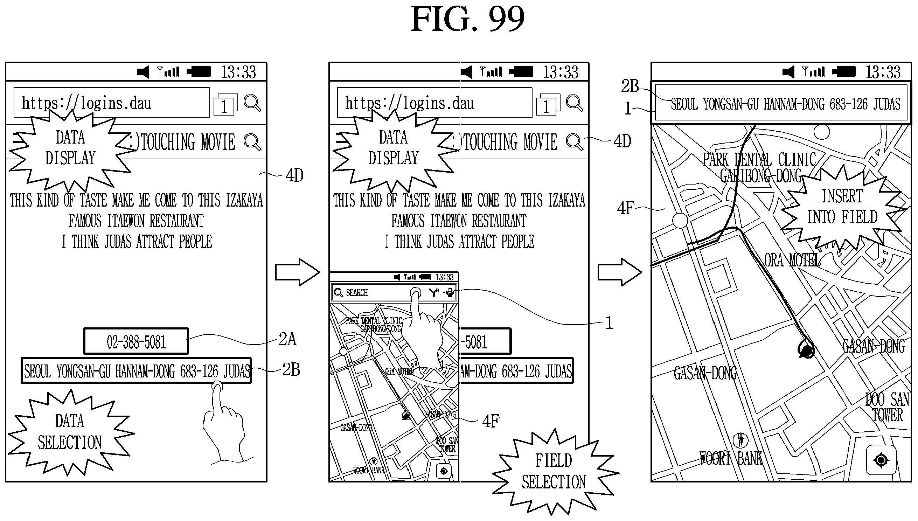

FIG. 99 is a screen illustrating an operation of inserting data into a field.

Referring to FIG. 99, when the screen of a data app 4D including first data 2A and second data 2B is displayed, the controller 180 may obtain a selection (a touch input to the second data 2B through the touch screen 151) of the second data 2B among at least one of the data 2A and 2B.

Once the selection to the second data 2B is obtained, the controller 180 may control the touch screen 151 to display a field 1 relating to the inputted second data 2B.

When a selection to the field 1 is obtained, the controller 180 may insert the inputted second data 2B into the inputted field 1.

Once the second data 2B is inserted into the inputted field 1, the controller 180 may control the touch screen 151 to include the second data 2B in the second field 1B and display it together.

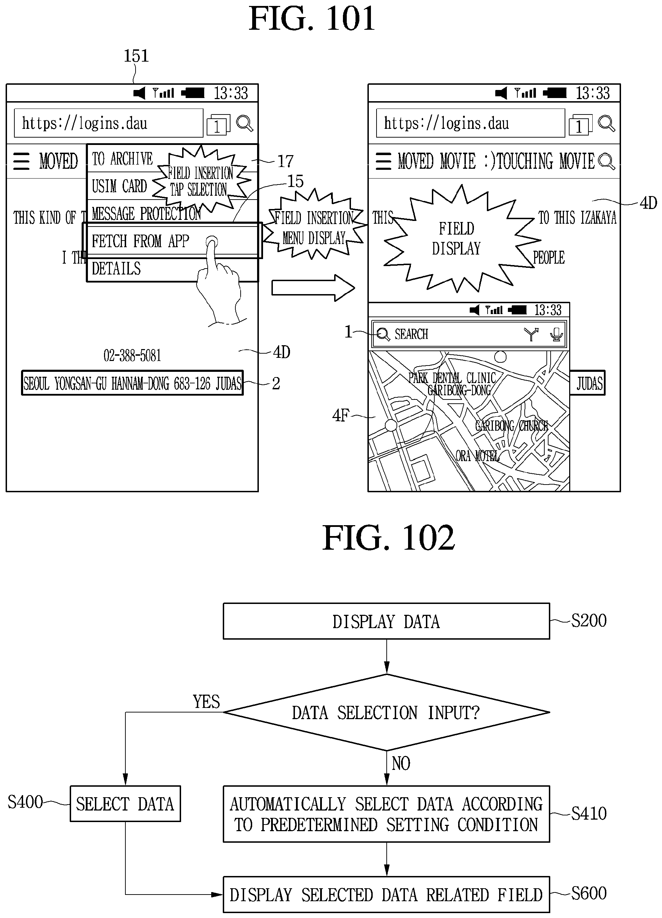

FIGs. 100 and 101 are screens illustrating a data search operation.

Referring to FIG. 100, when a long touch input to data ("Seoul Yongsan-gu Hannam-dong 683-126 Judas Itaewon branch") 2 included in a data app 4D is sensed through the touch screen 151, the controller 180 may control the touch screen 151 to highlight and display the inputted data 2 according to the long touch input.

Referring to FIG. 101, once the selection (touch) input of data 2 included in a data app 4D is obtained, the controller 180 may control the touch screen 151 to display a field insertion menu 17 according to the data selection input.

Once the selection of a field insertion tap 15 in a field insertion menu 17 is obtained, the controller 180 may control the touch screen 151 to display a field 1 relating to data 2 according to the selection of the field insertion tap 15.

Hereinafter, a method of automatically selecting specific data from a plurality of data according to a predetermined condition will be described with reference to FIGs. 102 and 103.

FIG. 102 is a flowchart illustrating a method of automatically selecting data depending on a predetermined condition.

Referring to FIG. 102, the controller 180 displays at least one data through the touch screen 151 in operation S200.

When a selection input to a specific data among at least one displayed data is obtained through the touch screen 151, the controller 180 may input a selection of specific data according to the selection input in operation 400 and controls the touch screen 151 to display a field relating to the inputted data.

On the other hand, when a selection input to specific data is not obtained through the touch screen 151, the controller 180 may input a selection of specific data from at least one data according to a predetermined condition in operation S410.

The predetermined condition may include the type of a recognized user account and the present invention is not limited thereto.

Once specific data is inputted according to a predetermined condition, the controller 180 controls the touch screen 151 to display at least one field relating to the inputted specific data in operation S600.

FIG. 103 is a screen illustrating an operation of automatically selecting data depending on a user account.

Referring to FIG. 103, when the screen of the data app 4D including data (address, "Seoul Yongsan-gu Hannam-dong 683-126 Judas Itaewon branch") is displayed, a first gesture is obtained through the touch screen 151, the controller 180 may identify a user account of the mobile terminal 100 as the first user account.

When the user account of the mobile terminal 100 is identified as the first user account, the controller 180 may input a selection of data (address) 2 corresponding to the identified first user account.

Hereinafter, a method of searching for a field relating to data will be described with reference to FIGs. 104 to 115.

FIG. 104 is a flowchart illustrating a method of searching for a field relating to data and displaying it.

Referring to FIG. 104, once data is inputted in operation S400, the controller 180 identifies the format of the data in operation S601.

As one example, when the inputted data is text, the controller 180 may identify the format of the inputted text as a text format.

As another example, when the inputted field is an address, the controller 180 may identify the format of the inputted address as an address format.

As another example, when the inputted data is data, the controller 180 may identify the format of the inputted content as a content format and the present invention is not limited thereto.

Once the format of the inputted data is identified, the controller 180 controls the touch screen 151 to display a field of a format relating to the format of the identified data in operation S602.

In more detail, the controller 180 may search for a field having the same format as the identified data from the memory 170 and control the touch screen 151 to display the found field.

When the found field is displayed, the controller 180 may input a selection of at least one field from displayed field in operation S800.

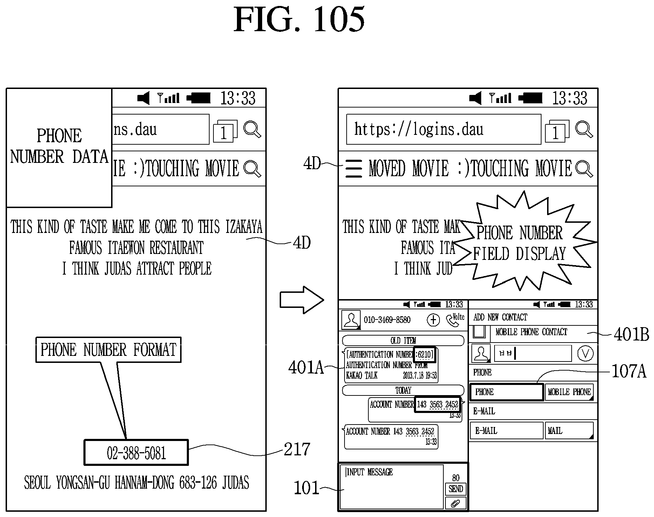

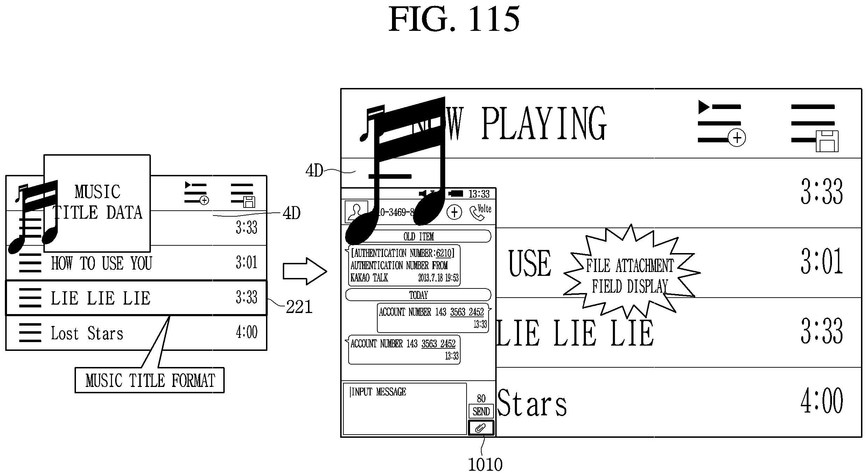

FIGs. 105 and 115 are screens illustrating an operation for searching for a field relating to data.

Referring to FIG. 105, a phone number 217 in a data app 4D is data of a phone number format and as an example of a field including a phone number format, a message field 101 that is a field of a text format, a thumbnail 401A of an app including a message field, a phone number field 107A that is field of a phone number format, an app thumbnail 401B including a phone number field, or a search window field (not shown) that is a field of a text format may be included.

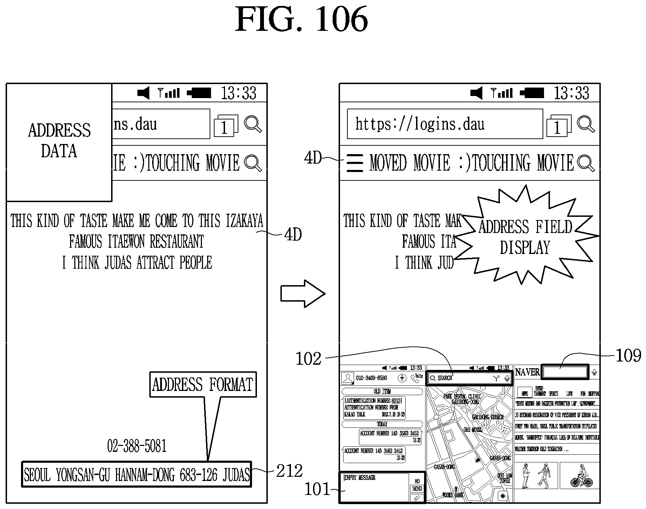

Referring to FIG. 106, an address 212 in the data app 4D is data of an address format and as an example of a field including an address format, a message field 101, an address field 102 that is a field of an address format, or a search window field 109 may be included.

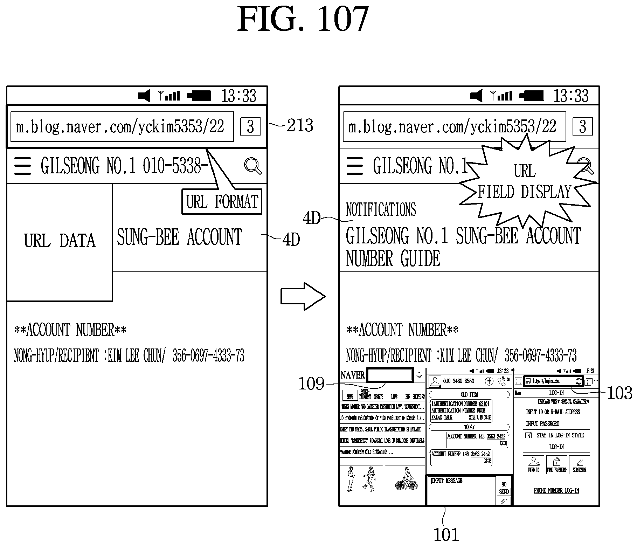

Referring to FIG. 107, a URL 213 in the data app 4D is data of a URL format and as an example of a field including a URL format, a message field 101, a search window field 109, or a URL field 103 that is a field of a URL format may be included.

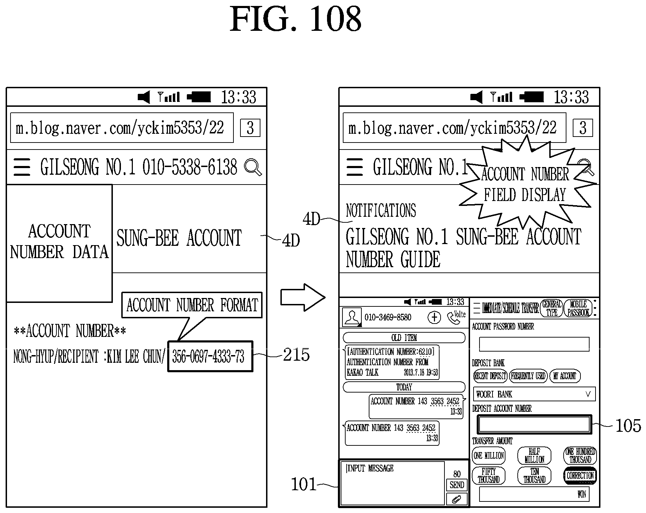

Referring to FIG. 108, an account number 215 in the data app 4D is data of an account number format and as an example of a field including an account number format, a message field 105 or an account number field 105 that is a field of an account number format may be included.

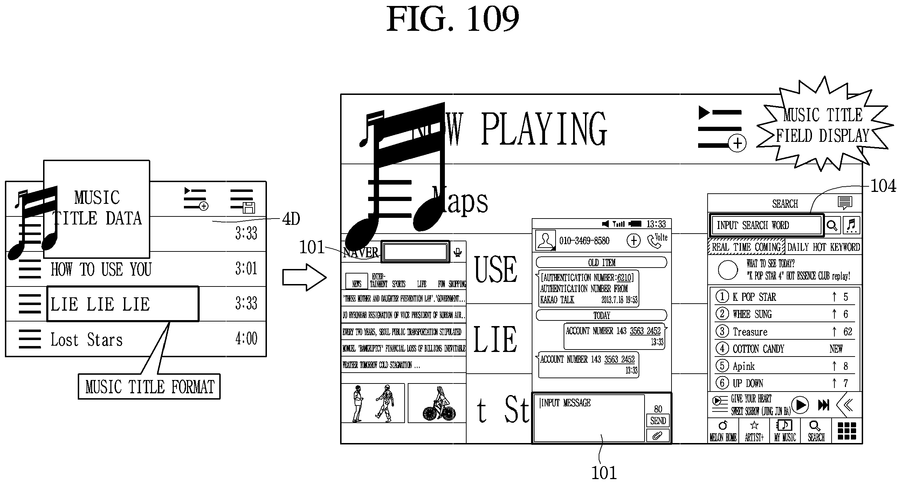

Referring to FIG. 109, a music title 214 is data of a music title format and as an example of a field including a music title format, a message field 101, a search window field 109, or a music title field 104 that is a field of a music title format may be included.

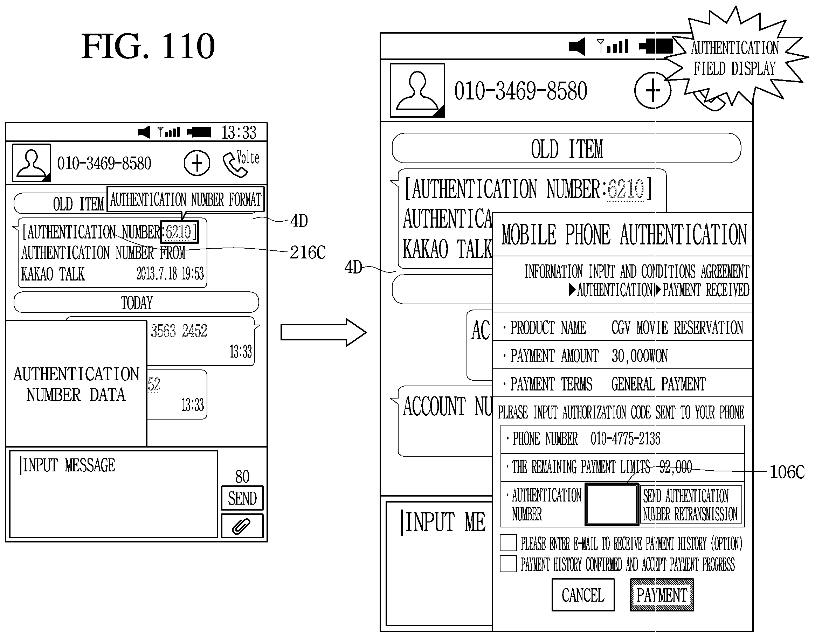

Referring to FIG. 110, an authentication number 216C is data of an authentication number format and as an example of a field including an authentication number format, a message field (not shown), a search window field (not shown), or an authentication number field 106C that is a field including an authentication number format may be included.

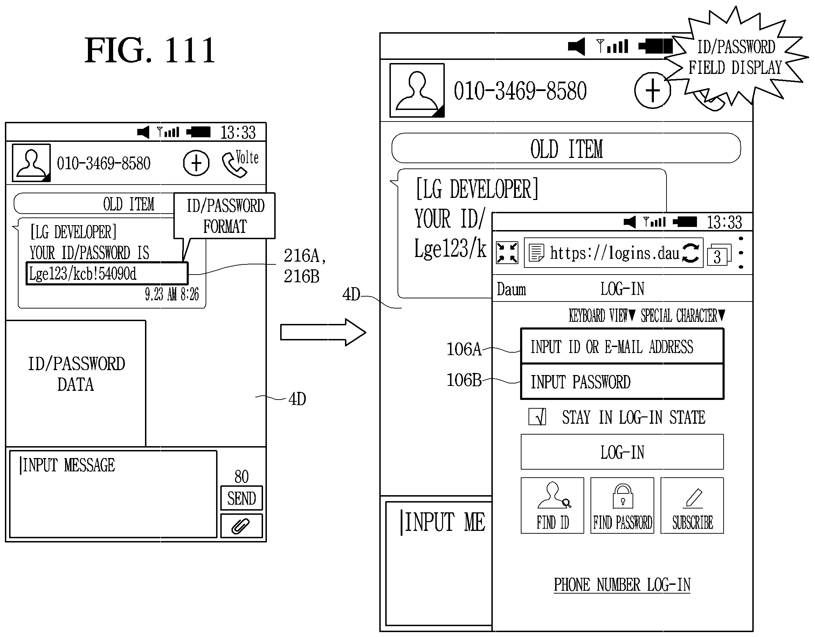

Referring to FIG. 111, an ID 216A and a password 216B are data of an ID format and data of a password format, respectively and as an example of a field including an ID format, a message field (not shown), a search window field (not shown), or an ID field 106A that is a field including an ID format may be included. Additionally, as an example of a field including a password format, a message field (not shown), a search window field (not shown), or a password field 106B that is a field including a password format may be included.

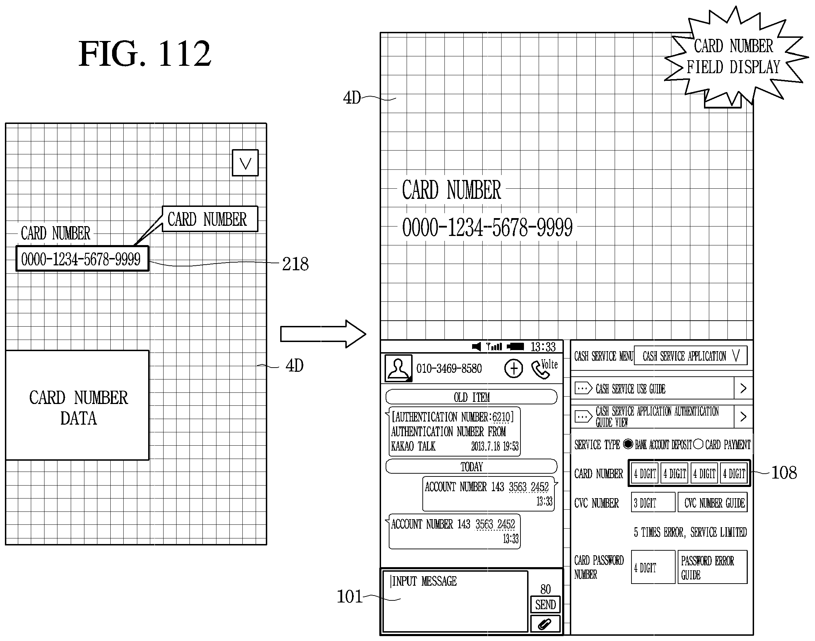

Referring to FIG. 112, a card number 218 is data including a card number format and as an example of a field including a card number format, a message field 101, a search window field (not shown), or a card number field 108 that is a field including a card number format may be included.

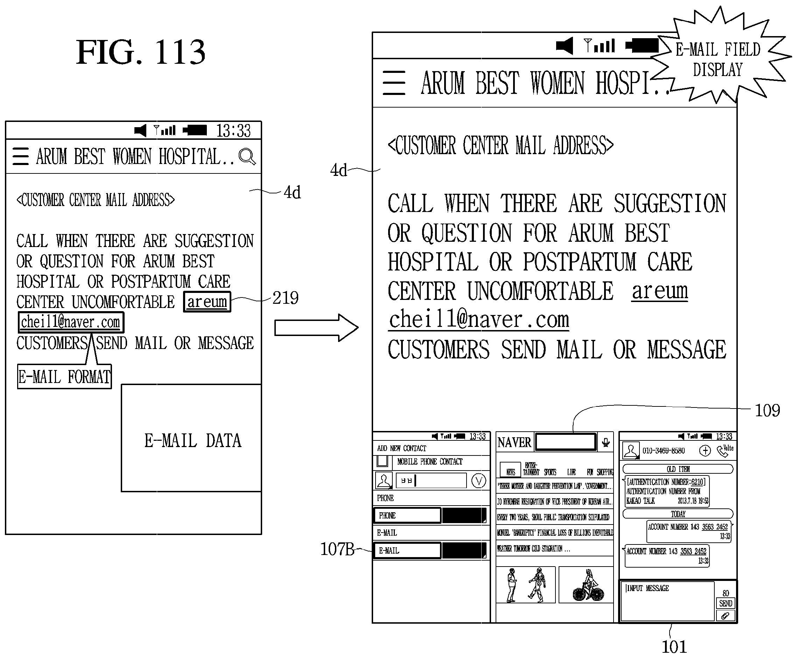

Referring to FIG. 113, an e-mail 219 is data including an e-mail format and as an example of a field including an e-mail format, a message field 101, a search window field 109, or an e-mail field 219 that is a field including an e-mail format may be included.

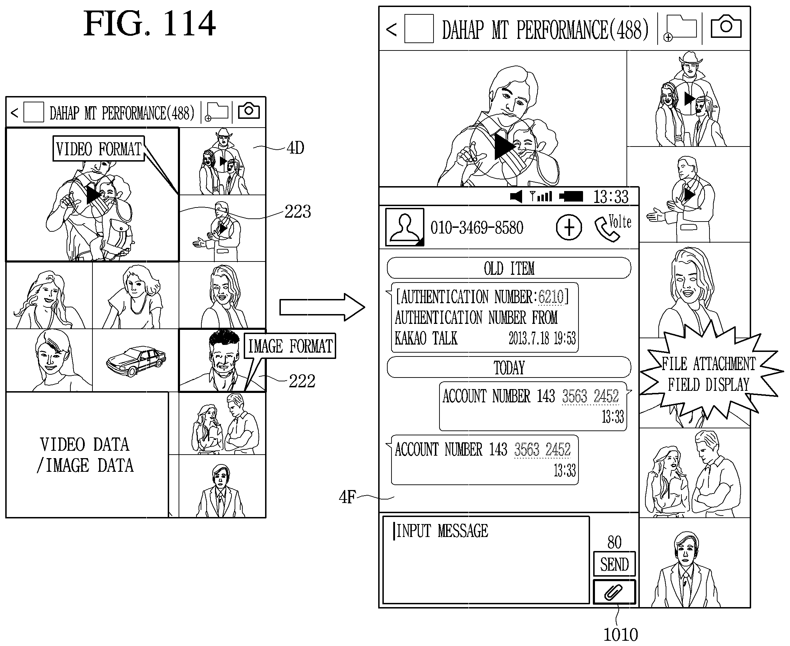

Referring to FIG. 114, a video 223 and an image 222 are data including a content format and as an example of a field including a content format, a file attachment field (or content attachment field) 1010 may be included.

Referring to FIG. 115, a music 221 is data including a content format and as an example of a field including a content format, a file attachment field 1010 may be included.

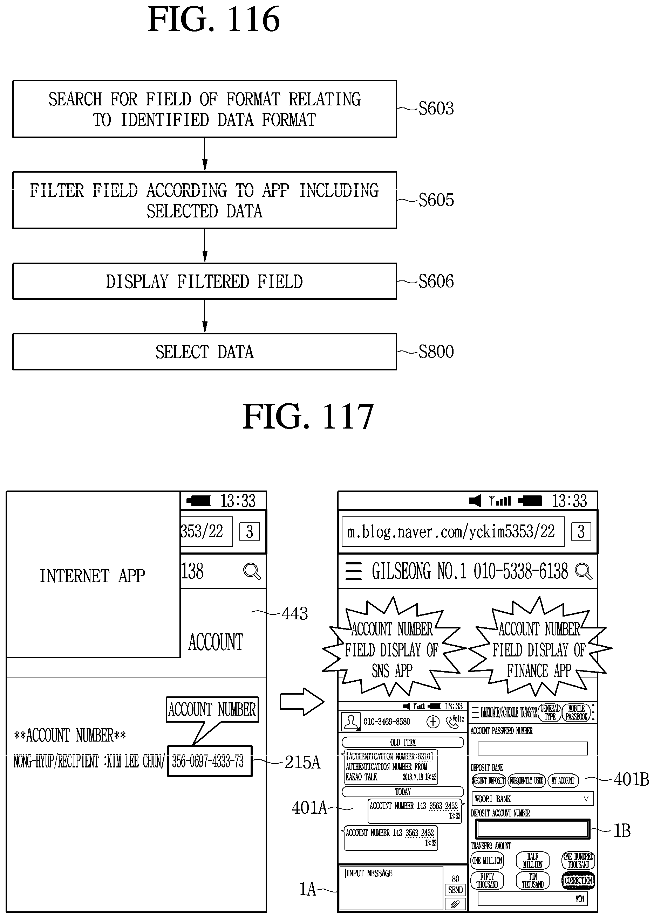

Hereinafter, a method of filtering a field according to a predetermined condition will be described with reference to FIGs. 116 to 128.

FIG. 116 is a flowchart illustrating a method of filtering a field depending on the type of a data app.

Referring to FIG. 116, when a field of a format relating to the format of an identified field is found in operation S603, the controller 180 filters the field according to an app (or a data app) including a inputted data in operation S605.

As an example of an app (or a data app) including data, message app, SNS app, internet app, map app, finance app, contact app, memo pad app, music listening app, or gallery app may be included.

As one example of filtering a field according to a data app, in relation to a first app and second app including both first data and second data, the controller 180 may control the touch screen 151 to display a first field relating to the first data and a second field relating to the second data in addition to a first app screen or display only the first field relating to the first data in addition to a second app screen.

Once the field is filtered, the controller 1800 controls the touch screen 151 to display the filtered field and may obtain a selection on the displayed fields in operation S800.

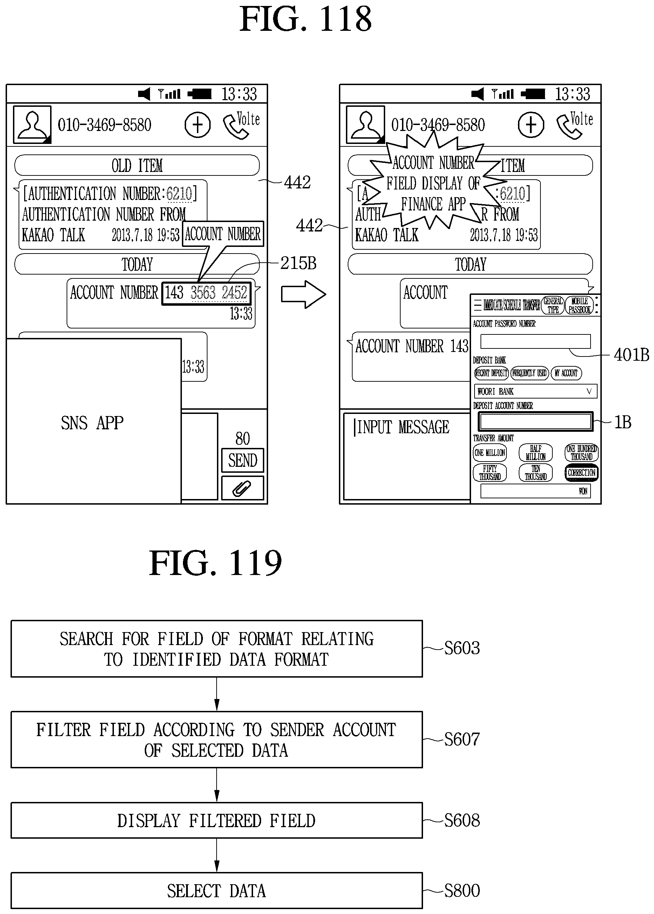

FIGs. 117 and 118 are screens illustrating an operation of filtering a field depending on the type of a data app.

Referring to FIG. 117, when a first account number ("356-0697-4333-73") 215A included in the screen of an internet app 443 is inputted, the controller 180 may control the touch screen 151 to display a thumbnail 401A of an SNS app including a first field (a message field of an SNS app) 1A relating to the inputted first account number 215A and a thumbnail 401B of a finance app including a second field (an account number field of a finance app) 1B.

Unlike this, referring to FIG. 118, when a second account number ("143-3563-2452") 215B included in the screen of an SNS app 442 is inputted, the controller 180 may control the touch screen 151 to display a thumbnail 401B of a finance app including the second field 1B among the first field 1A and the second field 1B relating to the inputted second account number 215B and not to display the first field 1A.

FIG. 119 is a flowchart illustrating a method of filtering a field depending on a sender account of data.

Referring to FIG. 119, when a field of a format relating to the format of identified data is found in operation S603, the controller 180 filters the data according to the message sender account of the inputted data in operation S607.

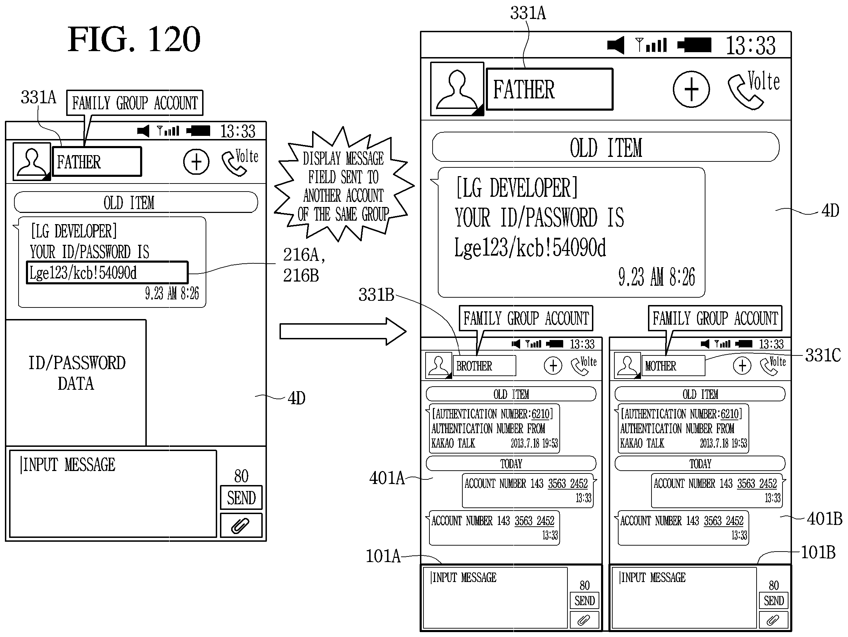

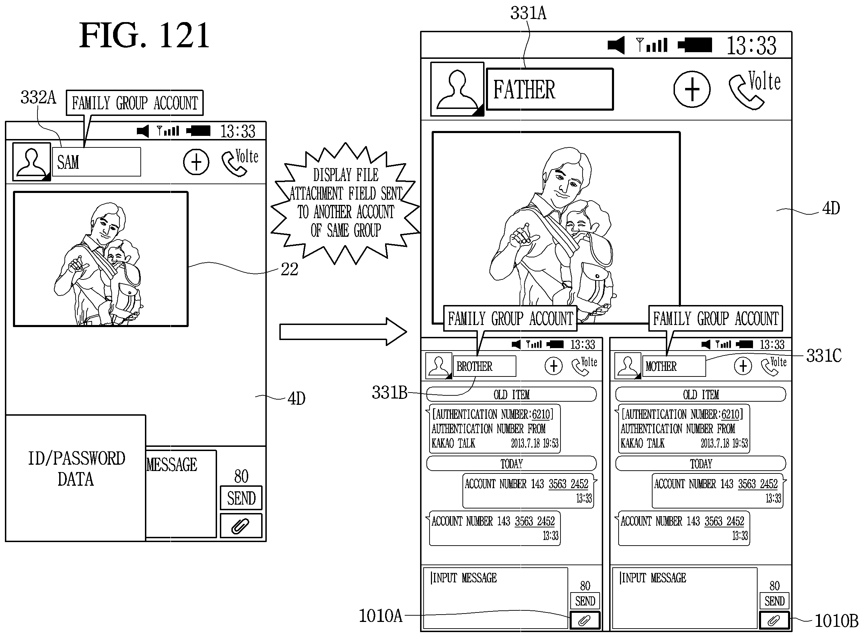

FIGs. 120 and 121 are screens illustrating an operation of filtering a field depending on a sender account of data.

Referring to FIG. 120, when an ID ("Lge123") 216A and a password ("kcb!54090d") 216B are transmitted from a first family group account ("father") and the transmitted ID 216A and password 216B are inputted, the controller 180 may control the touch screen 151 to display message fields 101A and 101B, which are to be transmitted to a second family group account ("brother") and a third family group account ("mother") that are other accounts in the same group of the first family group account ("father") transmitting the inputted ID 216A and password 216B, and first and second app thumbnails 401A and 401B including each message field.

Referring to FIG. 121, when a content (image) 22 is transmitted from a first friend group account ("SAM") and the transmitted content 22 is inputted, the controller 180 may control the touch screen 151 to display message fields 1010A and 1010B which are to be transmitted to a second friend group account ("TOM") and a third friend group account ("JACK") that are other accounts in the same group of the first friend group account ("SAM") transmitting the inputted content 22.

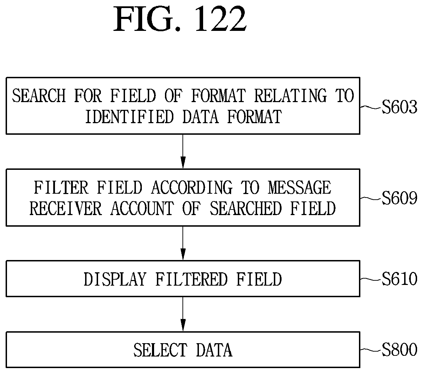

FIG. 122 is a flowchart illustrating a method of filtering a field depending on a receiver account of a field.

Referring to FIG. 122, when a field of a format relating to the format of identified data is found in operation S603, the controller 180 filters the field according to the receiver account of the found field in operation S609.

As one example of filtering data according to the sender account of searched data, in relation to a first field of a message transmitted to a first group account and a second field of a message transmitted to a second group account, even when the first field and second field relating to data are all found, the controller 180 may control the touch screen 151 not to display the second field transmitted to the second group account and display the first field transmitted to a first group account that is an account in the same group (first group) of the first group account.

Once the found field is filtered, the controller 180 controls the touch screen 151 to display the filtered field in operation S610.

When the filtered field is displayed, the controller 180 may input a selection of a specific field from displayed fields in operation S800.

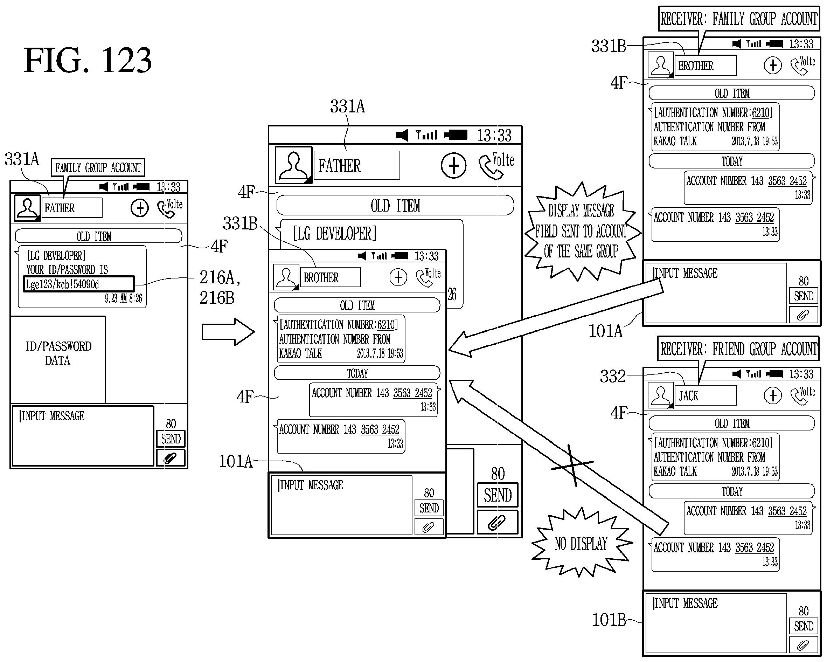

FIG. 123 is a screen illustrating an operation of filtering a field depending on a receiver account of a field.

Referring to FIG. 123, when an ID 216A and a password 216B transmitted from a first family group account ("father") are inputted, the controller 180 may control the touch screen 151 to display a message field 101A, which is to be transmitted to a second family group account ("brother") that is in the same group of the first family group account transmitting the inputted data 216A and 216B and not to display a second message field 101B to be transmitted to a friend group account ("JACK") that is different from a first family group account.

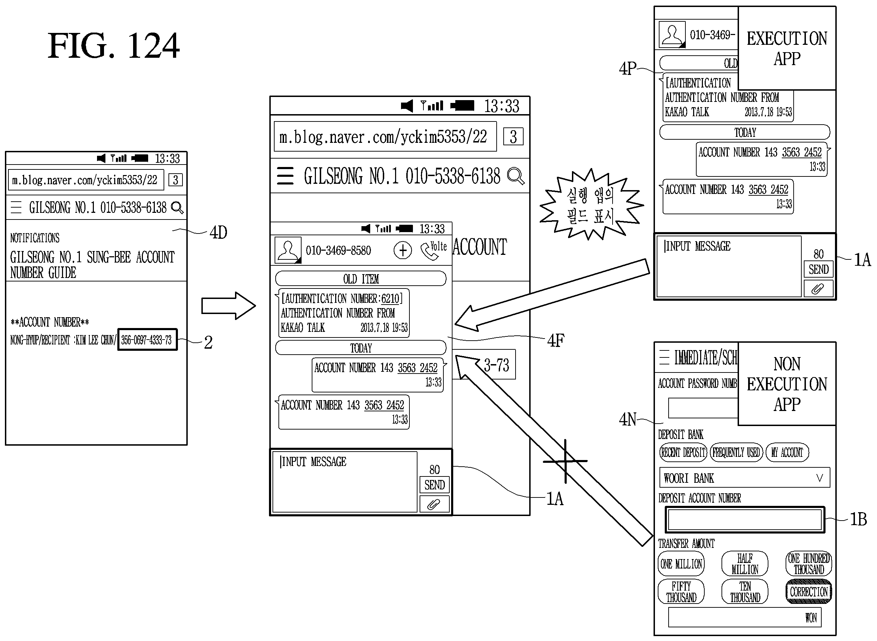

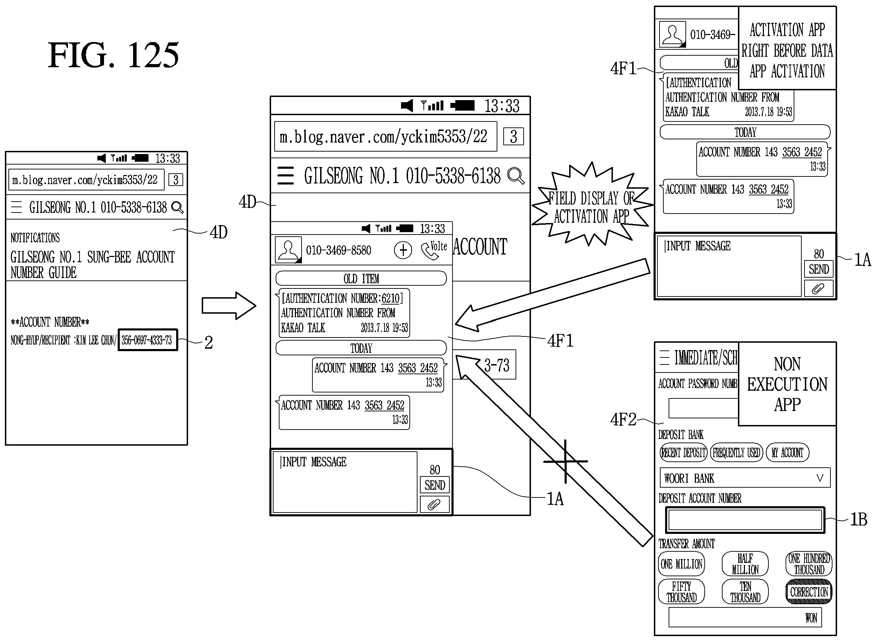

FIGs. 124 and 125 are screens illustrating an operation of filtering a field depending on an execution state of a field app.

Referring to FIG. 124, when a selection to data ("356-0697-4333-73") 2 in a data app 4D is obtained and the format (an account number format) of the inputted data 2 is identified, the controller 180 may search for a field (account number field) of a format relating to the format (an account number format) of the identified field 2 from the memory 170.

As shown in FIG. 124, as an example of a field (account number field) of a format relating to the format (account number format) of the data 2, a first field 1A included in an execution app 4P, that is, a data app that is executed already and a second field 1B included in a non-execution app 4N, that is, a data app that is not executed yet, may be found.

Referring to FIG. 124, the controller 180 may filter a field among the found first field 1A and second field 1B according to an execution state (whether execution is made) of an app where each of the fields 1A and 1B is found.

As shown in FIG. 124, the controller 180 may control the touch screen 151 to display the found first field 1A included in the execution app 4P among the first and second fields 1A and 1B.

On the other hand, as shown in FIG. 124, the controller 180 may not display the found second data 1B included in the non-execution app 4N among the first and second data 1A and 1B.

Referring to FIG. 125, when a selection to data ("356-0697-4333-73") 2 in a data app 4D is obtained and the format (an account number format) of the inputted data 2 is identified, the controller 180 may search for a field (account number field) of a format relating to the format (an account number format) of the identified field 2 from the memory 170.

As an example of a field (account number field) of a format relating to the format (account number format) of the data 2, a first field 1A included in a first app 4F1 that is activated before the data app 4D is activated and a second field 1B included in a second app 4F2 that is an inactivated non-activation app may be found.

The controller 180 may filter a field among the found first field 1A and second field 1B according to an activation state (whether a screen is activated) of an app where each of the fields 1A and 1B is found.

The controller 180 may control the touch screen 151 to display the found first field 1A included in the activated first app 4F1 among the first and second fields 1A and 1B.

On the other hand, the controller 180 may not display the found second data 1B included in the inactivated second app 4F2 among the first and second fields 1A and 1B.

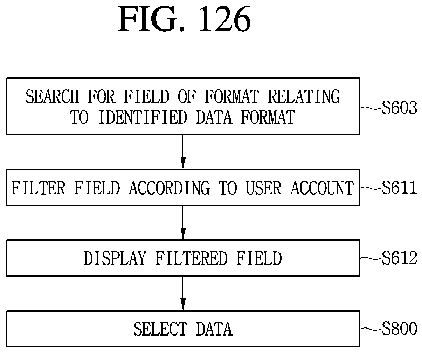

FIG. 126 is a flowchart illustrating a method of filtering a field depending on a user account.

Referring to FIG. 126, when a field of a format relating to the format of an identified field is found in operation S603, the controller 180 filters a field according to a logged-in user account in operation S611.

In more detail, the controller 180 may identify a logged-in user account, display some fields corresponding to an identified user account among found fields, or not display the remaining fields.

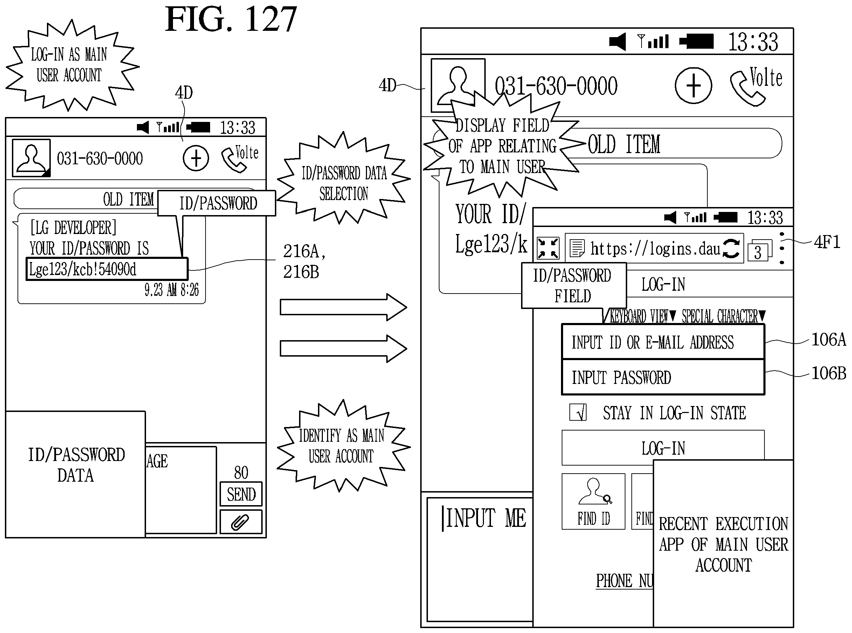

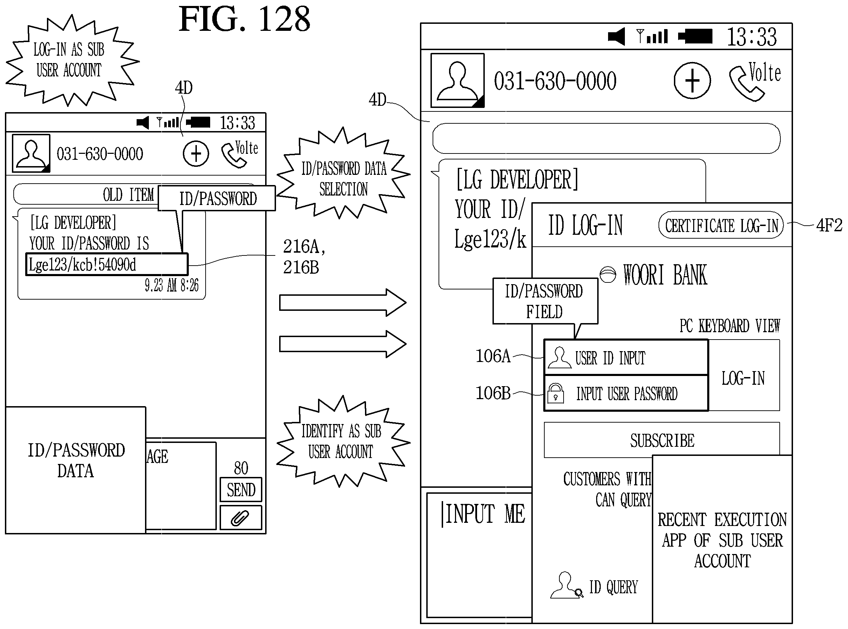

FIGs. 127 and 128 are screens illustrating an operation of filtering a field depending on a user account.

Referring to FIG. 127, when an ID 216A and a password 216B in a data app 4D are inputted as a user logs in as "main user account", the controller 180 may identify the formats of the ID 216A and the password 216B.

When the format (ID) of the ID 216A and the format (password) of the password 216B are identified, the controller 180 may search for at least one ID field and password field respectively relating to the formats of the ID 216A and the password 216B.

When at least one ID field and password field are found, the controller 180 may control the touch screen 151 to display a found ID 106A and password field 106B in an app thumbnail 4F1 including an ID and password field on the basis of the identified user account (main user account).

On the other hand, referring to FIG. 128, as a user is logged-in as "sub user account", when the ID 216A and the password 216B of a format relating to the formats of the ID 106A and the password 106B are found, the controller 180 may control the touch screen 151 not to display the password field 106B among the found ID field 106A and password field 106B and display an app thumbnail 4F2 including the ID field 106A on the basis of the identified user account (sub user account).

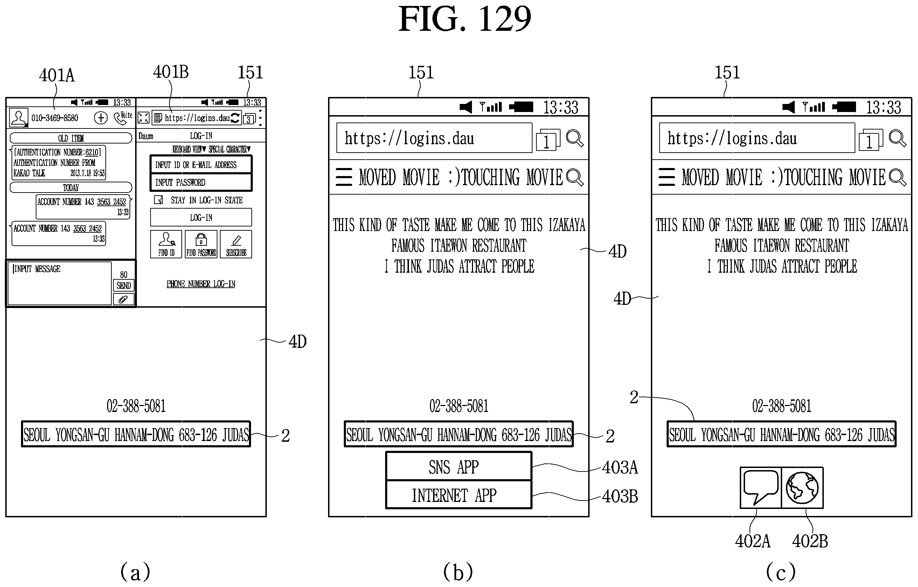

FIG. 129 is a screen of displaying a found field.

Referring to FIG. 129, once data (address) 2 in the screen of a data app 4D is inputted, the controller 180 may control the touch screen 151 to display a first and second field relating to the inputted data 2.

Referring to FIG. 129, the controller 180 may control the touch screen 151 to display each field relating to the data 2 or identification information of each field.

In more detail the controller 180 may control the touch screen 151 to display a first field app thumbnail 401A corresponding to the first field and a second field app thumbnail 401B corresponding to the second field.

Additionally, as shown in FIG. 129b, the controller 180 may control the touch screen 151 to display a first field app name 403A corresponding to the first field and a second field app name 403B corresponding to the second field relating to the data 2.

As shown in FIG. 129b, the controller 180 may control the touch screen 151 to display a first field icon 402A and second field app icon 402B relating to the data 2.

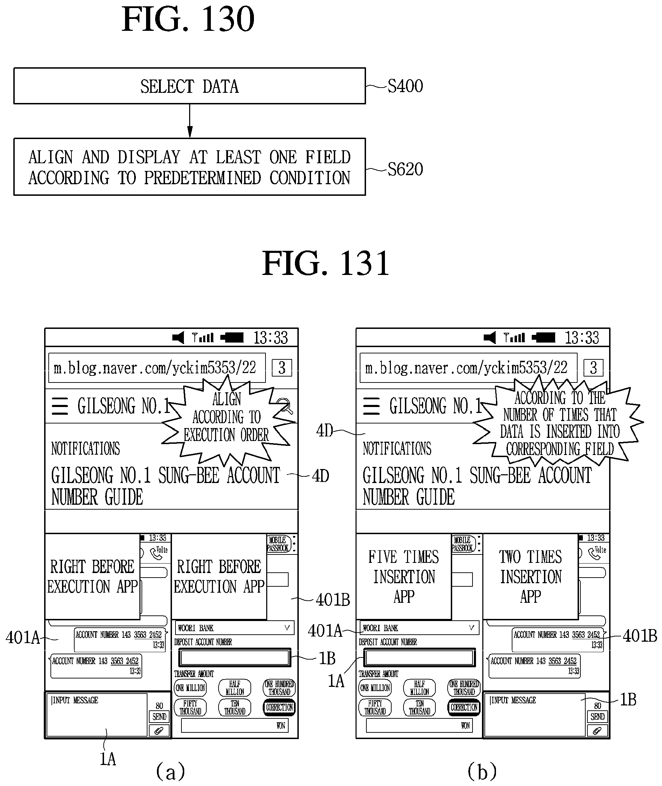

FIG. 130 is a flowchart illustrating a method of aligning and displaying fields.

Referring to FIG. 130, once data is inputted in operation S400, the controller 180 controls the touch screen 151 to arrange and display at least one field relating to the inputted data according to a predetermined condition in operation S620.

FIG. 131 is a screen of aligning and displaying fields.

Referring to FIG. 131a, the controller 180 may control the touch screen 151 to align and display a first field 1A and a second field 1B according to an execution order of an app including a corresponding field among the first field 1A and second field 1B relating to the inputted data.

In more detail, the controller 180 may control the touch screen 151 to display an app thumbnail 401A of the first field 1A included in an app executed right before the execution of a data app 4D at the first from the leftmost and display an app thumbnail 401B of the second field 1B at the second from the leftmost.

Referring to FIG. 131b, the controller 180 may control the touch screen 151 to align and display the first field 1A and the second field 1B according to the number of times (or the number of times that data is inputted) that data is inserted into a corresponding field among the first field 1A and second field 1BB relating to the inputted data.

In more detail, the controller 180 may control the touch screen 151 to display an app thumbnail 401A of the first field 1A where the number of times that previous data is inserted is five (more often) among the first field 1A and the second field 1B at the first from the leftmost and display an app thumbnail 401B of the second field 1B where the number of times that data is inserted is two (more less) at the second from the leftmost.

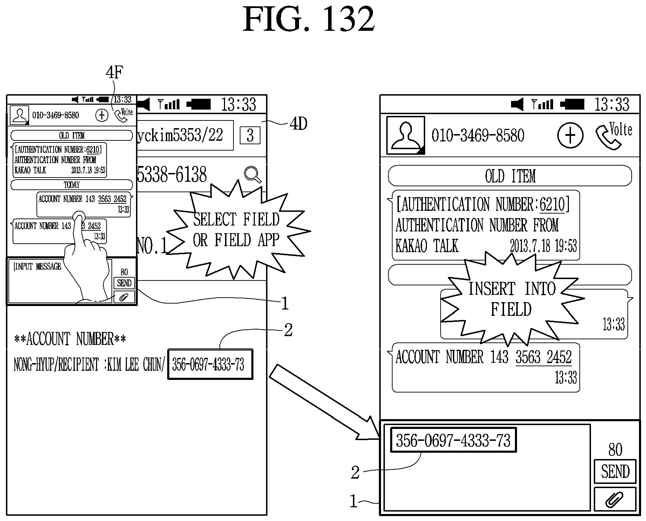

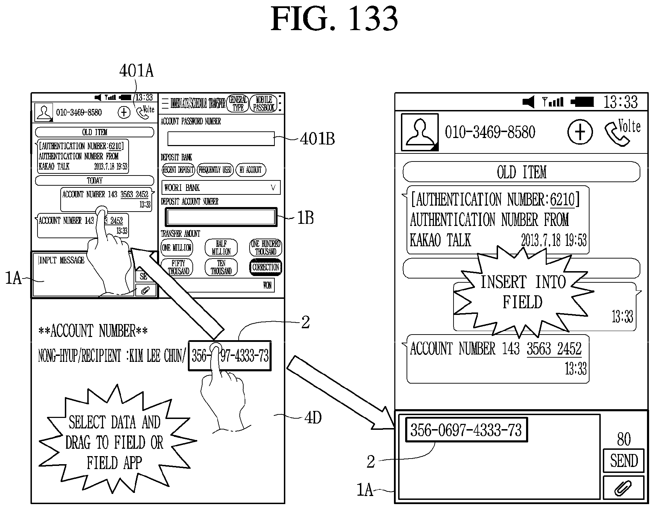

FIGs. 132 and 133 are screens illustrating an operation of selecting a field and inserting it into data.

Referring to FIG. 132, when a field (message field) 1 or an field app 4F relating to inputted data (account number) 2 is inputted, the controller 180 may control the touch screen 151 to insert the data 2 into the inputted field 1 or the field 1 corresponding to the field app 4F.

Referring to FIG. 133, when a drag input for moving the inputted data 2 to a field 1A or field app thumbnail 401A relating to the inputted data 2 is sensed by the touch screen 151, the controller 180 may control the touch screen 151 to insert the moved data 2 into the field 1A where the data 2 is moved or the field 1A corresponding to the field app thumbnail 401A according to the drag input.

According to at least one of embodiments of the present invention, a user may input necessary data into a field only with a simple manipulation.

Additionally, according to at least another of embodiments of the present invention, a user may see a field and data necessary for the data at a glance.

The invention can also be embodied as computer readable codes on a computer readable recording medium. The computer readable recording medium is any data storage device that can store data which can be thereafter read by a computer system. Examples of the computer readable recording medium include magnetic storage media (e.g., ROM, floppy disks, hard disks, etc.) and optical recording media (e.g., CD-ROMs, or DVDs) and carrier waves (e.g., transmission through the Internet). Additionally, the computer may include the controller 180 of a terminal. Accordingly, the detailed description is not construed as being limited in all aspects and should be considered as illustrative. The scope of the invention should be determined by reasonable interpretation of the appended claims.

## Claims

1. A mobile terminal comprising:
a touch screen (151);
a memory (170); and
a controller (180) in communication with the touch screen (151) and the memory (170), the controller (180) configured to:
execute an application and control the touch screen (151) to display an application screen including at least one field (1);
process an input corresponding to a selection of a field from the at least one field (1), wherein the selected field has a format;
search, in the memory (170), for data having the same format as the format of the selected field;
filter the searched data according to a predetermined condition;
display the filtered data (2) relating to the selected field; and
process an input corresponding to a selection of a data item from the displayed data (2) and insert the selected data item into the selected field,
wherein the predetermined condition comprises an execution state of an application where the searched data is found, wherein the execution state of an application corresponds to whether the application is executed or not.

2. The mobile terminal of claim 1, wherein the controller (180) is further configured to store data in the memory (170) and extract stored data from the memory (170).

3. The mobile terminal of claim 2, wherein the controller (180) is further configured to extract data stored in the memory (170) by searching for data having the same format as the format of the selected field.

4. The mobile terminal of claim 1, wherein the controller (180) is further configured to control the touch screen (151) to visually distinguish the selected field.

5. The mobile terminal of claim 1, wherein the input corresponding to the selection of a field involves a touch input on a portion of the touch screen (151) corresponding to the selected field, wherein the touch screen (151) is configured to sense the touch input, and wherein the controller (180) is further configured to process the touch input as a selection of the field.

6. The mobile terminal of claim 5, wherein the touch input involves dragging the touch input across a portion of the touch screen (151) corresponding to the selected field.

7. The mobile terminal of claim 5, wherein the controller (180) is further configured to control the touch screen (151) to display a data extraction button (13), and wherein the touch input involves dragging the data extraction button (13) from a portion of the touch screen (151) that does not correspond to the selected field over to a portion of the touch screen (151) that does correspond to the selected field.

8. The mobile terminal of claim 1, wherein the controller (181) is further configured to control the touch screen (151) to display a data insertion button (12) on a portion of the touch screen (151) corresponding to the selected field, and wherein a touch input involves dragging the data insertion button (12) across the touch screen (151) corresponding to at least a portion of the selected field.

9. The mobile terminal of claim 1, wherein the controller (180) is further configured to display the data in the form of identification information corresponding to the data.

10. The mobile terminal of claim 9, wherein the identification information comprises at least one of a thumbnail (401A, 401B) including the data, an icon (402A, 402B) of the application, and a name (403A, 403B) of the application, and
wherein the touch screen (151) is configured to sense a touch input selecting identification information and wherein the controller (180) is further configured to control the touch screen (151) to display the data corresponding to the selected identification information.

11. The mobile terminal of claim 9, wherein the controller (180) is further configured to control the touch screen (151) to align and display the data or the identification information based on a predetermined condition.

12. The mobile terminal of claim 9, wherein the controller (180) is further configured to process an input corresponding to a selection of identification information from the displayed identification information and to insert the selected identification information into the selected field.

## Patentansprüche

1. Mobiles Endgerät, umfassend:
einen Berührungsbildschirm (151);
einen Speicher (170); und
einen Controller (180) in Kommunikation mit dem Berührungsbildschirm (151) und dem Speicher (170), wobei der Controller (180) konfiguriert ist zum:
Ausführen einer Anwendung und Steuern des Berührungsbildschirms (151), um einen Anwendungsbildschirm anzuzeigen, der mindestens ein Feld (1) aufweist;
Verarbeiten einer Eingabe, die einer Auswahl eines Feldes aus dem mindestens einen Feld (1) entspricht, wobei das ausgewählte Feld ein Format hat;
Suchen, in dem Speicher (170), nach Daten, die dasselbe Format wie das Format des ausgewählten Feldes haben;
Filtern der gesuchten Daten gemäß einer vorbestimmten Bedingung;
Anzeigen der gefilterten Daten (2), die sich auf das ausgewählte Feld beziehen; und
Verarbeiten einer Eingabe, die einer Auswahl eines Datenelements aus den angezeigten Daten (2) entspricht, und Einfügen des ausgewählten Datenelements in das ausgewählte Feld,
wobei die vorbestimmte Bedingung einen Ausführungszustand einer Anwendung umfasst, in dem die gesuchten Daten gefunden werden, wobei der Ausführungszustand einer Anwendung ob die Anwendung ausgeführt wird oder nicht entspricht.

2. Mobiles Endgerät nach Anspruch 1, wobei der Controller (180) ferner dazu konfiguriert ist, Daten in dem Speicher (170) zu speichern und gespeicherte Daten aus dem Speicher (170) zu extrahieren.

3. Mobiles Endgerät nach Anspruch 2, wobei der Controller (180) ferner dazu konfiguriert ist, in dem Speicher (170) gespeicherte Daten durch Suchen nach Daten mit demselben Format wie dem Format des ausgewählten Felds zu extrahieren.

4. Mobiles Endgerät nach Anspruch 1, wobei der Controller (180) ferner dazu konfiguriert ist, den Berührungsbildschirm (151) zu steuern, das ausgewählte Feld visuell zu unterscheiden.

5. Mobiles Endgerät nach Anspruch 1, wobei die Eingabe, die der Auswahl eines Feldes entspricht, eine Berührungseingabe auf einem Abschnitt des Berührungsbildschirms (151), der dem ausgewählten Feld entspricht, einbezieht, wobei der Berührungsbildschirm (151) dazu konfiguriert ist, die Berührungseingabe zu erfassen, und wobei der Controller (180) ferner dazu konfiguriert ist, die Berührungseingabe als eine Auswahl des Feldes zu verarbeiten.

6. Mobiles Endgerät nach Anspruch 5, wobei die Berührungseingabe ein Ziehen der Berührungseingabe über einen Abschnitt des Berührungsbildschirms (151), der dem ausgewählten Feld entspricht, einbezieht.

7. Mobiles Endgerät nach Anspruch 5, wobei der Controller (180) ferner dazu konfiguriert ist, den Berührungsbildschirm (151) so zu steuern, dass eine Datenextraktionsschaltfläche (13) angezeigt wird, und wobei die Berührungseingabe ein Ziehen der Datenextraktionsschaltfläche (13) von einem Abschnitt des Berührungsbildschirms (151), der nicht dem ausgewählten Feld entspricht, zu einem Abschnitt des Berührungsbildschirms (151), der dem ausgewählten Feld entspricht, einbezieht.

8. Mobiles Endgerät nach Anspruch 1, wobei der Controller (181) ferner dazu konfiguriert ist, den Berührungsbildschirm (151) zu steuern, eine Dateneinfügungsschaltfläche (12) auf einem Abschnitt des Berührungsbildschirms (151) anzuzeigen, die dem ausgewählten Feld entspricht, und wobei eine Berührungseingabe ein Ziehen der Dateneinfügungsschaltfläche (12) über den Berührungsbildschirm (151), der mindestens einem Abschnitt des ausgewählten Feldes entspricht, einbezieht.

9. Mobiles Endgerät nach Anspruch 1, wobei der Controller (180) ferner dazu konfiguriert ist, die Daten in Form von den Daten entsprechenden Identifikationsinformationen anzuzeigen.

10. Mobiles Endgerät nach Anspruch 9, wobei die Identifikationsinformationen mindestens eines von einem Miniaturbild (401A, 401B), das die Daten aufweist, einem Symbol (402A, 402B) der Anwendung, und einem Namen (403A, 403B) der Anwendung umfasst, und
wobei der Berührungsbildschirm (151) dazu konfiguriert ist, eine Berührungseingabe-Auswahlidentifikationsinformation zu erfassen, und wobei der Controller (180) ferner dazu konfiguriert ist, den Berührungsbildschirm (151) zu steuern, die Daten, die der ausgewählten Identifikationsinformation entsprechen, anzuzeigen.

11. Mobiles Endgerät nach Anspruch 9, wobei der Controller (180) ferner dazu konfiguriert ist, den Berührungsbildschirm (151) zu steuern, die Daten oder die Identifikationsinformationen basierend auf einer vorbestimmten Bedingung auszurichten und anzuzeigen.

12. Mobiles Endgerät nach Anspruch 9, wobei der Controller (180) ferner dazu konfiguriert ist, eine Eingabe, die einer Auswahl von Identifikationsinformationen aus den angezeigten Identifikationsinformationen entspricht, zu verarbeiten und die ausgewählten Identifikationsinformationen in das ausgewählte Feld einzufügen.

## Revendications

1. Terminal mobile comprenant :
un écran tactile (151) ;
une mémoire (170) ; et
un organe de commande (180) en communication avec l'écran tactile (151) et la mémoire (170), l'organe de commande (180) étant configuré pour :
l'exécution d'une application et la commande à l'écran tactile (151) d'afficher un écran d'application incluant au moins un champ (1) ;
le traitement d'une entrée correspondant à une sélection d'un champ parmi l'au moins un champ (1), dans lequel le champ sélectionné a un format ;
la recherche, dans la mémoire (170), de données ayant le même format que le format du champ sélectionné ;
le filtrage des données recherchées en fonction d'une condition prédéterminée ;
l'affichage des données filtrées (2) relatives au champ sélectionné ; et
le traitement d'une entrée correspondant à une sélection d'une donnée parmi les données affichées (2) et l'insertion de la donnée sélectionnée dans le champ sélectionné,
dans lequel la condition prédéterminée comprend un état d'exécution d'une application dans laquelle les données recherchées sont trouvées, dans lequel l'état d'exécution d'une application correspond à l'exécution ou à la non-exécution de l'application.

2. Terminal mobile selon la revendication 1, dans lequel l'organe de commande (180) est en outre configuré pour la mémorisation de données dans la mémoire (170) et l'extraction de données mémorisées de la mémoire (170).

3. Terminal mobile selon la revendication 2, dans lequel l'organe de commande (180) est en outre configuré pour l'extraction de données mémorisées dans la mémoire (170) par la recherche de données ayant le même format que le format du champ sélectionné.

4. Terminal mobile selon la revendication 1, dans lequel l'organe de commande (180) est en outre configuré pour la commande à l'écran tactile (151) de distinguer visuellement le champ sélectionné.

5. Terminal mobile selon la revendication 1, dans lequel l'entrée correspondant à la sélection d'un champ implique une entrée de toucher sur une portion de l'écran tactile (151) correspondant au champ sélectionné, dans lequel l'écran tactile (151) est configuré pour la détection de l'entrée de toucher, et dans lequel l'organe de commande (180) est en outre configuré pour le traitement de l'entrée de toucher en tant qu'une sélection du champ.

6. Terminal mobile selon la revendication 5, dans lequel l'entrée de toucher implique le glissement de l'entrée de toucher à travers une portion de l'écran tactile (151) correspondant au champ sélectionné.

7. Terminal mobile selon la revendication 5, dans lequel l'organe de commande (180) est en outre configuré pour la commande à l'écran tactile (151) d'afficher un bouton d'extraction de données (13), et dans lequel l'entrée de toucher implique le glissement du bouton d'extraction de données (13) depuis une portion de l'écran tactile (151) qui ne correspond pas au champ sélectionné jusqu'à une portion de l'écran tactile (151) qui correspond au champ sélectionné.

8. Terminal mobile selon la revendication 1, dans lequel l'organe de commande (181) est en outre configuré pour la commande à l'écran tactile (151) d'afficher un bouton d'insertion de données (12) sur une portion de l'écran tactile (151) correspondant au champ sélectionné, et dans lequel une entrée de toucher implique le glissement du bouton d'insertion de données (12) à travers l'écran tactile (151) correspondant à au moins une portion du champ sélectionné.

9. Terminal mobile selon la revendication 1, dans lequel l'organe de commande (180) est en outre configuré pour l'affichage des données sous la forme d'informations d'identification correspondant aux données.

10. Terminal mobile selon la revendication 9, dans lequel les informations d'identification comprennent au moins l'un d'une vignette (401A, 401B) incluant les données, d'une icône (402A, 402B) de l'application, et d'un nom (403A, 403B) de l'application, et
dans lequel l'écran tactile (151) est configuré pour la détection d'une entrée de toucher sélectionnant des informations d'identification et dans lequel l'organe de commande (180) est en outre configuré pour la commande à l'écran tactile (151) d'afficher les données correspondant aux informations d'identification sélectionnées.

11. Terminal mobile selon la revendication 9, dans lequel l'organe de commande (180) est en outre configuré pour la commande à l'écran tactile (151) d'aligner et d'afficher les données ou les informations d'identification sur la base d'une condition prédéterminée.

12. Terminal mobile selon la revendication 9, dans lequel l'organe de commande (180) est en outre configuré pour le traitement d'une entrée correspondant à une sélection d'informations d'identification parmi les informations d'identification affichées et l'insertion des informations d'identification sélectionnées dans le champ sélectionné.
